(19) Europäisches Patentamt
European Patent Office
Office européen des brevets

(11) EP 2 357 825 A1

(12) EUROPEAN PATENT APPLICATION
published in accordance with Art. 153(4) EPC

(43) Date of publication:
17.08.2011 Bulletin 2011/33

(51) Int Cl.:
*H04N 7/26* (2006.01)

(21) Application number: 09831614.4

(22) Date of filing: 27.10.2009

(86) International application number:
PCT/JP2009/005648

(87) International publication number:
WO 2010/067505 (17.06.2010 Gazette 2010/24)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 08.12.2008 JP 2008311911

(71) Applicant: Panasonic Corporation
Kadoma-shi
Osaka 571-8501 (JP)

(72) Inventors:
• YOSHIMATSU, Naoki
Osaka 540-6207 (JP)
• IWAHASHI, Daisuke
Osaka 540-6207 (JP)
• TANAKA, Takeshi
Osaka 540-6207 (JP)

(74) Representative: Kügele, Bernhard et al
Novagraaf International SA
Chemin de l'Echo 3
1213 Onex (CH)

(54) **IMAGE DECODING APPARATUS AND IMAGE DECODING METHOD**

(57) To provide a simply-structured image decoding apparatus which appropriately executes parallel decoding processing. The image decoding apparatus includes: a stream segmentation unit (130) which generates plural segment streams by segmenting each of the pictures included in a bit stream into plural MB lines, and assigning each of the plural MB lines to a corresponding one of the plural segment streams to be generated; and plural decoding engines (120) which decode the respective plural segment streams in parallel. In the case where at least two consecutive MB lines in the bit stream have a dependency indicated by a predetermined code word, the stream segmentation unit (130) sets the code word to the segment streams so as to update the dependencies to new dependencies depending on the contexts of MB lines in the respective segment streams.

FIG. 3

EP 2 357 825 A1

**Description**

[Technical Field]

The present invention relates to image decoding apparatuses and image decoding methods for decoding bit streams including coded image data, and in particular to image decoding apparatuses and image decoding methods for executing parallel decoding.

[Background Art]

An image coding apparatus which codes a moving picture segments each of the pictures that constitute a moving picture into macroblocks, and codes the moving picture in units of a macroblock. Furthermore, the image coding apparatus generates a bit stream representing the coded moving picture.

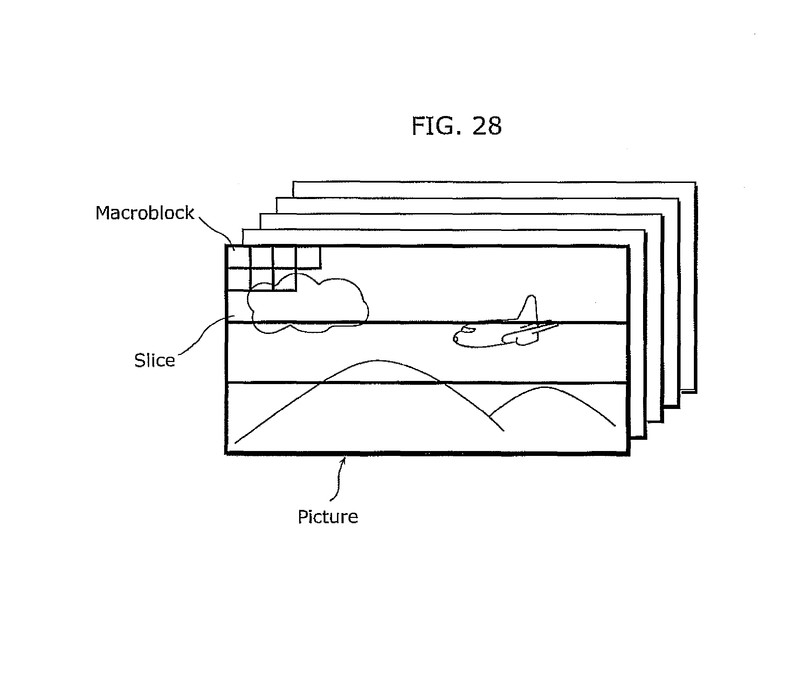

FIG. 28 is a diagram showing a structure of a picture to be coded.

Each of the pictures is segmented into macroblocks composed of 16 x 16 pixels, and coded. Here, each of the macroblocks in the picture is composed of slices, and the slices constitute the picture. A structural unit of a picture is referred to as a macroblock line (MB line) including macroblocks that are arranged in the picture from left end to right end in the horizontal direction.

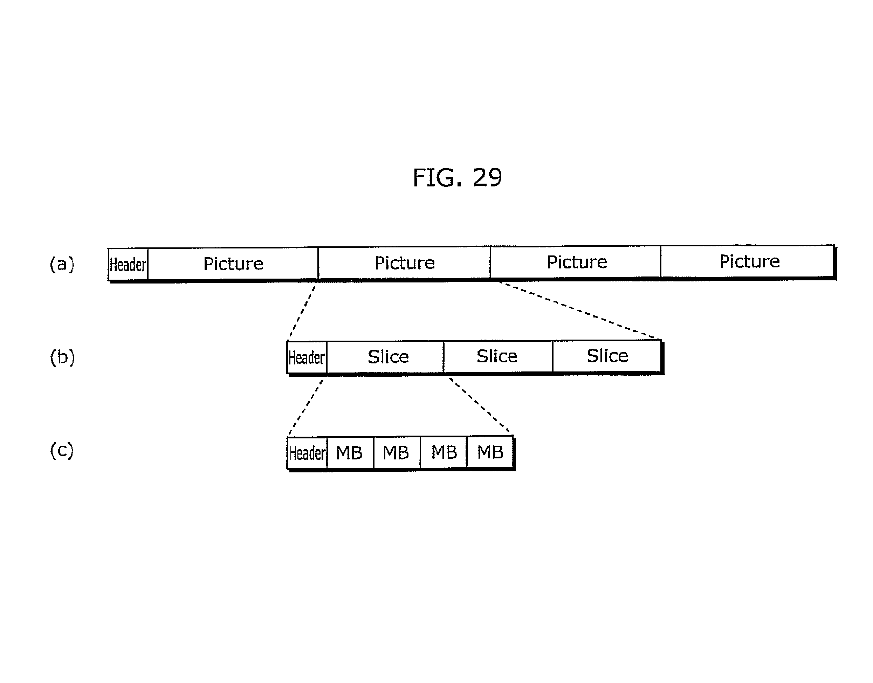

FIG. 29 is a diagram showing a structure of a bit stream.

The bit stream is hierarchical, and as shown in FIG. 29(a), is configured to include a header and pictures arranged in coding order. The header includes, for example, sequence parameter sets (SPSs) referred to for decoding a sequence including the pictures. As shown in FIG. 29(b), each of the coded pictures is configured to include a header and slices. Likewise, as shown in FIG. 29(c), each of the slices is configured to include a header and macroblocks (MBs). The header at the beginning of the picture in FIG. 29(b) includes, for example, picture parameter sets (PPSs) referred to for decoding the picture.

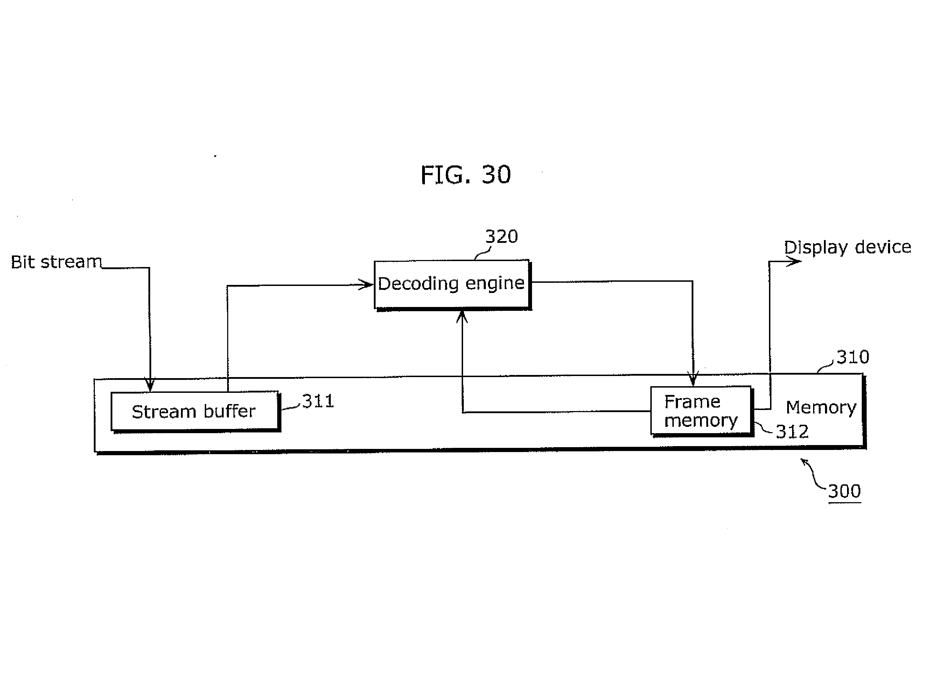

FIG. 30 is a diagram showing a structure of a conventional image decoding apparatus.

The image decoding apparatus 300 includes a memory 310 and a decoding engine 320. The memory 310 includes a stream buffer 311 having an area for storing a bit stream, and a frame memory 312 having an area for storing decoded image data outputted by the decoding engine 320. The image decoding apparatus 300 obtains coded image data such as macroblocks and pictures included in the bit stream sequentially from the beginning side, and stores the coded image data into the stream buffer 311.

The decoding engine 320 sequentially reads out the coded image data from the stream buffer 311 in decoding order, and stores the decoded image data generated by the decoding into the frame memory 312. The decoding engine 320 decodes the coded image data with reference to the decoded image data already stored in the frame memory 312.

Subsequently, the decoded image data stored in the frame memory 312 is outputted to a display device in display order so as to be displayed.

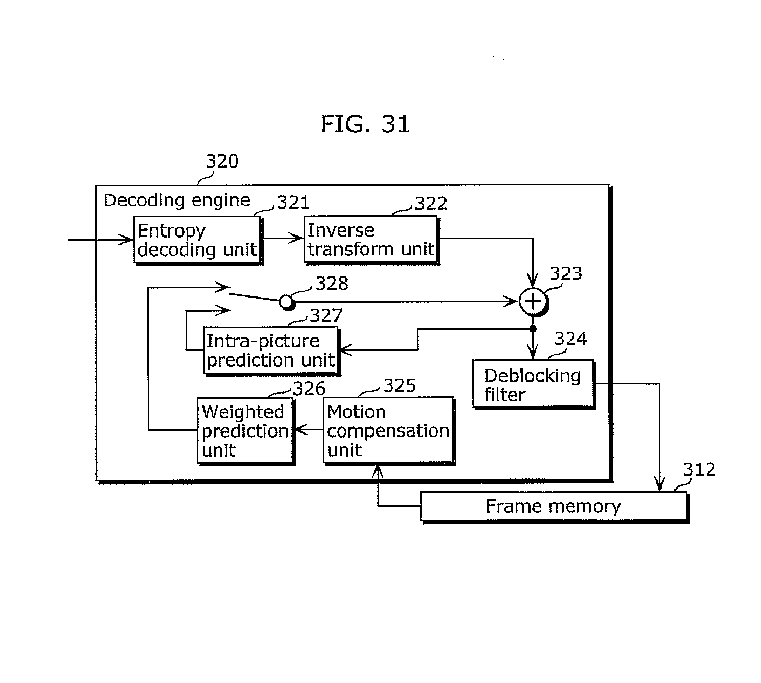

FIG. 31 is a diagram showing a structure of the decoding engine 320.

The decoding engine 320 includes, an entropy decoding unit 321, an inverse transform unit 322, an adder 323, a deblocking filter 324, a motion compensation unit 325, a weighted prediction unit 326, an intra-picture prediction unit 327, and a switch 328.

The entropy decoding unit 321 performs entropy decoding on coded image data to generate quantized data indicating quantized values, and outputs the quantized data to the inverse transform unit 322.

The inverse transform unit 322 performs inverse quantization and inverse orthogonal transform on the quantized data to transform it into difference image data.

The adder 323 generates decoded image data by adding the difference image data outputted from the inverse transform unit 322 and predicted image data outputted from either the weighted prediction unit 326 or the intra-picture prediction unit 327 via the switch 328.

The deblocking filter 324 removes coding distortion included in the decoded image data generated by the adder 323, and stores the decoded image data without the coding distortion into the frame memory 312.

The motion compensation unit 325 reads out the decoded image data stored in the frame memory 312 and performs motion compensation thereon to generate predicted image data, and outputs the predicted image data to the weighted prediction unit 326.

The weighted prediction unit 326 adds weights to the predicted image data outputted from the motion compensation unit 325, and outputs it to the switch 328.

The intra-picture prediction unit 327 performs intra-picture prediction. In other words, the intra-picture prediction unit 327 performs intra-picture prediction on the decoded image data generated by the adder 323 to generate the predicted image data, and outputs it to the switch 328.

In the case where the difference image data to be outputted from the inverse transform unit 322 has been generated by intra-picture prediction, the switch 328 outputs the predicted image data that is outputted from the intra-picture prediction unit 327 to the adder 323. In the other case where the difference image data that is outputted from the inverse transform unit 322 has been generated by inter-picture prediction, the switch 328 outputs the predicted image data that is outputted from the weighted prediction unit 326 to the adder 323.

Recent years have seen increases in definitions and frame rates of images. HD (High Definition) coding and decoding are performed on images at present, but coding and decoding using higher definitions and higher frame rates are to be performed on images. More specifically, moving pictures having a so-called 4k2k resolution are considered for practical use.

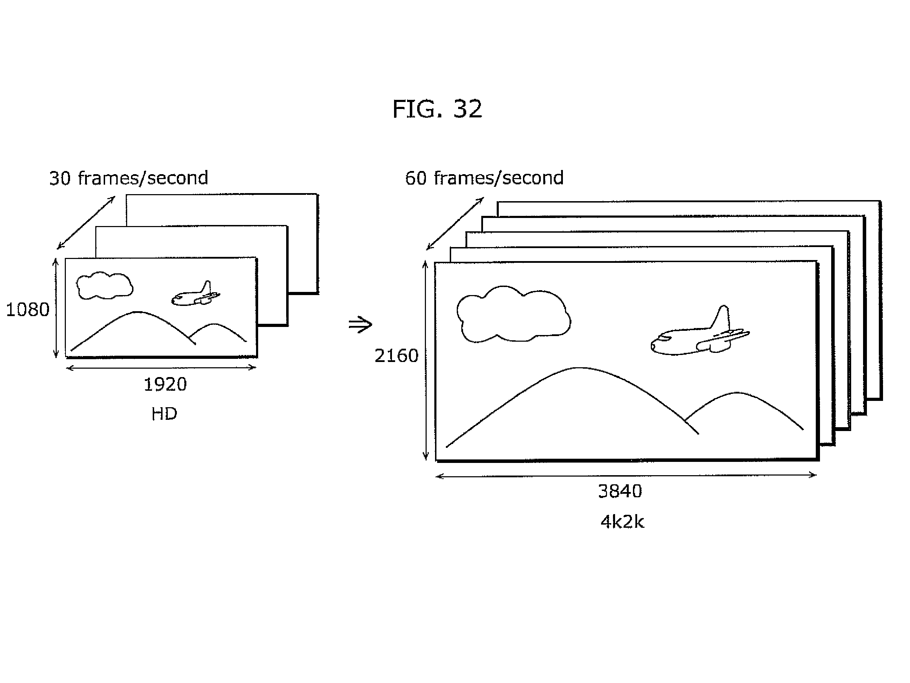

FIG. 32 is an illustration of HD and 4k2k.

HD bit streams are distributed via ground digital broadcasting, BS digital broadcasting, and the like, wherein pictures having a resolution of "1920 x 1080 pixels" are decoded and displayed at a frame rate of 30 frames per second. 4k2k bit streams are scheduled to be experimentally distributed via high BS digital broadcasting from 2011, wherein pictures having a resolution of "3840 x 2160 pixels" are decoded and displayed at a frame rate of 60 frames per second.

In short, a 4k2k bit stream has vertical and horizontal resolutions two times those of an HD bit stream, and has a frame rate two times that of the HD bit stream.

Furthermore, coding and decoding of 8k4k bit streams (7680 x 4320 pixels) having vertical and horizontal resolutions two times those of 4k2k bit streams are to be considered.

Increases in the resolutions and frame rates of images inevitably result in significant increases in the processing loads that are placed on decoding engines of image decoding apparatuses. For example, in the case of decoding a 4k2k bit stream, the decoding engine 320 of the image decoding apparatus 300 shown in FIG. 30 requires an operation frequency of 1 GHz or more that is practically difficult to achieve. This is why parallel decoding processing is considered.

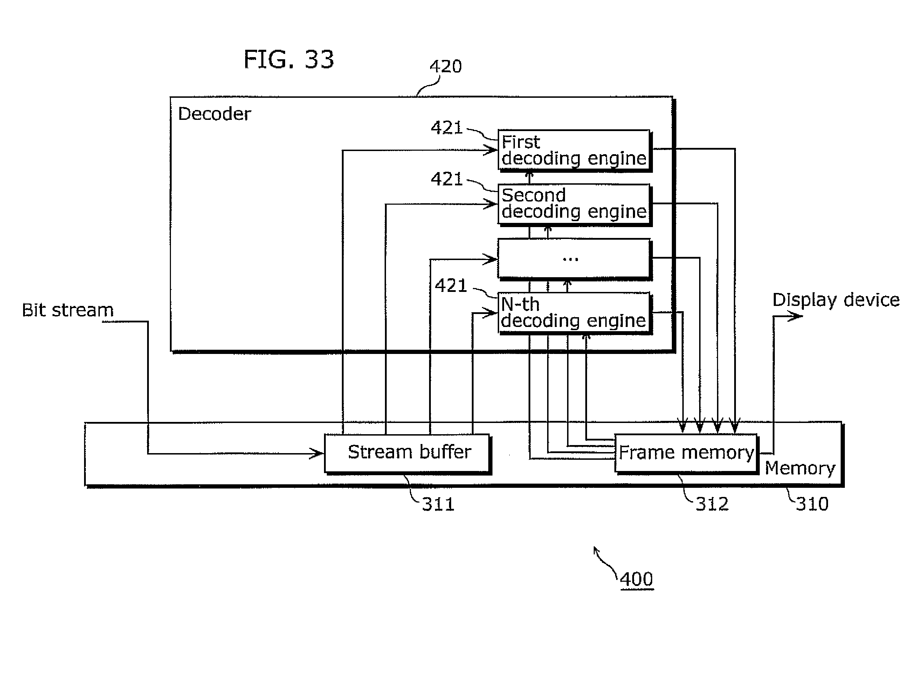

FIG. 33 is a block diagram showing a structure of an image decoding apparatus that executes parallel decoding processing.

An image decoding apparatus 400 includes a memory 310 and a decoder 420. The decoder 420 includes N decoding engines 421 (for example, N = 4) which function similarly to the decoding engine 320 shown in FIGS. 30 and 31. Each of the N decoding engines 421 (first decoding engine 421 to N-th decoding engine 421) extracts a portion to be processed by the decoding engine 421 itself from a bit stream stored in the stream buffer 311, decodes the extracted portion, and outputs it to the frame memory 312.

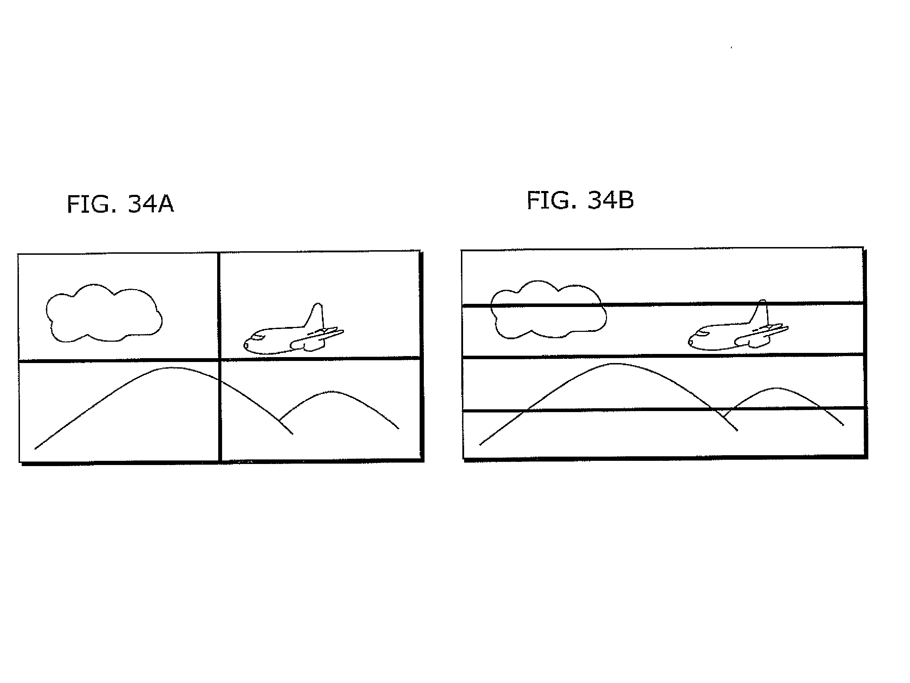

Each of FIGS. 34A and 34B is an illustration for an example of parallel decoding processing.

For example, the image decoding apparatus 400 obtains a bit stream including four segment streams, and stores it into the stream buffer 311. Each of the four segment streams is an independent stream, and as shown in FIG. 34A, indicates a moving picture in the segment among the four segments of a picture. Each of the four decoding engines 421 (for example, N = 4) of the image decoding apparatus 400 extracts the segment stream to be processed by the decoding engine 421 itself from the stream buffer 311, decodes it, and causes the moving picture to be displayed in the segment corresponding to the segment stream.

Otherwise, the image decoding apparatus 400 obtains a bit stream including pictures composed of four slices, and stores it into the stream buffer 311. The four slices are generated by horizontally dividing the picture into four segments as shown in FIG. 34B. Each of the four decoding engines 421 (for example, N = 4) of the image decoding apparatus 400 extracts the slices to be processed by the decoding engine 421 itself from the stream buffer 311, decodes them, and causes the moving picture to be displayed in the segments corresponding to the respective slices.

However, as shown in FIG. 34A, there is a need to restrict moving picture coding methods in order to generate a single bit stream as four segment streams and decode these streams. This necessitates modification in the whole system, requiring heavy loads.

Furthermore, as shown in FIG. 34B, there is a need to restrict moving picture coding methods in order to divide a picture into four segments, code and decode the respective segments.

More specifically, in the MPEG-2 (Moving Picture Experts Group phase 2) that is moving picture coding and decoding standards, slices are always divided at boundaries of MB lines. In addition, in H. 264/AVC, the sizes and positions of slices that are set for pictures are arbitrary, and only one slice may be set for a picture. Accordingly, as shown in FIG. 34B, uniquely setting the positions and sizes of slices necessitates modifying the whole systems according to, for example, operational standards for digital broadcasting systems, requiring heavy loads.

For this, image decoding apparatuses have been considered which decode, in parallel, bit streams each representing a moving picture coded conforming to the MPEG-2 or H. 264/AVC standards without restricting or modifying such operational standards.

For example, each of the image decoding apparatuses in Patent Literatures 1 and 2 segments each of the pictures in a bit stream generated conforming to MPEG-2 into slices, and performs parallel decoding processing on the respective slices.

The image decoding apparatus in Patent Literature 3 segments each of the pictures in a bit stream generated conforming to H. 264/AVC into MB lines, and performs parallel decoding processing on the respective MB lines.

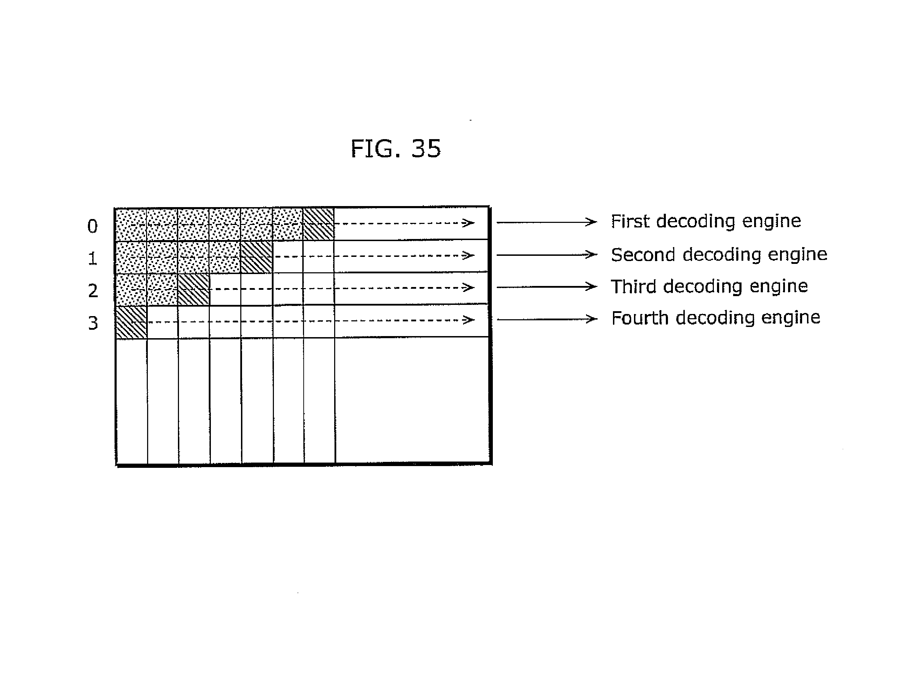

FIG. 35 is an illustration of decoding processing performed by the image decoding apparatus according to Patent Literature 3.

The first decoding engine of the image decoding apparatus decodes the 0th MB line in a picture, the second decoding engine decodes the first MB line in the picture, and the third decoding engine decodes the second MB line in the picture.

In addition, each of the decoding engines sequentially decodes the macroblocks from left end to right end of each MB lines. Here, in the decoding of the macroblocks, a current macroblock to be decoded has dependencies with the macroblocks located at the left, left above, above, and right above positions when seen from the current macroblock. In other words, in the decoding of the macroblocks, each of the decoding engines requires information obtained by decoding the macroblocks located at the left, left above, above, and right above positions when seen from the current macroblock. Accordingly, each of the decoding engines starts decoding the current macroblock after the decoding of these required macroblocks is completed. In the case where at least one of these macroblocks located at the left, left above, above, and right above positions of a current macroblock does not exist, decoding of the current macroblock is started after the decoding of the other macroblocks is completed. In other words, the image decoding apparatus executes parallel decoding on the macroblocks located two segments apart vertically and one segment apart horizontally.

The image decoding apparatus in Patent Literature 4 receives a bit stream generated conforming to H. 264/AVC, inserts a line header to each of the MB lines of the bit stream, and executes parallel decoding processing on the MB lines. Each of the decoding engines of the image decoding apparatus extracts the MB lines to be processed by the decoding engine itself based on the line headers, and decodes the respective MB lines.

[Citation List]

[Patent Literature]

[PTL 1] Japanese Unexamined Laid-open Patent Application Publication No. 6-225278
[PTL 2] Japanese Unexamined Laid-open Patent Application Publication No. 8-130745
[PTL 3] Japanese Unexamined Laid-open Patent Application Publication No. 2006-129284
[PTL 4] US Patent No. 7305036, Specification

[Summary of Invention]

[Technical Problem]

However, the image decoding apparatuses according to Patent Literatures 1 to 4 entail a problem of not being able to execute appropriate parallel decoding processing or a problem of requiring a complicated apparatus configuration.

In other words, since each of the image decoding apparatuses according to Patent Literatures 1 and 2 segments each of pictures into slices and executes parallel decoding on the respective slices, each of the image decoding apparatuses cannot execute appropriate parallel decoding processing on a bit stream such as an H. 264/AVC bit stream in which the sizes and positions of the slices are arbitrarily set. In other words, unequal loads are placed on the decoding engines provided to the image decoding apparatus, which disable the image decoding apparatus to effectively execute decoding utilizing parallel processing. For example, in the case where a picture is composed of a slice, the image decoding apparatus cannot segment the picture, and thus one of the decoding engines must decode the whole picture.

Furthermore, each of the image decoding apparatuses according to Patent Literatures 3 and 4 may segment a slice in an H. 264/AVC picture. In this case, each of the decoding engines must have a function for appropriately recognizing each of portions of the segmented slice as a slice, requiring that the image decoding apparatus has a complicated structure.

The present invention has been conceived in view of this, and thus has an object to provide image decoding apparatuses and image decoding methods for appropriately executing parallel decoding processing only requiring a simple configuration.

[Solution to Problem]

In order to achieve the above-described object, an image decoding apparatus according to an aspect of the present invention is intended to decode a bit stream including coded image data, and comprises: an obtainment unit configured to obtain the bit stream; a stream segmentation unit configured to generate N segment streams by segmenting each of coded pictures included in the bit stream obtained by the obtainment unit into structural units, and assigning, as a portion, each of the structural units to a corresponding one of the N segment streams to be generated, N being an integer equal to or greater than 2; and N decoding units configured to decode, in parallel, the respective N segment streams generated by the stream segmentation unit, wherein, when the stream segmentation unit segments a slice in one of the coded pictures into slice portions and assigns each of the slice portions to the corresponding one of the N segment streams in generating the N segment streams, the stream segmentation unit is configured to reconstruct a slice portion group as a new slice so that the slice portion group is recognized as the new slice by an associated one of the N decoding units, the slice portion group including at least one slice portion to be assigned to the corresponding one of the N segment streams, and when at least two consecutive slice portions among the slice portions in the bit stream have a dependency indicated by a predetermined code word included in the bit stream, the stream segmentation unit is configured to reconstruct the slice portion group as the new slice by setting a code word to at least one of the segment streams so that each of the at least two consecutive slice portions has a new dependency according to a context of slice portions including the slice portion in the corresponding one of the N segment streams.

In this way, the coded picture is segmented into the structural units such as plural macroblock lines, and each of the macroblock lines is assigned as a portion of the corresponding one of the segment streams to the associated one of the N decoding units. This allows the respective N decoding units to equally share the decoding processing, and execute appropriate parallel decoding processing. For example, even in the case of a coded picture conforming to H. 264/AVC which is composed of a slice, the coded picture is segmented into plural macroblock lines, and thus the load to decode the slice is equally shared by the N decoding units without being placed on one of the decoding units.

Here, when a coded picture is segmented into plural macroblock lines, a slice which crosses the boundary between plural MB lines may be segmented into plural slice portions, and the respective slice portions may be assigned to mutually different segment streams. In other words, each of the segment streams includes slice portion groups each of which is composed of at least one slice portion that is a chip of a slice, instead of including the whole slice in the coded picture.

For this, in the slice portion group like this, the contexts in units of a macroblock line changes from the contexts that are found before the segmentation of the coded picture. Accordingly, when plural consecutive macroblock lines have a dependency indicated by a predetermined code word, the dependency cannot be maintained, which disables the decoding units to decode the segment streams without any further processing.

To solve this problem, the present invention sets a code word to a segment stream, according to a new context of consecutive macroblock lines in each of such slice portion groups. This reconstructs the slice portion group as a new slice. Thus, the decoding unit which decodes the segment stream including this slice portion group can easily recognize the slice portion group as a new slice without requiring any special processing for recognizing the slice portion as the new slice. In short, the present invention eliminates the need to provide each of the N decoding units with a function or a structure for such special processing, thereby simplifying the structure of the whole image decoding apparatus.

Furthermore, it is preferable that the coded picture is coded in units of a block including a predetermined number of pixels, that the predetermined code word is a first code word indicating the number of consecutive blocks of a particular kind in a slice in the coded picture, and that, when the at least two consecutive slice portions have a dependency indicated by the first code word that is included in the bit stream and that indicates the number of consecutive blocks which cross a boundary between the at least two consecutive slice portions in the bit stream, the stream segmentation unit is configured to reconstruct the slice portion group as the new slice by setting, for each slice portion, a first code word modified to indicate the number of blocks in each slice portion to the at least two segment streams to which the at least two consecutive slice portions are assigned, respectively.

Even when a first code word is included in the bit stream, the first code word is modified to indicate an appropriate value in each segment stream in this way. Thus, the decoding unit which decodes the segment stream can appropriately decode the first code word without performing any special processing.

Furthermore, it is preferable that, when plural blocks to which plural first code words are set respectively are consecutive in at least one of the segment streams, the stream segmentation unit is further configured to reconstruct the slice portion group as the new slice by converting the plural first code words respectively indicating the numbers of blocks into a code word indicating a total sum of the numbers of blocks.

Even when a first code word is included in the bit stream, and when plural first code words are consecutive in the bit stream before the reconfiguration, each of the first code words are modified to indicate an appropriate value in a corresponding one of the segment streams in this way. Thus, the decoding unit which decodes the segment stream can appropriately decode the first code word without performing any special processing.

Furthermore, it is preferable that the coded picture is coded in units of a block including a predetermined number of pixels, that the predetermined code word is a second code word indicating a variation in parameters for coding of blocks in a slice in the coded picture, and that when the two slice portions have a dependency indicated by the second code word that is included in the bit stream and that indicates a variation in parameters for coding of blocks which cross a boundary between the two slice portions that are consecutive in the bit stream, the stream segmentation unit is configured to reconstruct the slice portion group as the new slice by calculating a variation in the parameters for coding based on a new context of blocks in the segment stream, and setting a code word based on the calculated variation to one of the two segment streams to which the two slice portions are assigned, respectively.

In this way, even when a second code word is included in the bit stream, a code word is set to each segment stream such that an appropriate value is calculated based on the second code word in the segment stream. Accordingly, the decoding unit which decodes the segment stream can appropriately restore parameters for coding based on the second code word without performing any special processing.

In addition, it is also good that the stream segmentation unit is configured to set, for the segment stream, a second code word modified based on the calculated variation.

In this way, even when a second code word is included in the bit stream, the code word is modified such that an appropriate value is calculated based on the second code word in each segment stream. Accordingly, the decoding unit which decodes the segment stream can appropriately restore parameters for coding based on the second code word without performing any special processing.

In addition, it is also good that the stream segmentation unit is configured to set, for the segment stream, a new code word indicating the calculated variation and the second code word.

In this way, even when a second code word is included in the bit stream, a new code word is inserted such that an appropriate value is calculated based on the second code word in each segment stream. Accordingly, the decoding unit which decodes the segment stream can appropriately restore parameters for coding based on the second code word without performing any special processing.

In addition, it is also good that the stream segmentation unit is configured to restore the parameters for coding for each block, using the second code word included in the bit stream, and calculate a variation in the parameters for coding based on a new context of blocks in each segment stream, using the restored parameters for coding.

In this way, it is possible to calculate a variation in parameters for coding based on a new context of blocks in each segment stream according to a simple method.

In addition, it is also good that the stream segmentation unit is configured to accumulate variations indicated by the second code words included in the respective segment streams other than a current one of the segment streams, and calculate, using the accumulated variations, a variation in parameters for coding based on a new context of blocks in the current segment stream.

Furthermore, it is preferable that the stream segmentation unit is configured to reset, to 0, an accumulated variation at a slice boundary when accumulating the variation indicated by the second code word.

This makes it possible to calculate a variation in parameters for coding based on a new context of blocks in each segment stream without restoring the parameters for coding of each block, and thereby simplifying the structure of the stream segmentation unit.

It is to be noted that the present invention can be implemented as not only as the image decoding apparatus, but also as a method and a program performed thereby, as a recording medium recording the program therein, and as a corresponding integrated circuit.

[Advantageous Effects of Invention]

The image decoding apparatus according to the present invention provides an advantageous effect of being able to allow a simply-structured apparatus to execute appropriate parallel decoding processing.

[Brief Description of Drawings]

[FIG. 1]

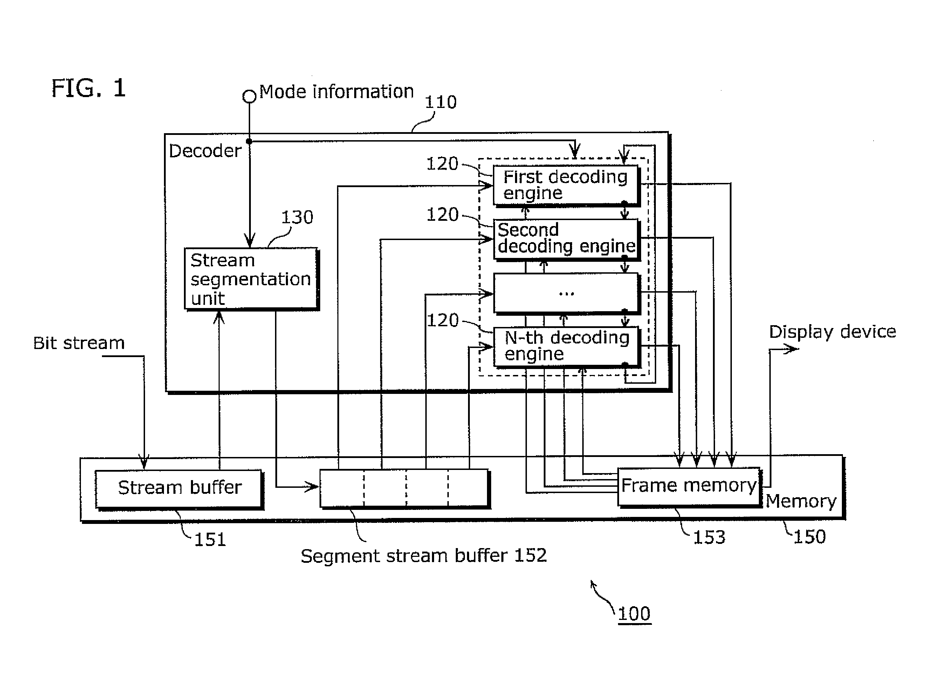

FIG. 1 is a block diagram showing a structure of an image decoding apparatus according to Embodiment 1 of the present invention.
[FIG. 2A]

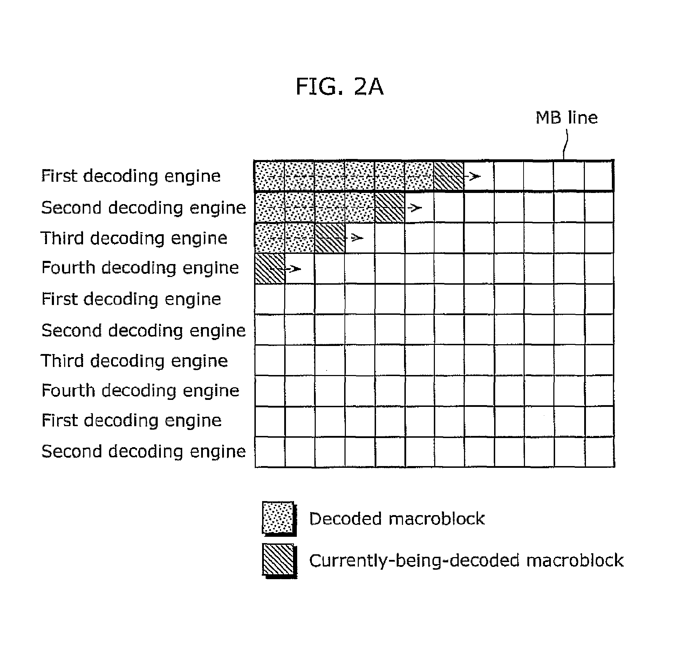

FIG. 2A is a diagram showing decoding orders of a picture that is not composed by MBAFF according to Embodiment 1 of the present invention.
[FIG. 2B]

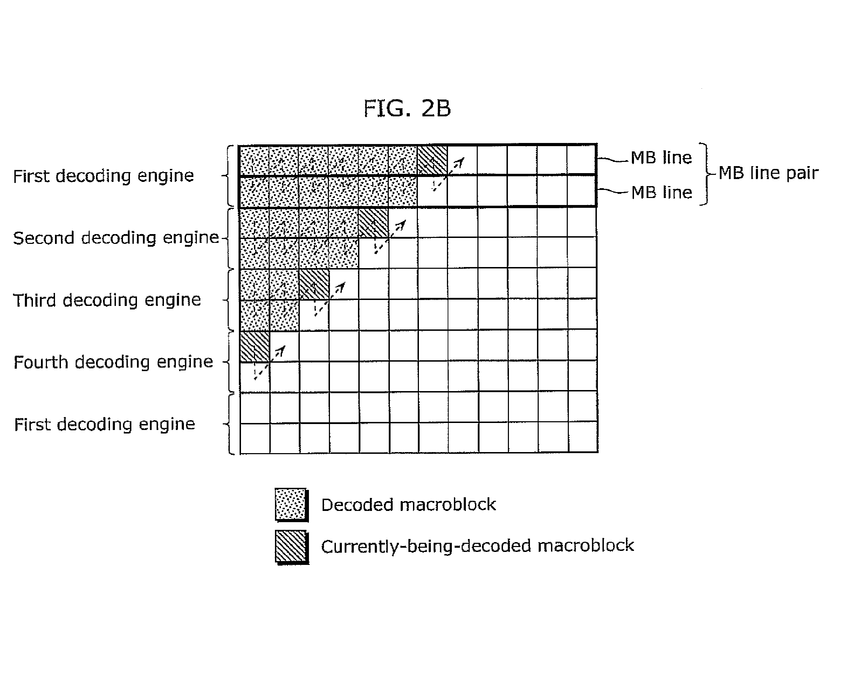

FIG. 2B is a diagram showing decoding orders of a picture that is composed by MBAFF according to Embodiment 1 of the present invention.
[FIG. 3]

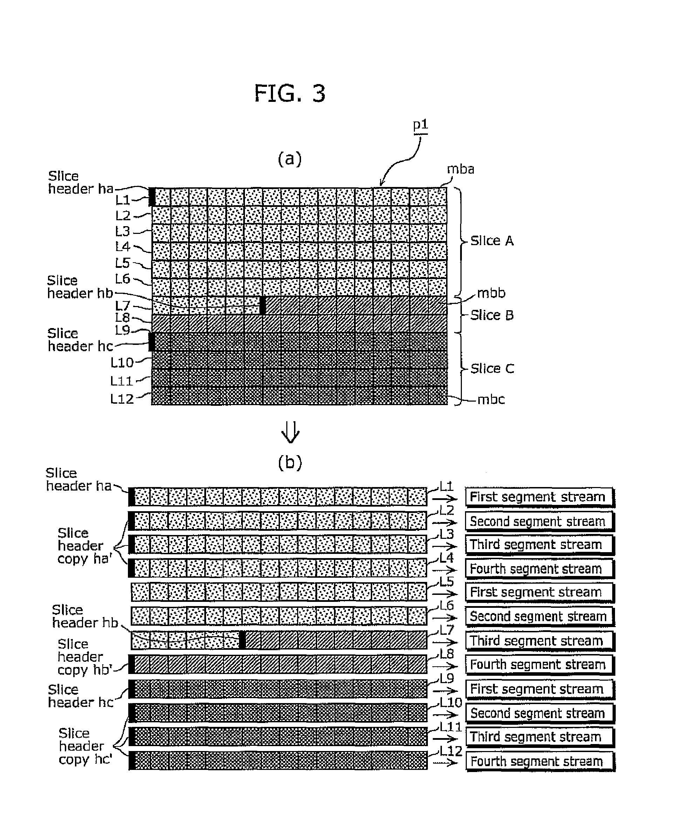

FIG. 3 is an illustration of processing of inserting slice headers in a picture according to Embodiment 1 of the present invention.
[FIG. 4]

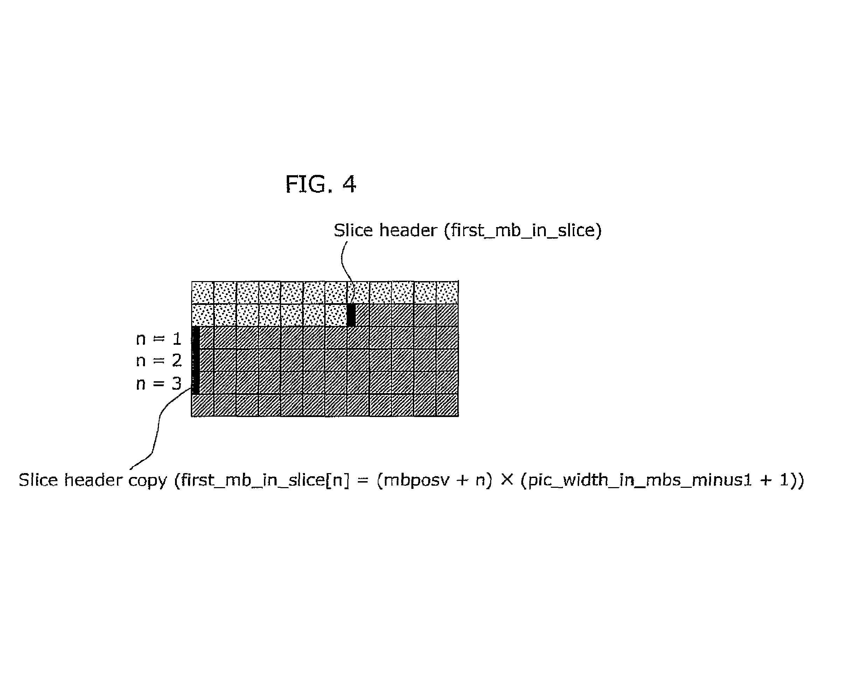

FIG. 4 is an illustration of processing of updating MB address information according to Embodiment 1 of the present invention.

[FIG. 5]

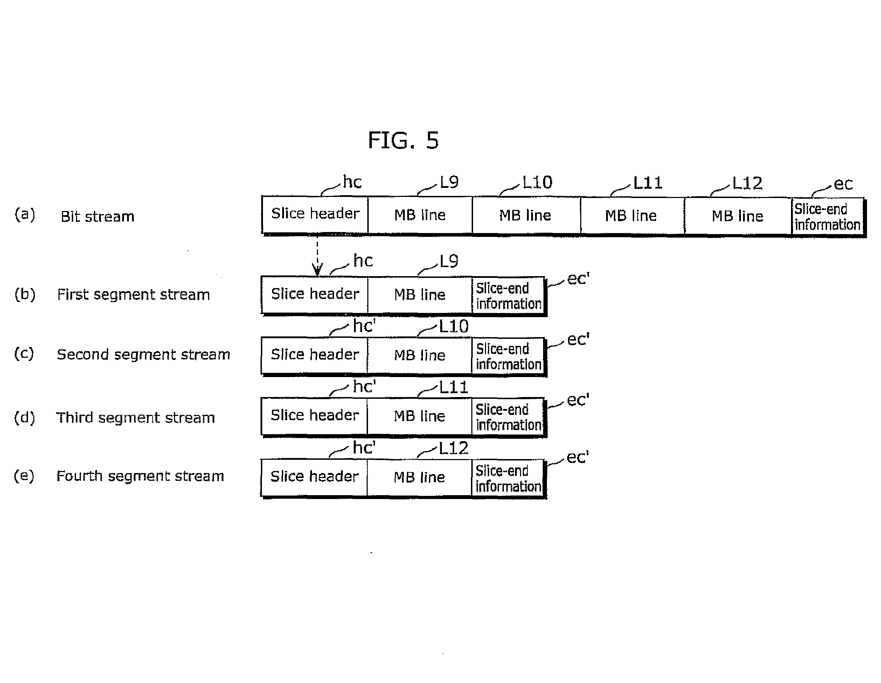

FIG. 5 is an illustration of processing of inserting slice headers in a picture according to Embodiment 1 of the present invention.

[FIG. 6]

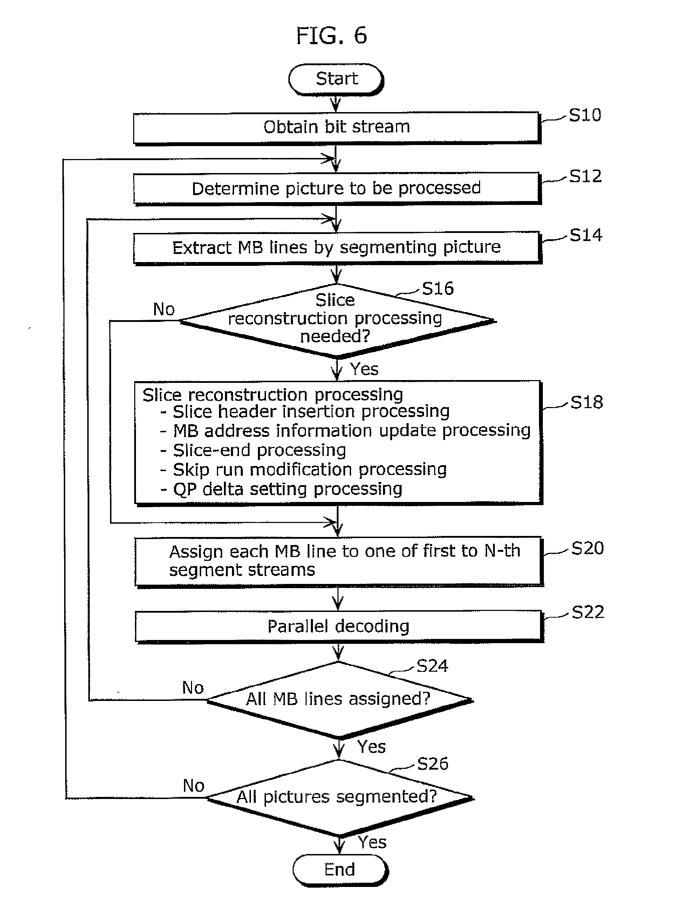

FIG. 6 is a flowchart indicating the overall operations performed by the image decoding apparatus according to Embodiment 1 of the present invention.

[FIG. 7]

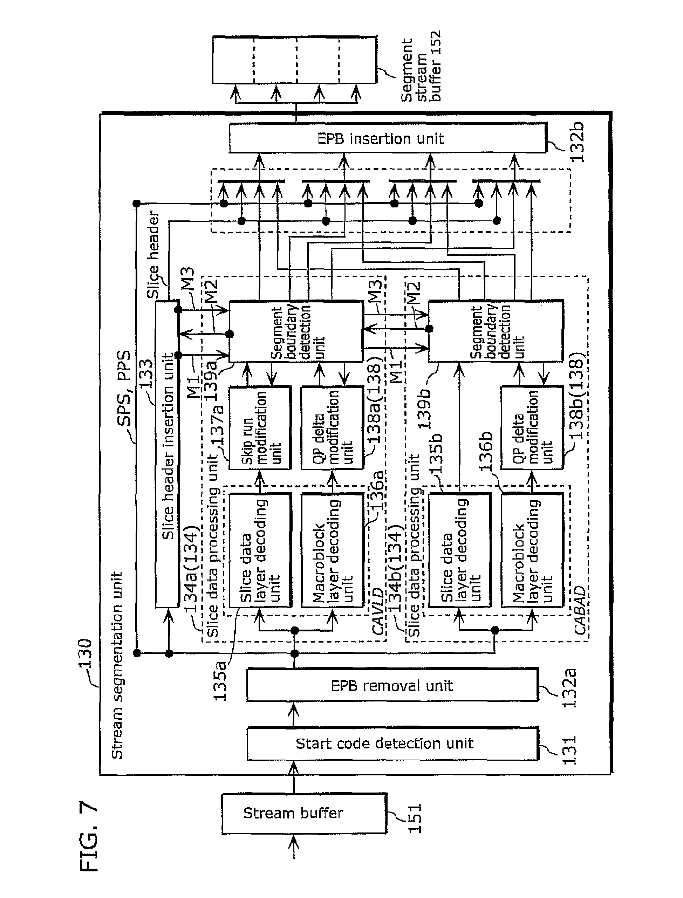

FIG. 7 is a block diagram showing a structure of a stream segmentation unit according to Embodiment 1 of the present invention.

[FIG. 8]

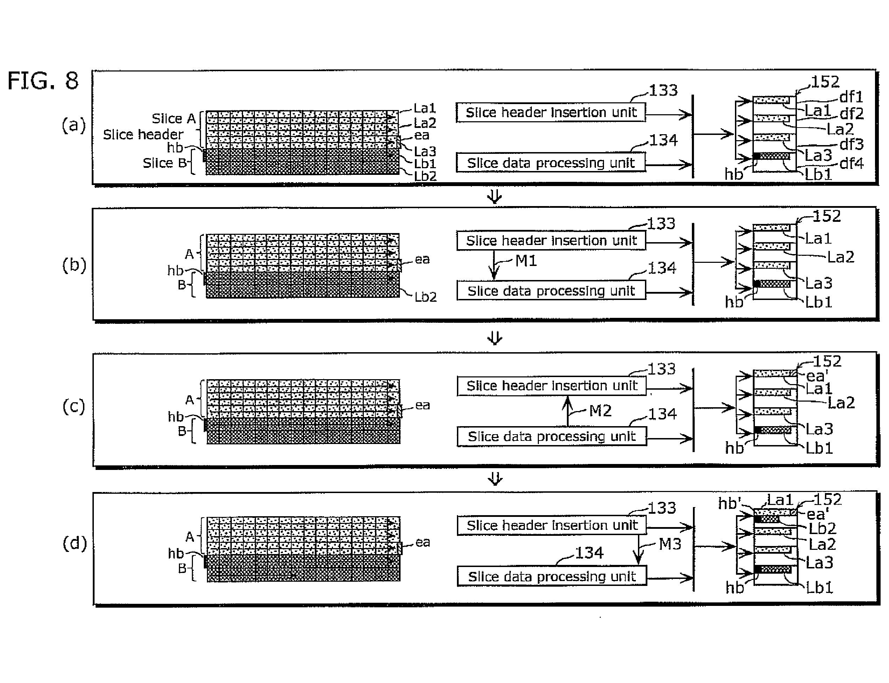

FIG. 8 is an illustration of operations performed by the slice header insertion unit and the slice data processing unit according to Embodiment 1 of the present invention.

[FIG. 9]

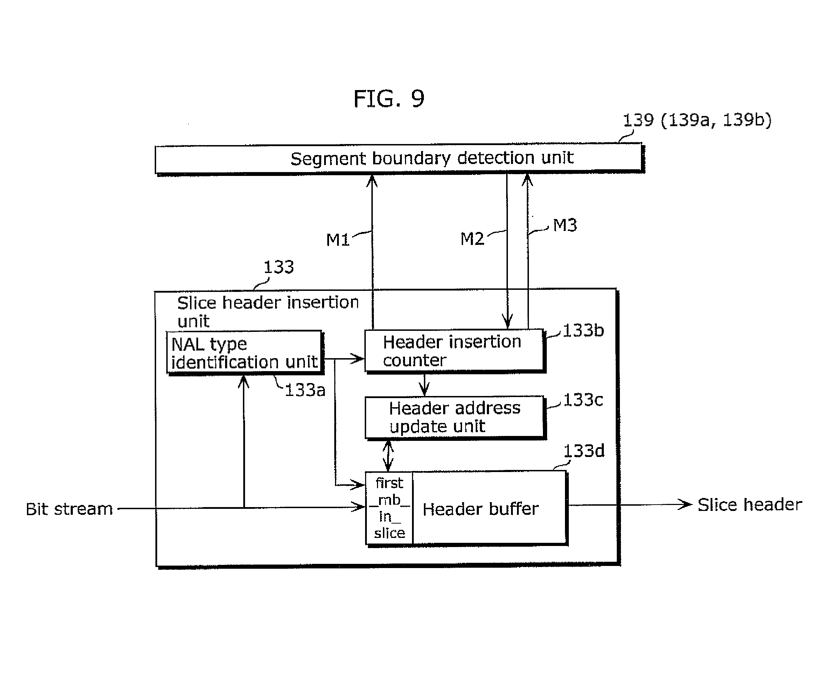

FIG. 9 is a block diagram showing a structure of a slice header insertion unit according to Embodiment 1 of the present invention.

[FIG. 10]

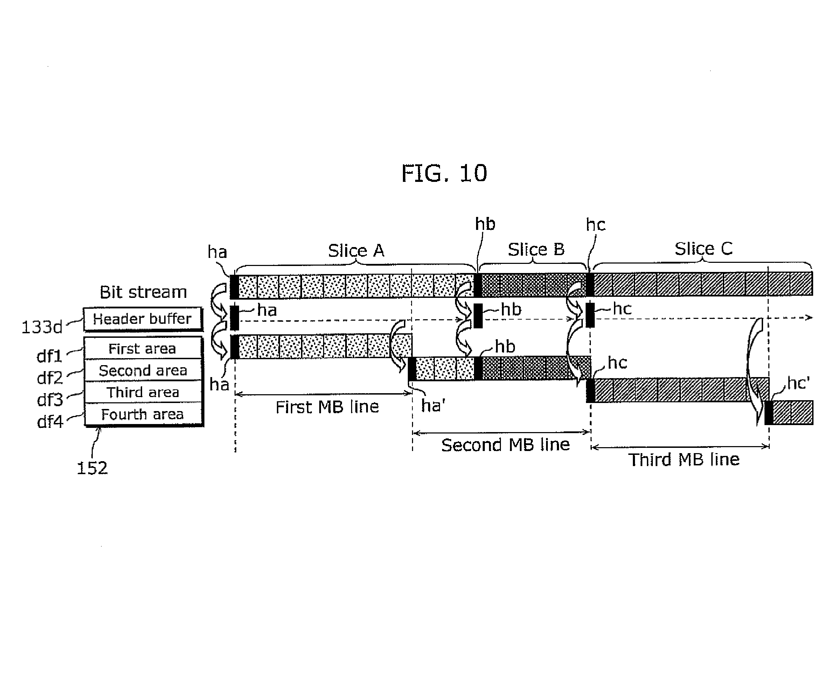

FIG. 10 is a diagram showing MB lines and slice headers to be assigned to a first area to a fourth area in a segment stream buffer according to Embodiment 1 of the present invention.

[FIG. 11A]

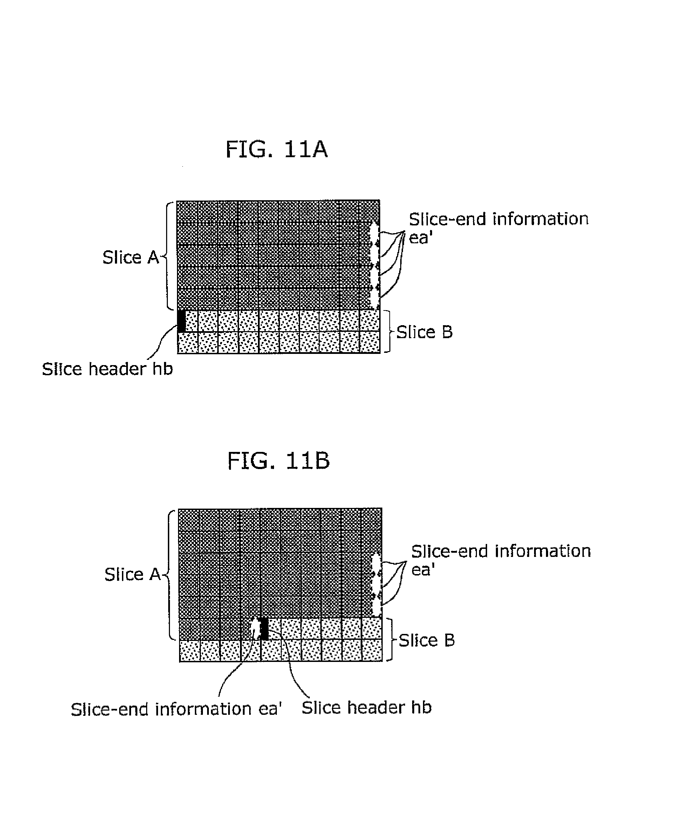

FIG. 11A is a diagram showing positions at which slice-end information is provided according to Embodiment 1 of the present invention.

[FIG. 11B]

FIG. 11B is a diagram showing positions at which slice-end information is provided according to Embodiment 1 of the present invention.

[FIG. 12]

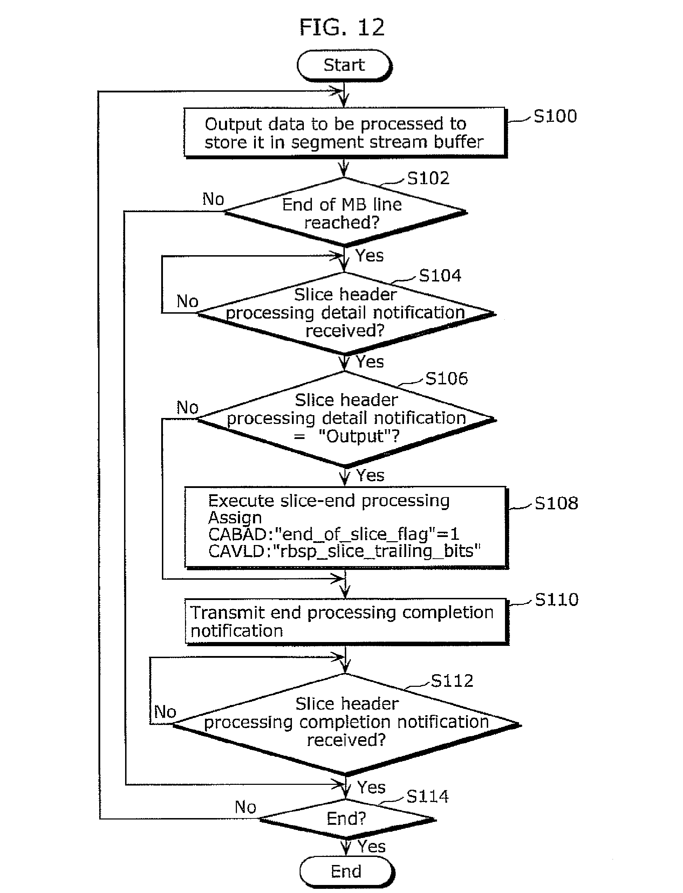

FIG. 12 is a flowchart indicating operations performed by the segment boundary detection unit according to Embodiment 1 of the present invention.

[FIG. 13A]

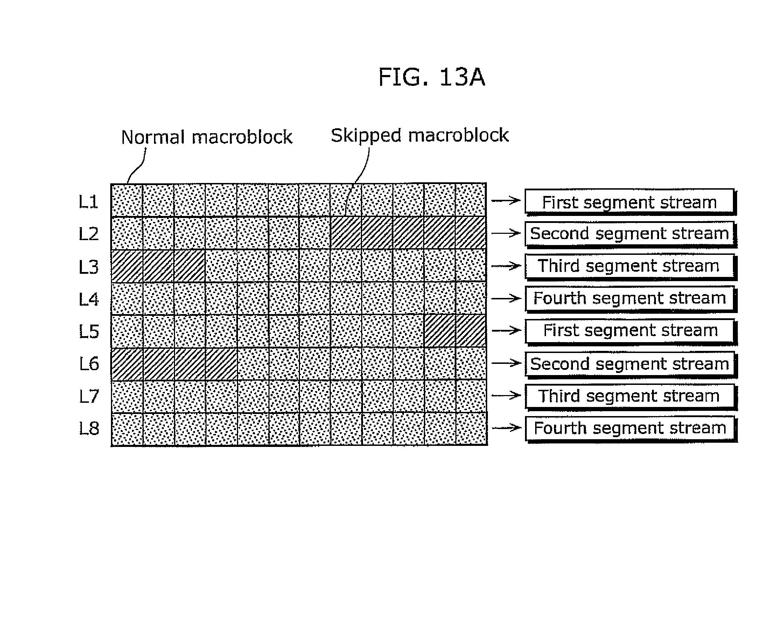

FIG. 13A is an illustration of modification processing on MB skip run information according to Embodiment 1 of the present invention.

[FIG. 13B]

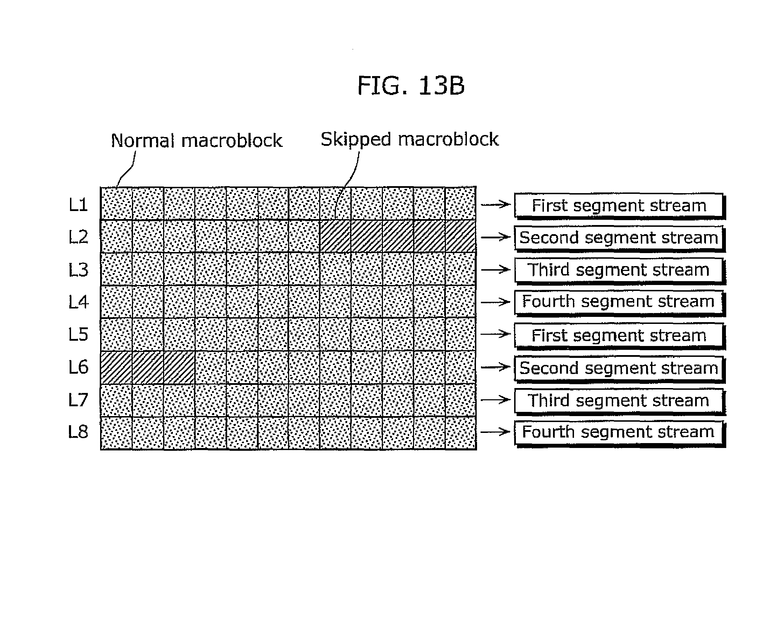

FIG. 13B is an illustration of modification processing on MB skip run information according to Embodiment 1 of the present invention.

[FIG. 14]

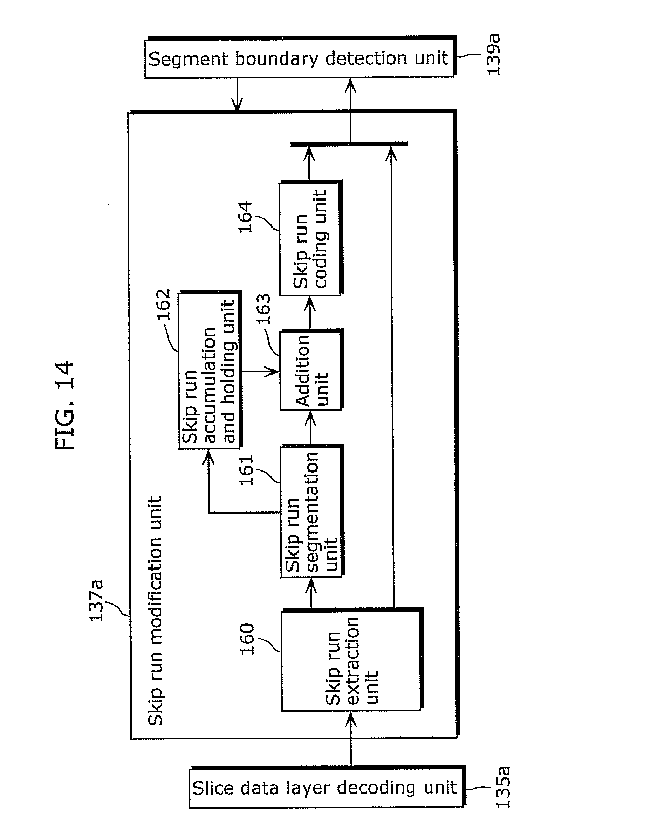

FIG. 14 is a block diagram showing a structure of a skip run modification unit according to Embodiment 1 of the present invention.

[FIG. 15]

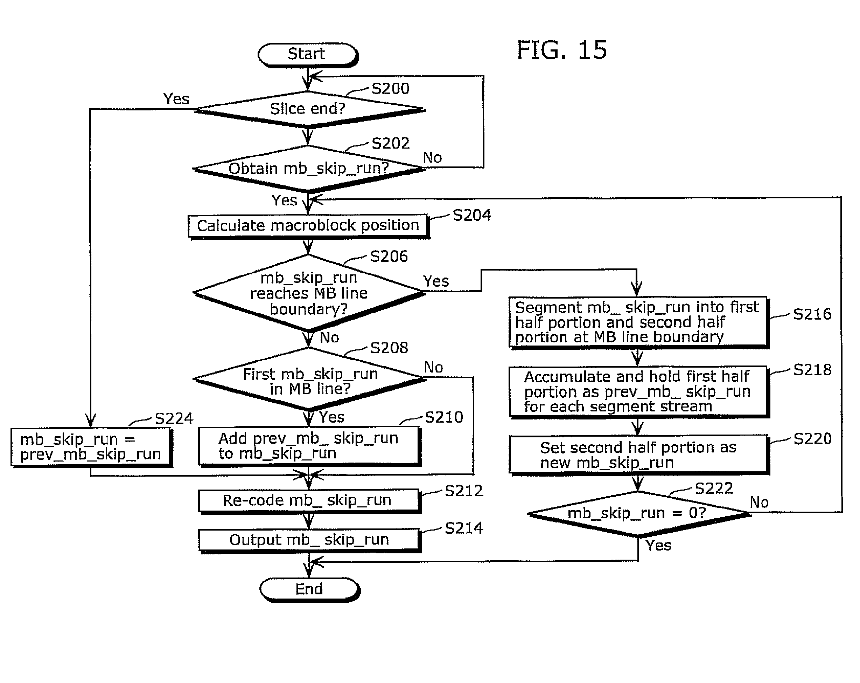

FIG. 15 is a flowchart indicating how the skip run modification unit performs modification operation on MB skip run information according to Embodiment 1 of the present invention.

[FIG. 16A]

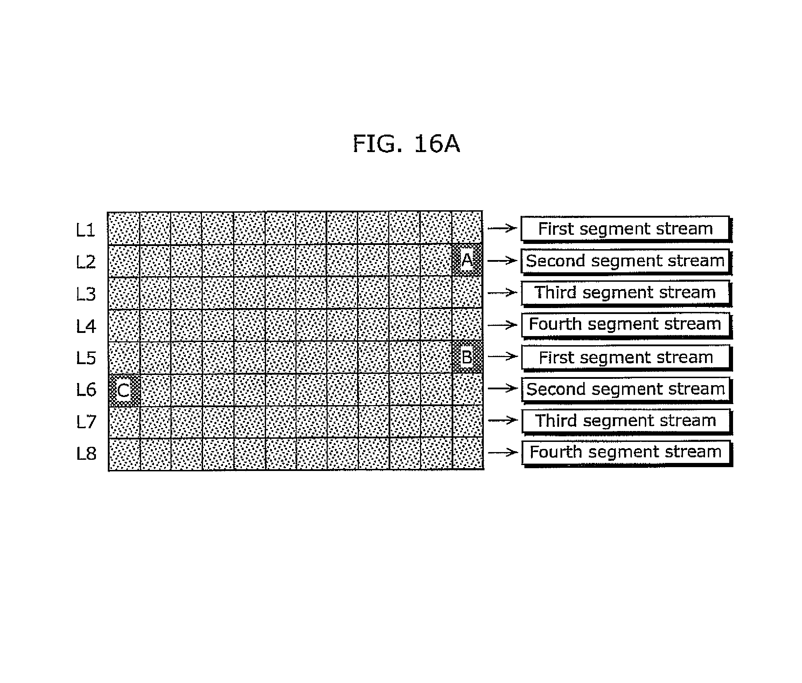

FIG. 16A is an illustration of modification processing on QP variations according to Embodiment 1 of the present invention.

[FIG. 16B]

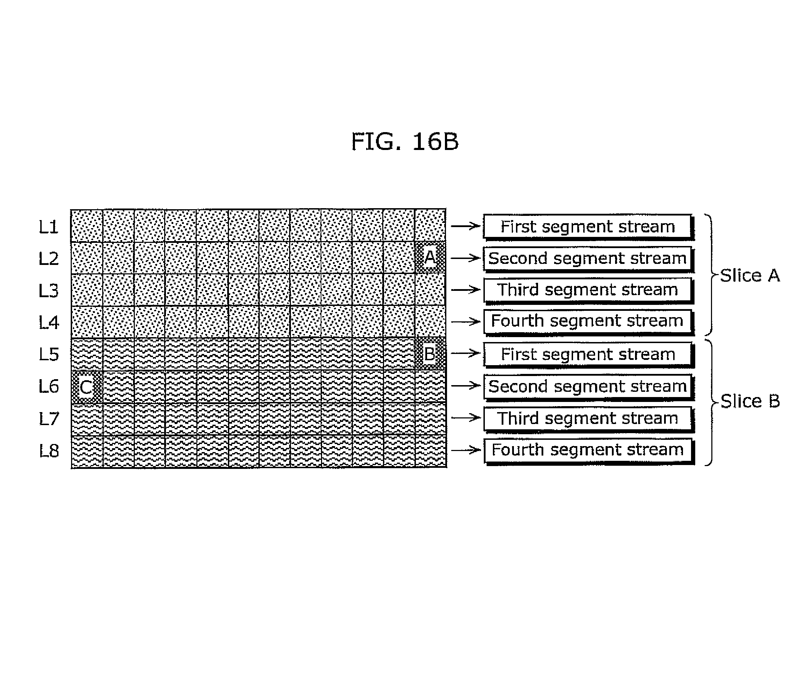

FIG. 16B is an illustration of modification processing on the QP variations according to Embodiment 1 of the present invention.

[FIG. 17]

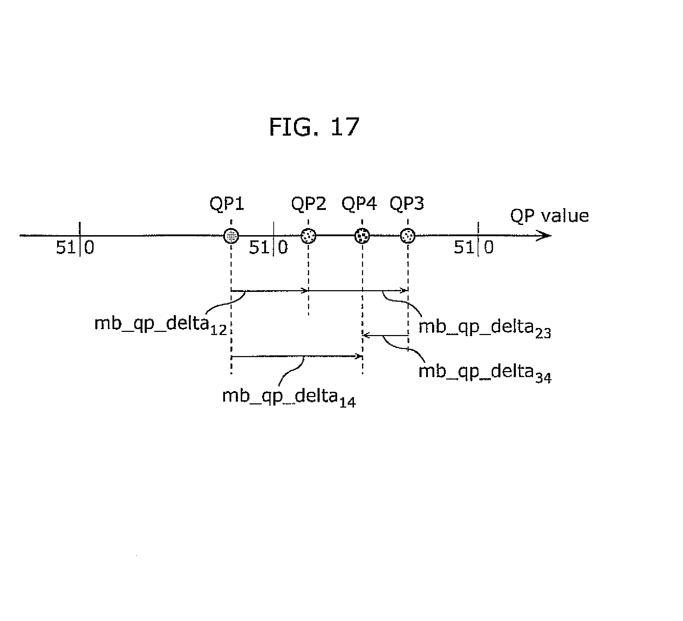

FIG. 17 is an illustration of accumulation of the QP variations according to Embodiment 1 of the present invention.

[FIG. 18]

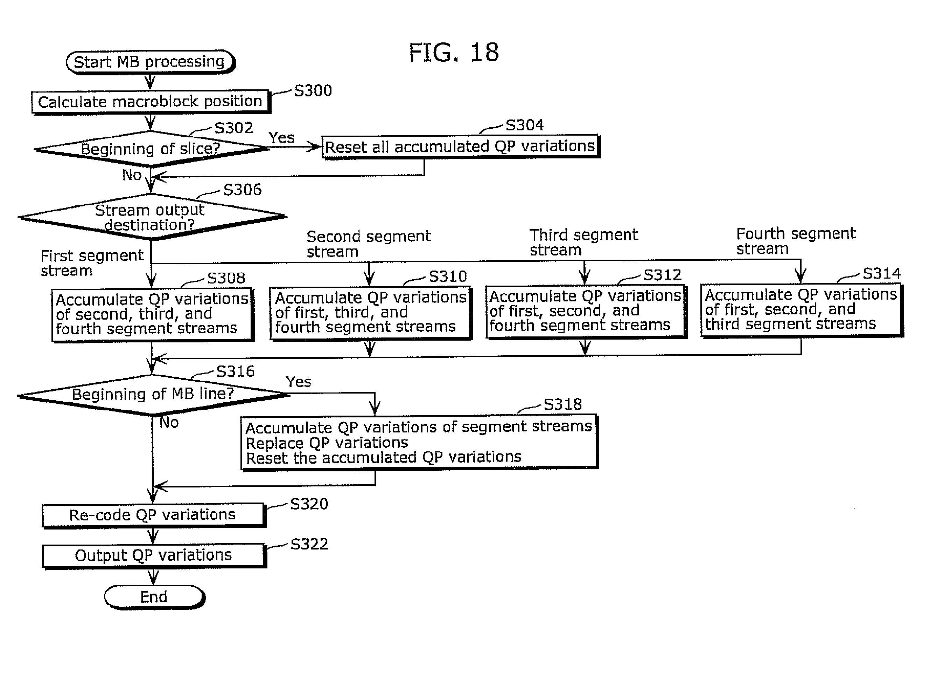

FIG. 18 is a flowchart indicating how the QP delta modification unit performs modification processing on the QP variations according to Embodiment 1 of the present invention.

[FIG. 19A]

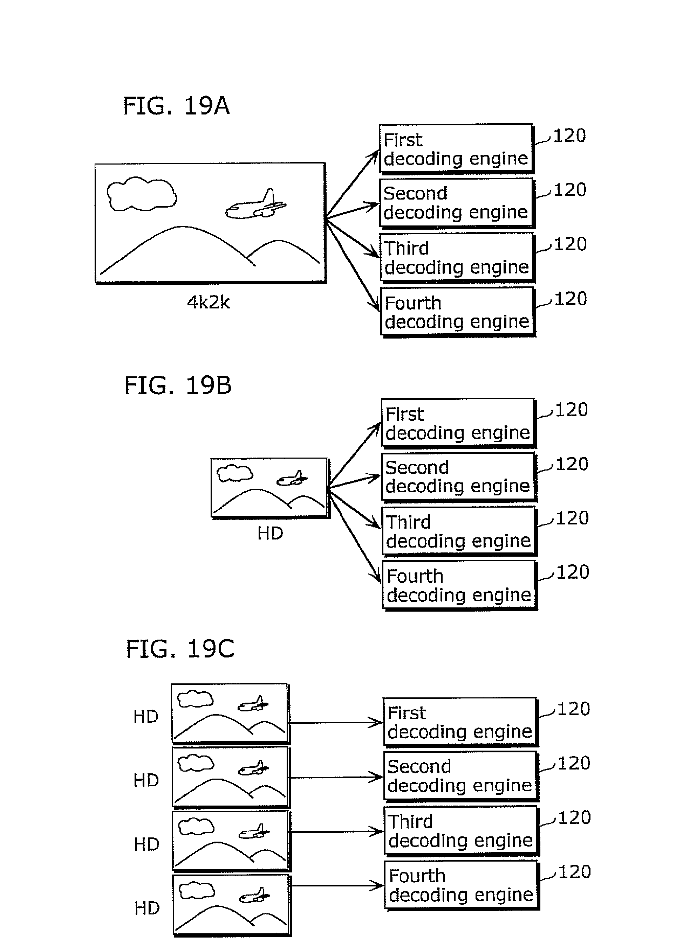

FIG. 19A is an illustration of high-resolution decoding according to Embodiment 1 of the present invention.

[FIG. 19B]

FIG. 19B is an illustration of high-speed decoding according to Embodiment 1 of the present invention.

[FIG. 19C]

FIG. 19C is an illustration of multi-channel decoding according to Embodiment 1 of the present invention.

[FIG. 20]

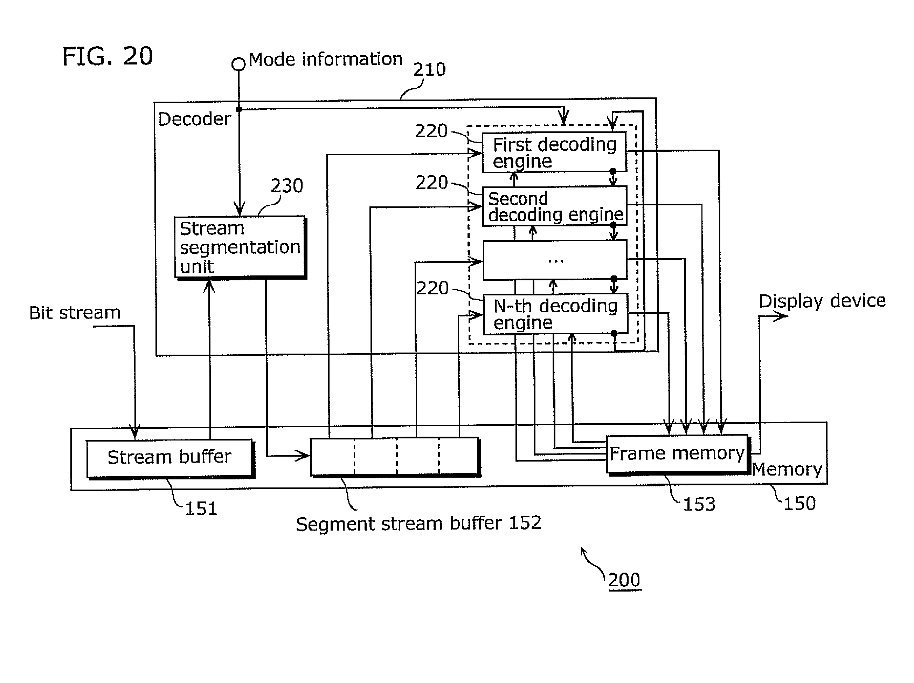

FIG. 20 is a block diagram showing a structure of an image decoding apparatus according to Embodiment 2 of the present invention.

[FIG. 21]

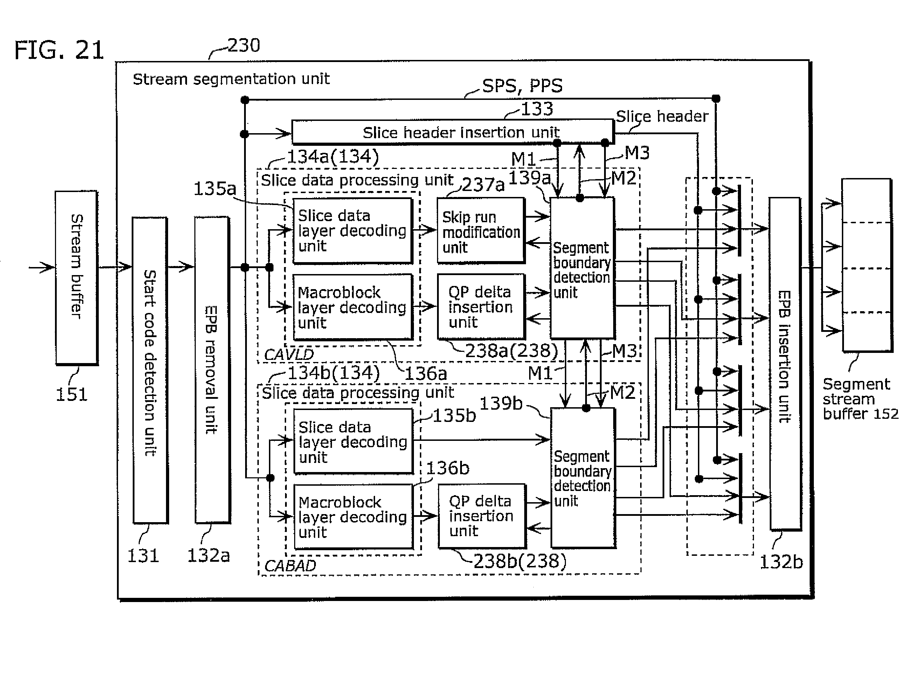

FIG. 21 is a block diagram showing a structure of a stream segmentation unit according to Embodiment 2 of the present invention.

[FIG. 22]

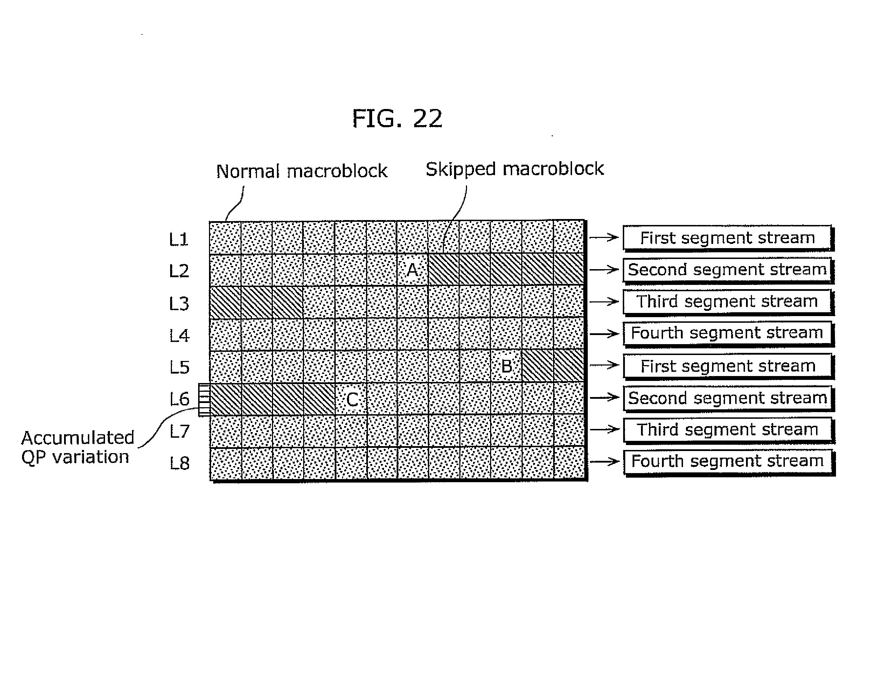

FIG. 22 is an illustration of modification processing on MB skip run information and insertion processing on QP variations according to Embodiment 2 of the present invention.

[FIG. 23]

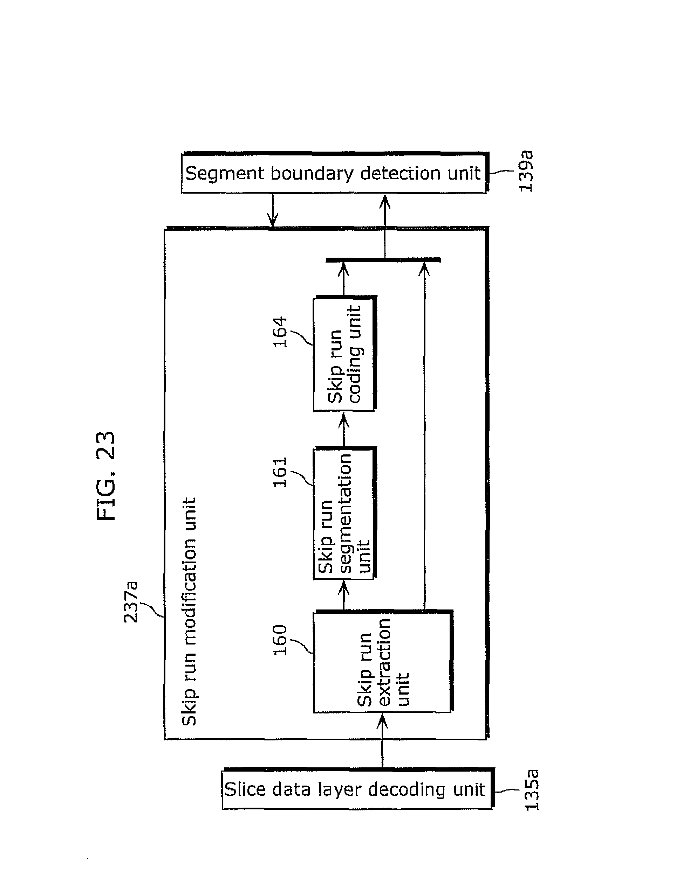

FIG. 23 is a block diagram showing a structure of a skip run modification unit according to Embodiment 2 of the present invention.

[FIG. 24]

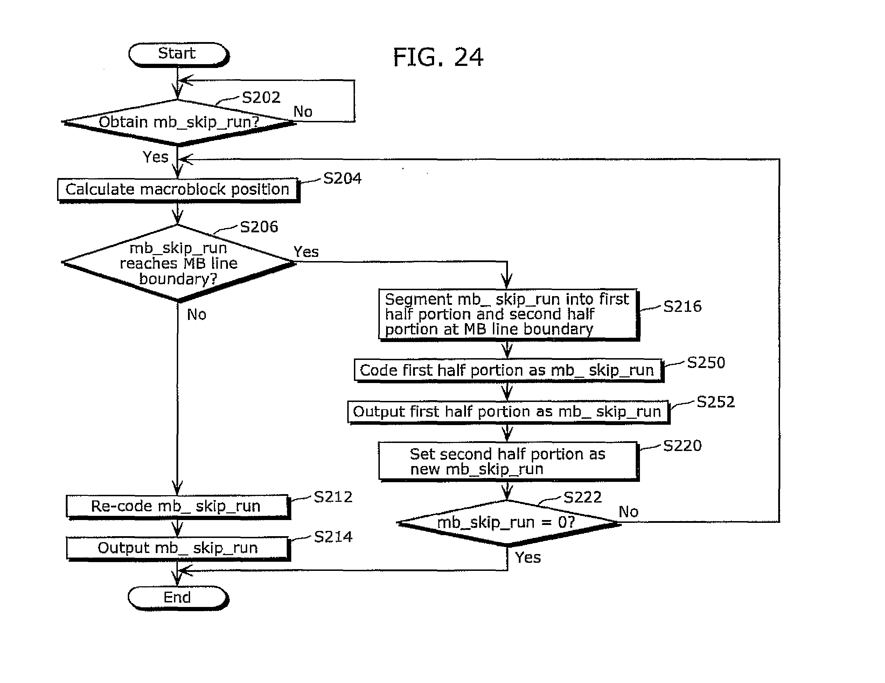

FIG. 24 is a flowchart indicating how the skip run modification unit performs modification operation on MB skip run information according to Embodiment 2 of the present invention.

[FIG. 25]

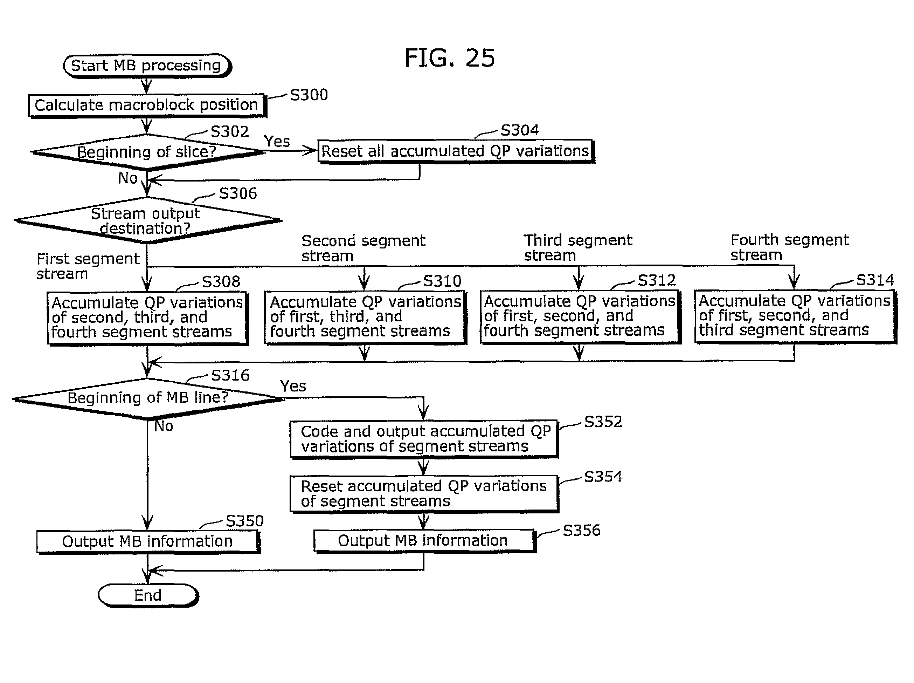

FIG. 25 is a flowchart indicating how the QP delta insertion unit performs insertion processing on the accumulated QP variations according to Embodiment 2 of the present invention.

[FIG. 26]

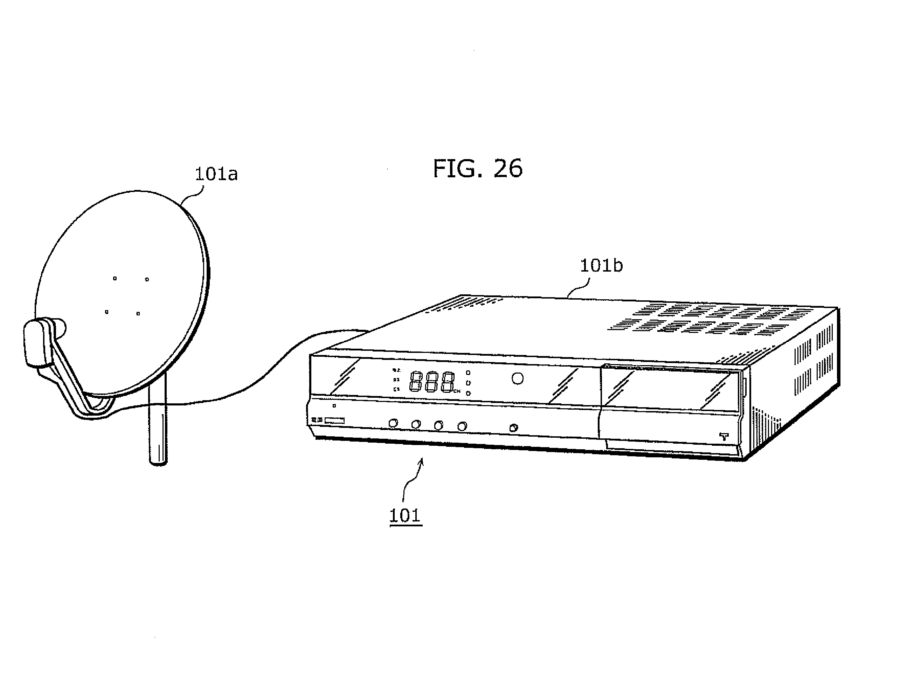

FIG. 26 is a diagram showing an exemplary application of an image decoding apparatus according to an embodiment of the present invention.

[FIG. 27]

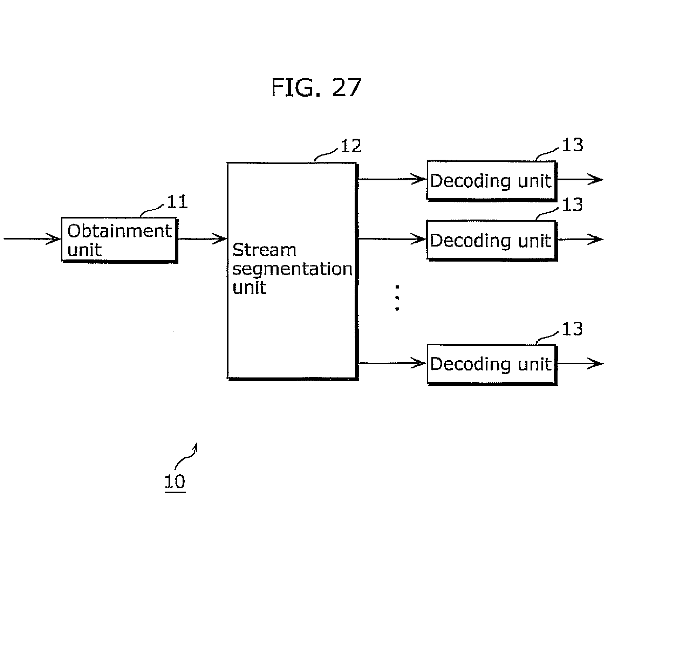

FIG. 27 is a block diagram showing a minimum structure of an image decoding apparatus according to an embodiment of the present invention.

[FIG. 28]
FIG. 28 is a diagram showing a structure of a picture to be coded.

[FIG. 29]
FIG. 29 is a diagram showing a structure of a bit stream.

[FIG. 30]
FIG. 30 is a diagram showing a structure of a conventional image decoding apparatus.

[FIG. 31]
FIG. 31 is a diagram showing a structure of a conventional decoding engine.

[FIG. 32]
FIG. 32 is an illustration of HD and 4k2k.

[FIG. 33]
FIG. 33 is a block diagram showing a structure of an image decoding apparatus that executes conventional parallel decoding processing.

[FIG. 34A]
FIG. 34A is an illustration of an exemplary conventional parallel decoding processing.

[FIG. 34B]
FIG. 34B is an illustration of an exemplary conventional parallel decoding processing.

[FIG. 35]
FIG. 35 is an illustration of decoding processing performed by a conventional image decoding apparatus.

[Description of Embodiment]

Image decoding apparatuses according to Embodiments of the present invention will be described below with reference to the drawings.

(Embodiment 1)

FIG. 1 is a block diagram showing a structure of an image decoding apparatus according to Embodiment 1 of the present invention.

The image decoding apparatus 100 according to this Embodiment of the present invention is a simply-structured apparatus which executes appropriate parallel decoding processing, and includes a decoder 110 and a memory 150.

The memory 150 includes an area for storing data generated as intermediate data by the decoder 110, and an area for storing data outputted as final data from the decoder 110.

More specifically, the memory 150 includes a stream buffer 151, a segment stream buffer 152, and a frame memory 153.

The stream buffer 151 stores a bit stream generated by and transmitted from the image coding apparatus. In other words, in this Embodiment, this stream buffer 151 is configured as an obtainment unit which obtains the bit stream. The segment stream buffer 152 stores, as the aforementioned intermediate data, N segment streams generated by the decoder 110. The frame memory 153 stores, as the aforementioned final data generated and outputted, N segments of decoded image data generated by the N decoding engines (decoding units) 120. The decoded image data is stored in the frame memory 153. The display device reads the decoded image data, and displays it as a moving picture.

The decoder 110 generates decoded image data by reading out the bit stream stored in the stream buffer 151 in the memory 150 and decodes the bit stream, and stores the decoded image data into the frame memory 153 in the memory 150. In addition, this decoder 110 includes a stream segmentation unit 130, and N decoding engines (first decoding engine to N-th decoding engine) 120.

The decoding engine 120 in this Embodiment has a processing capability of decoding two HD images (1920 x 1088 pixels, 60i) respectively corresponding to two channels.

The stream segmentation unit 130 obtains later-described mode information, and segments the bit stream into N segment streams (first segment stream to N-th segment stream) according to the mode information. In other words, the stream segmentation unit 130 in this Embodiment segments each of the coded pictures in the bit stream into plural MB lines. Subsequently, the stream segmentation unit 130 generates N segment streams by assigning, as a portion, each of the plural MB lines to a corresponding one of the N segment streams to be generated.

An MB line is a structural unit including a row of plural macroblocks which are arranged in a picture from left end to right end in the horizontal direction. In the case where a picture is not composed by MBAFF (Macroblock Adaptive Frame Field Coding), the stream segmentation unit 130 segments each of the pictures into plural MB lines. In the other case where a picture is composed by MBAFF, the stream segmentation unit 130 regards two MB lines as a one structural unit (hereinafter referred to as an MB line pair), and segments each of the pictures into plural MB line pairs. In other words, in the case of the picture composed by MBAFF, the stream segmentation unit 130 segments each of the pictures into plural MB lines, and assigns, as a portion, each of both the two MB lines belonging to each of the MB line pairs to a corresponding one of the segment streams. The following descriptions are given assuming that each of pictures is not composed by MBAFF. However, in the case where processes required for pictures composed by MBAFF are different from those for pictures not composed by MBAFF in the present invention, descriptions are given of the unique processes of such MBAFF as necessary. As long as no unique processes of such MBAFF are required, the following descriptions given of pictures that are not composed by MBAFF can be interpreted as descriptions given of pictures that are composed by MBAFF by replacing MB lines with MB line pairs in the descriptions.

In segmenting each of the pictures into plural MB lines, the stream segmentation unit 130 checks whether or not a header exists immediately before an MB line in a bit stream or between two macroblock lines belonging to the MB line, and in the case where a header exists as such, the stream segmentation unit 130 attaches the header to the MB line and assigns it as a portion of the segment stream.

Such segmentation into MB lines by the stream segmentation unit 130 results in segmentation of slices arranged to cross a boundary between plural MB lines in each of the pictures. Furthermore, in segmenting a bit stream into N segment streams, the stream segmentation unit 130 removes dependencies between macroblocks arranged to cross the boundary between N segment streams prior to variable length decoding processing.

Each of the N decoding engines 120 generates N segments of decoded image data by reading out a current segment stream to be processed by the decoding engine 120 itself from the segment stream buffer 152 and performs parallel decoding on the read-out segment streams. For example, the first decoding engine 120 reads out a first segment stream from the segment stream buffer 152, the second decoding engine 120 reads out a second segment stream from the segment stream buffer 152, the third decoding engine 120 reads out a third segment stream from the segment stream buffer 152, and the fourth decoding engine 120 reads out a fourth segment stream from the segment stream buffer 152. Subsequently, the respective first decoding engines 120 to the fourth decoding engine 120 perform parallel decoding on the first to fourth segment streams.

In decoding the segment streams, each of the N decoding engines 120 decodes the segment stream by performing motion compensation as necessary with reference to decoded image data already stored in the frame memory 153.

Furthermore, in decoding a current macroblock which is in a current segment stream and has been coded by intra-picture prediction, the corresponding one of the N decoding engines 120 obtains, as adjacent MB information, information of the decoded macroblocks located at the left above, above, and right above positions with respect to the current macroblock to be decoded from the decoding engines 120 which have decoded the macroblocks. The decoding engine 120 which has obtained the adjacent MB information decodes the current macroblock to be decoded using the adjacent MB information. As in the same manner, in exemplary cases of performing deblocking filtering processing and motion vector prediction processing, the decoding engine 120 obtains, as adjacent MB information, information of the decoded macroblocks located at the left above, above, and right above positions with respect to the current macroblock to be decoded from the decoding engines 120 which have decoded the macroblocks.

For simplicity, the following descriptions in this Embodiment are given assuming that N represents 4. In this Embodiment, when decoding of the macroblocks located at the left, left above, above, and right above positions with respect to the current macroblock to be decoded is completed, the decoding engine 120 starts decoding the current macroblock to be decoded using the adjacent MB information. As a result, the respective first decoding engine 120 to fourth decoding engine 120 decode, in parallel, the macroblocks located in the MB lines at different horizontal positions.

FIG. 2A is a diagram showing decoding orders of a picture that is not composed by MBAFF.

In the case of a picture that is not composed by MBAFF, the first decoding engine 120 decodes the 0th MB line, the second decoding engine 120 decodes the first MB line, the third decoding engine 120 decodes the second MB line, and the fourth decoding engine 120 decodes the third MB line. The K-th (K is an integer equal to or greater than 0) MB line corresponds to the K-th MB line from the top end of a picture. For example, the 0th MB line is located at the 0th position from the top end of the picture.

Here, at the start of decoding pictures, the first decoding engine 120 starts decoding the 0th MB line first. Next, upon completion of the decoding of two macroblocks located at the left end of the 0th MB line, the second decoding engine 120 starts decoding the left-end macroblocks of the first MB line. Next, upon completion of the decoding of two macroblocks located at the left end of the first MB line, the third decoding engine 120 starts decoding the left-end macroblocks of the second MB line. Likewise, upon completion of the decoding of two macroblocks located at the left end of the second MB line, the fourth decoding engine 120 starts decoding the left-end macroblocks of the third MB line.

Accordingly, the (K + 1)-th MB line is decoded in order from left-end macroblock to right-end macroblock with a delay by two macroblocks from when the K-th macroblock line is decoded.

FIG. 2B is a diagram showing decoding orders of a picture that is composed by MBAFF.

In the case of a picture that is composed by MBAFF, each of the MB line pairs is a structural unit corresponding to two rows (MB lines) of plural macroblocks arranged in a picture from left end to right end in the horizontal direction, as described above. Each MB line pair is adaptively coded by frame coding or field coding in units of two vertically arranged macroblocks (a macroblock pair). In each macroblock pair, the top macroblock is decoded first, and the bottom macroblock is decoded next. In this case, as in the case of a picture that is not composed by MBAFF, the first decoding engine 120 decodes the 0th MB line pair, the second decoding engine 120 decodes the first MB line pair, the third decoding engine 120 decodes the second MB line pair, and the fourth decoding engine 120 decodes the third MB line pair. The K-th (K denotes an integer equal to or greater than 0) MB line pair is a structural unit corresponding to the K-th two rows (MB lines) of macroblocks from top end of a picture. For example, the 0th MB line is the 0th two MB lines from the top end of the picture.

Here, at the start of decoding pictures, the first decoding engine 120 starts decoding the 0th MB line pair first. Next, upon completion of the decoding of two macroblock pairs located at the left end of the 0th MB line pair, the second decoding engine 120 starts decoding the left-end macroblocks of the first MB line pair. Next, upon completion of the decoding of two macroblock pairs located at the left end of the first MB line pair, the third decoding engine 120 starts decoding the left-top-end macroblocks of the second MB line pair. Likewise, upon completion of the decoding of two macroblock pairs located at the left end of the second MB line pair, the fourth decoding engine 120 starts decoding the left-top-end macroblocks of the third MB line pair.

Accordingly, the (K + 1)-th MB line pair is decoded in order from left-end macroblock pair to right-end macroblock pair with a delay by two macroblock pairs from when the K-th MB line pair is decoded.

In the case of a picture that is not composed by MBAFF, it is only necessary that the (K + 1)-th MB line is decoded with a delay by at least two macroblocks from when the K-th MB line is decoded. In the case of a picture that is composed by MBAFF, it is only necessary that the (K + 1)-th MB line pair is decoded with a delay by at least two macroblock pairs from when the K-th MB line pair is decoded. In short, the picture that is not composed by MBAFF and the picture that is composed by MBAFF may be decoded with delays by three macroblocks and three macroblock pairs, respectively. It is possible to minimize time for decoding each of pictures both in the case where the (K + 1)-th MB line is decoded with a delay by two macroblocks from when the K-th MB line is decoded and in the case where the (K + 1)-th MB line pair is decoded with a delay by two macroblock pairs from when the K-th MB line pair is decoded. In each of the exemplary cases where the delay corresponds to three or more macroblocks and the delay corresponds to three or more macroblock pairs, time for decoding the pictures becomes longer as the delay increases.

The image decoding apparatus 100 in this Embodiment is characterized by reconstructing, as a new slice, a slice or a segment slice group (slice portions) generated by the stream segmentation unit 130 in the segmentation. The slice reconstruction involves slice header insertion processing, slice-end processing, processing of updating MB address information, skip run modification processing, and QP delta setting processing. In addition, the QP delta setting processing includes QP delta modification processing and QP delta insertion processing. It is to be noted that this Embodiment describes the case where the QP delta setting processing corresponds to the QP delta modification processing.

FIG. 3 is an illustration of processing of inserting slice headers in a picture.

For example, the stream segmentation unit 130 segments the picture p1 shown in FIG. 3(a).

The picture p1 is composed of slices A, B, and C, and in other words, MB lines L1 to L12.

The slice A covers MB lines L1 to L7, and includes a slice header ha and plural macroblocks mba arranged sequentially next to the slice header ha. The slice B covers MB lines L7 and L8, and includes a slice header hb and plural macroblocks mbb arranged sequentially next to the slice header hb. The slice C covers MB lines L9 to L12, and includes a slice header hc and plural macroblocks mbc arranged sequentially next to the slice header hc. Each of the slice headers includes supplemental information necessary for decoding the slices having the slice header.

As shown in FIG. 3(b), the stream segmentation unit 130 segments the picture p1 into MB lines. Subsequently, the stream segmentation unit 130 assigns, as a portion, each of the MB lines L1 to L12 sequentially from the top to a corresponding one of the first to fourth segment streams. For example, the stream segmentation unit 130 assigns, as portions of the respective first to fourth segment streams, the MB line L1 to the first segment stream, the MB line L2 to the second segment stream, the MB line L3 to the third segment stream, and the MB line L4 to the fourth segment stream. Subsequently, upon completion of the MB line to the fourth segment stream, the stream segmentation unit 130 repeats such assignment of MB lines starting with the first segment stream. More specifically, the stream segmentation unit 130 assigns, as portions of the respective MB line L5 to MB line L8, the MB line L5 to the first segment stream, the MB line L6 to the second segment stream, the MB line L7 to the third segment stream, and the MB line L8 to the fourth segment stream.

As a result, the first segment stream includes the MB lines L1, L5, and L9 in sequence, the second segment stream includes the MB lines L2, L6, and L10 in sequence, the third segment stream includes the MB lines L3, L7, and L11 in sequence, and the fourth segment stream includes the MB lines L4, L8, and L12 in sequence.

Each of the MB lines L1 to L6, a set of the top six macroblocks in the MB line L7, a set of the last 10 macroblocks in the MB line L7, and the MB lines L8 to L12 is a slice portion corresponding to one of the slice A to C. Furthermore, in the first segment stream, a slice portion group (the slice A in the first segment stream) is composed of the MB lines L1 and L5 that are slice portions of the slice A. Furthermore, in the second segment stream, a slice portion group (the slice B in the second segment stream) is composed of the MB lines L2 and L6 that are slice portions of the slice B.

Here, simply assigning MB lines to segment streams may be not sufficient to allow the decoding engines 120 to appropriately recognize the slices to be included in the respective segment streams.

For example, the first segment stream includes the consecutive MB lines L1, L5, and L9 as described above. In this case, the MB lines L1 and L5 should be recognized as the slice A, and the MB lines L9 should be recognized as the slice C. For this purpose, the slice header ha of the slice A must be disposed at the beginning of the MB line L1 that should be the beginning of the slice A in the first segment stream, and the slice header hc of the slice C must be disposed at the beginning of the MB line L9 that should be the beginning of the slice C in the first segment stream. In the example shown in FIG. 3, the slice headers ha and hc are disposed in advance at the beginning of the MB lines L1 and L9, respectively. Thus, it is only necessary for the stream segmentation unit 130 to assign the first segment stream with the MB lines L1, L5, and L9 together with the slice headers ha and hc.

On the other hand, the second segment stream includes the consecutive MB lines L2, L6, and L10 as described above. In this case, the MB lines L2 and L6 should be recognized as the slice A, and the MB lines L10 should be recognized as the slice C. For this purpose, the slice header ha of the slice A must be disposed at the beginning of the MB line L2 that should be the beginning of the slice A in the second segment stream, and the slice header hc of the slice C must be disposed at the beginning of the MB line L10 that should be the beginning of the slice C in the second segment stream.

For this purpose, the stream segmentation unit 130 in this Embodiment generates slice header copies ha', hb', and hc' by copying the slice headers ha, hb, and hc as necessary and inserts these slice header copies into the segment streams when assigning these MB lines into portions of the segment streams.

For example, the stream segmentation unit 130 generates three slice header copies ha' by copying the slice header ha, and inserts the slice header copies ha' into the positions immediately before the MB lines L2, L3, and L4. Furthermore, the stream segmentation unit 130 generates a slice header copy hb' by copying the slice header hb, and inserts the slice header copy hb' into the position immediately before the MB line L8. Furthermore, the stream segmentation unit 130 generates three slice header copies hc' by copying the slice header hc, and inserts the slice header copies hc' into the MB lines L10, L11, and L12.

As a result, in the second segment stream, the slice header copy ha' that is a copy of the slice header ha of the slice A is disposed immediately before the MB line L2 that is the beginning of the slice A, and the slice header copy hc' that is a copy of the slice header hc of the slice C is disposed immediately before the MB line L10 that is the beginning of the slice C. In this way, the second decoding engine 120 can obtain parameters required to decode the respective slices A and C of the second segment stream, based on the slice header copies ha' and hc'.

Next, a description is given of processing of updating MB address information.

The stream segmentation unit 130 updates MB address information included in the slice header copies depending on the insertion positions when inserting the slice header copies into the segment streams as described above.

More specifically, each of the slice headers of the slices that constitute a picture in a bit stream includes MB address information such as "first_mb_in_slice" for identifying the address of the starting macroblock of the slice in the picture. Thus, each of the slice header copies generated by copying such slice headers originally includes the same MB address information as the MB address information of the copy-source slice header. As a result, each of the slice header copies specifies an erroneous address identified based on the MB address information of the slice header copy when being inserted to a position different from the position of the copy-source slice header in the picture. In other words, the address identified based on the MB address information of the slice header copy specifies the address of the starting macroblock in the slice having the slice header of the copy source, instead of specifying the address of the starting macroblock in the slice having the slice header copy in the picture in the segment stream.

For example, the slice header ha of the slice A in the picture p1 includes MB address information identifying the address of the starting macroblock (the starting macroblock in the MB line L1) in the slice A. Thus, the slice header copy ha' generated by copying the slice header ha originally includes MB address information for identifying the address of the starting macroblock in the MB line L1 in the picture p1. As a result, when the slice header copy ha' is inserted immediately before the MB line L2, the address identified based on the MB address information of the slice header copy ha' specifies the address of the starting macroblock in the MB line L1, instead of specifying the address of the starting macroblock (the starting macroblock in the MB line L2) in the slice A having the slice header copy ha' in the second segment stream.

For this reason, the stream segmentation unit 130 in this Embodiment updates the MB address information included in the slice header copies as described above.

FIG. 4 is an illustration of processing of updating MB address information.

The stream segmentation unit 130 obtains "pic_width_in_mbs_minus1" that is information related to the number of macroblocks in the horizontal direction of a picture, from an SPS (Sequence Parameter Set) included in the bit stream.

Furthermore, the stream segmentation unit 130 determines the address of the starting macroblock in the slice having the slice header of the copy source using the MB address information "first_mb_in_slice" included in the slice header of the copy source.

Next, the stream segmentation unit 130 calculates "mbposv" that is a value indicating the order of the MB line in which a current starting macroblock is arranged in the picture, based on the determined address of the starting macroblock. Here, the value "mbposv" is an integer equal to or greater than 0.

Subsequently, in the case where the MB line located immediately after the position to which the slice header copy is inserted is apart by n lines when seen from the MB line in which the slice header of the copy source is disposed, the stream segmentation unit 130 determines the MB address information of the slice header copy, based on "first_mb_in_slice[n]" = ("mbposv" + n) x ("pic_width_in_mbs_minus1" + 1).

In the case where the picture is composed by MBAFF (Macroblock Adaptive Frame Field Coding), the stream segmentation unit 130 determines the MB address information of the slice header copy, based on "first_mb_in_slice[n]" = ("mbposv" / 2 + n) x ("pic_width_in_mbs_minus1" + 1).

The stream segmentation unit 130 updates the MB address information originally included in the slice header copy to the MB address information determined as described above. In this way, the address identified based on the MB address information of the slice header copy specifies the correct address of the starting macroblock in the slice having the slice header copy in the picture in the segment stream.

Next, a description is given of slice-end processing.

Slice-end information indicating the end of a slice is set at the end of each of slices that constitute a picture in the bit stream. Thus, as shown in FIG. 3, simply segmenting the picture into MB lines and assigning the respective MB lines to portions of the first to fourth segment streams may not be sufficient to allow the decoding engines 120 to appropriately recognize the ends of the slices in the segment streams.

For this, the stream segmentation unit 130 in this Embodiment also executes slice-end processing as well as the slice header insertion processing.

FIG. 5 is an illustration of the slice-end processing.

For example, as shown in FIG. 5(a), the slice C of the picture p1 in the bit stream includes a slice header hc, MB lines L9 to L12, and a slice-end information ec.

The stream segmentation unit 130 segments the picture p1 into MB lines. As a result, as shown in FIG. 5(b) to 5(e), the MB line L9 is assigned to the first segment stream together with the slice header hc, the MB line L10 is assigned to the second segment stream, the MB line L11 is assigned to the third segment stream, and the MB line L12 is assigned to the fourth segment stream.

Furthermore, in the aforementioned slice header insertion processing, the stream segmentation unit 130 generates three slice header copies hc' by copying the slice header hc, and inserts the respective three slice header copies hc' into the positions immediately before the MB lines L10, L11, and L12 of the second to fourth segment streams. In addition, in the aforementioned MB address update processing, the stream segmentation unit 130 updates the MB address information included in the slice header copies hc' depending on the positions of the slice header copies hc' to be inserted.

Here, in the slice-end processing, the stream segmentation unit 130 generates slice-end information ec' indicating the end of the slice C (MB line L9) in the first segment stream, the end of the slice C (MB line L10) in the second segment stream, the end of the slice C (MB line L11) in the third segment stream, and the end of the slice C (MB line L12) in the fourth segment stream. Subsequently, the stream segmentation unit 130 sets the generated slice-end information ec' at the positions immediately after the MB lines L9, L10, L11, and L12 of the first to fourth segment streams. The stream segmentation unit 130 discards the slice-end information ec originally included in the bit stream when segmenting the bit stream into MB lines. In addition, since the slice-end information ec is identical to the slice-end information ec', the MB line L12 is finally assigned to the fourth segment stream together with the slice-end information ec' (ec).

In this way, each of the decoding engines 120 can appropriately recognize the ends of the slices in the assigned segment stream.

FIG. 6 is a flowchart indicating the overall operations performed by the image decoding apparatus 100 in this Embodiment.

First, the image decoding apparatus 100 obtains a bit stream (Step S10), and determines the current coded pictures to be processed in the bit stream (Step 512). Furthermore, the image decoding apparatus 100 extracts an MB line by segmenting the pictures to be processed (Step S14). In the case where a slice header exists immediately before an MB line or between two macroblocks belonging to the MB line, the MB line is extracted together with the slice header.

Next, prior to assigning the current MB line extracted by the segmentation in Step S14 to one of the first to N-th segment streams to be generated, the image decoding apparatus 100 determines whether or not slice reconstruction processing is required (more specifically, whether or not a slice header needs to be inserted immediately before the MB line, whether or not slice-end information needs to be set immediately after the MB line already assigned, and whether or not QP variations need to be set) (Step S16).

The image decoding apparatus 100 executes slice reconstruction processing (Step S18) in the case where it determines in Step S16 that the slice reconstruction processing needs to be performed (Yes in Step S16). In short, the image decoding apparatus 100 executes at least one of the aforementioned slice header insertion processing, slice-end processing, skip run modification processing, and QP delta setting processing. In addition, the image decoding apparatus 100 also executes MB address information update processing when executing the slice header insertion processing.

Subsequently, the image decoding apparatus 100 assigns the MB line to one of the first to the N-th segment streams to be generated (Step S20). This Step S20 is repeatedly performed to sequentially assign MB lines to the first to N-th segment streams, thereby generating the first to N-th segment streams.

The image decoding apparatus 100 decodes, in parallel, the MB lines assigned to the respective first to N-th streams (Step S22). In the case where no MB line is assigned to any of the first to N-th segment streams, the image decoding apparatus 100 decodes the remaining segment streams other than the segment stream not assigned with any MB line.

Next, the image decoding apparatus 100 determines whether or not all the MB lines in the picture have already been assigned (Step S24), and when it is determined that all the MB lines have not yet been assigned (No in Step S24), repeats the execution of the processing starting with Step 514. In contrast, when it is determined that all the MB lines have already been assigned (Yes in Step S24), the image decoding apparatus 100 further determines whether or not all the pictures in the bit stream have already been segmented (Step S26). Here, when it is determined that all the pictures have not yet been segmented (No in Step S26), the image decoding apparatus 100 repeats the execution of the processing starting with Step 512. In contrast, when it is determined that all the pictures have already been segmented (Yes in Step S26), the image decoding apparatus 100 completes the decoding processing.

The processing operations indicated by the flowchart in FIG. 6 are examples of processing operations performed by the image decoding apparatus 100 according to the present invention. The present invention is not limited to the processing operations shown in this flowchart.

For example, in the flowchart in FIG. 6, the stream segmentation unit 130 of the image decoding apparatus 100 performs slice header insertion processing in the slice reconstruction process of Step 518. However, the stream segmentation unit 130 may directly provide the slice header copies to the decoding engines 120 that require the respective slice headers without performing such slice header insertion processing. In addition, in the flowchart in FIG. 6, the stream segmentation unit 130 performs MB address information update processing in the slice reconstruction process of Step S18. However, the stream segmentation unit 130 may skip such update processing. In this case, for example, the decoding engines 120 update the MB address information of the slice header copies in the segment streams. In addition, in the flowchart in FIG. 6, the stream segmentation unit 130 performs slice-end processing in the slice reconstruction process of Step S18. However, the stream segmentation unit 130 may skip such slice reconstruction processing. In this case, for example, such slice-end processing may be performed on the already-assigned MB lines, after each of the MB lines is assigned to a corresponding one of the first to N-th segment streams in Step S20 and immediately before a next new MB line is assigned to one of the segment streams by the stream segmentation unit 130.

Here, a detailed description is given of a structure and operations of the stream segmentation unit 130.

FIG. 7 is a block diagram showing the structure of the stream segmentation unit 130.

The stream segmentation unit 130 includes a start code detection unit 131, an EPB removal unit 132a, an EPB insertion unit 132b, a slice header insertion unit 133, and slice data processing units 134a and 134b.

The start code detection unit 131 reads out a bit stream from the stream buffer 151, and detects the start code of each of NAL units.

The EPB removal unit 132a removes the EPBs (emulation prevention bytes) from the bit stream, and outputs the bit stream without the EPBs to the slice data processing units 134a and 134b. Furthermore, the EPB removal unit 132a obtains information such as SPSs (Sequence Parameter Sets) and PPSs (Picture Parameter Sets) that are included in layers higher than the layer of slices in the bit stream, and outputs the information items to the EPB insertion unit 132b so as to enable the EPB insertion unit 132b to insert the information items to the respective four segment streams.

The EPB insertion unit 132b inserts the EPBs removed by the EPB removal unit 132a into the segment streams that are generated by segmenting the bit stream.

The slice header insertion unit 133 executes the aforementioned slice header insertion processing and MB address information update processing. The slice header insertion unit 133 transmits, to the slice data processing units 134a and 134b at a predetermined timing, a slice header processing detail notification M1 indicating whether or not slice header insertion processing is to be performed, and when it receives a slice-end processing completion notification M2 from the slice data processing units 134a and 134b, it executes the slice header insertion processing. In the subsequent slice header insertion processing, the slice header insertion unit 133 outputs, to the EPB insertion unit 132b, the slice header immediately before a current MB line and the slice header copy with updated MB address information.

The slice data processing units 134a and 134b generate four segment streams by segmenting the bit stream without the EPBs, and output the four segment streams. The segment streams outputted from the slice data processing units 134a and 134b do not include slice headers and slice header copies in the MB lines or at the positions immediately before the MB lines. Here, the slice data processing unit 134a executes processing in accordance with CAVLD (Context-Adaptive Variable Length Decoding), and segments the bit stream generated by CAVLC (Context-Adaptive Variable Length Coding) into four segment streams. Furthermore, the slice data processing unit 134b executes processing in accordance with CABAD (Context-Adaptive Binary Arithmetic Decoding), and segments the bit stream generated by CABAC (Context-Adaptive Binary Arithmetic Coding) into four segment streams.

The slice data processing unit 134a includes a slice data layer decoding unit 135a, a macroblock layer decoding unit 136a, a skip run modification unit 137a, a QP delta modification unit 138a, and a segment boundary detection unit 139a.

The slice data layer decoding unit 135a performs variable length decoding on coded data in the slice data layer in the bit stream. The macroblock layer decoding unit 136a performs variable length decoding on coded data in the macroblock layer in the bit stream. Dependencies between adjacent macroblocks are dissolved by such variable length decoding performed by the slice data layer decoding unit 135a and the macroblock layer decoding unit 136a. The slice data layer decoding unit 135a and the macroblock layer decoding unit 136a may decode only information (specifically, nCs (non-zero coefficients) in CAVAC) which is dependent on macroblocks adjacent to a current macroblock to be processed.

The skip run modification unit 137a modifies the MB skip run information "mb_skip_run" decoded by the slice data layer decoding unit 135a, codes the modified MB skip run information, and outputs the coded MB skip run information. More specifically, in the case where the MB skip run information indicates the number of consecutive blocks which cross the boundary between at least two consecutive slice portions in the bit stream, the skip run modification unit 137a segments the consecutive blocks in an arbitrary number, and sets MB skip run information modified to indicate the number of blocks for each slice portion, for each of the segment streams to be assigned with at least two consecutive slice portions. Furthermore, in the case where plural blocks corresponding to the plural pieces of MB skip run information to be set are consecutive in at least one of the segment streams, the skip run modification unit 137a converts the plural pieces of MB skip run information to a single piece of MB skip run information indicating the total number of the blocks indicated by the plural pieces of MB skip run information.

Here, the MB skip run information is an example of a first code word indicating the number of the consecutive blocks in the case where blocks of a particular kind are consecutive in a slice of a coded picture. More specifically, the MB skip run information indicates the number of macroblocks to be skipped consecutively.

For example, in the case where a set of macroblocks to be skipped in sequence cross the boundary between plural MB lines in a slice of the bit stream, the MB skip run information decoded by the slice data layer decoding unit 135a indicates the number of macroblocks to be skipped in sequence in the set. In such case, segmenting a picture into MB lines and assigning the MB lines to separate segment streams changes the number of macroblocks to be skipped in sequence in the respective segment streams. In short, this breaks the dependency between the MB lines on the MB skip run information.

For this, the skip run modification unit 137a determines, for each of MB lines including a portion of such set, the number of macroblocks which constitute the portion included in the MB line and are to be skipped in sequence.

Subsequently, the skip run modification unit 137a modifies the MB skip run information such that the number of macroblocks indicated by the MB skip run information is the number specified for the MB line.

The QP delta modification unit 138a modifies the QP variation "mb_qp_delta" of each macroblock decoded by the macroblock layer decoding unit 136a, codes the modified QP variation, and outputs the coded QP variation. Stated differently, in the case where the QP variation indicates variation in parameters for coding of blocks which cross the boundary between two MB lines, the QP delta modification unit 138a calculates variation in parameters for coding based on a new context of the blocks in each segment stream. Subsequently, the QP delta modification unit 138a updates the QP variation into the calculated variation.

Here, the QP variation is an example of a second code word indicating variation in parameters for coding of consecutive blocks in a slice of a coded picture. More specifically, the QP variation is included in a macroblock (current macroblock), and indicates a difference value between the QP value of the current macroblock and the QP value of the macroblock located immediately before the current macroblock.

In other words, the picture is segmented into MB lines, and when each of the MB lines is assigned to a corresponding one of the plural segment streams, the consecutive macroblocks having a boundary corresponding to the boundary of the MB lines are assigned to separate segment streams. As a result, the decoding engine 120 which decodes the segment stream including one of the consecutive macroblocks (current macroblock) cannot derive the QP value of the current macroblock based on the QP variation of the current macroblock. In short, this breaks the dependency between the MB lines on the QP variation.

To prevent this, the QP delta modification unit 138a re-calculates QP variation of each macroblock (current macroblock), based on the new context of macroblocks in the segment stream.

The segment boundary detection unit 139a segments the bit stream into four segment streams. More specifically, the segment boundary detection unit 139a segments each of the pictures into plural MB lines, and assigns each of the MB lines to a corresponding one of the four segment streams. In the case where a slice header is placed immediately before a current MB line or between two macroblocks belonging to the current MB line, the segment boundary detection unit 139a assigns only the MB line to a corresponding one of the segment streams without assigning the slice header. Furthermore, the segment boundary detection unit 139a provides each of the segment streams with MB skip run information obtained from the skip run modification unit 137a and the QP variation obtained from the QP delta modification unit 138a.

Furthermore, when the segment boundary detection unit 139a detects the end of a current slice in the segment stream and receives the slice header processing detail notification M1 from the slice header insertion unit 133, it executes the aforementioned slice-end processing according to the details indicated by the slice header processing detail notification M1. In addition, upon completion of the slice-end processing, the segment boundary detection unit 139a transmits the slice-end processing completion notification M2 to the slice header insertion unit 133.

The slice data processing unit 134b includes a slice data layer decoding unit 135b, a macroblock layer decoding unit 136b, a QP delta modification unit 138b, and a segment boundary detection unit 139b.

The slice data layer decoding unit 135b performs variable length decoding (arithmetic decoding) on coded data in the slice data layer in the bit stream. The macroblock layer decoding unit 136b performs variable length decoding (arithmetic decoding) on coded data in the macroblock layer in the bit stream. Dependencies between adjacent macroblocks are dissolved by such variable length decoding performed by the slice data layer decoding unit 135a and the macroblock layer decoding unit 136b.

As with the aforementioned QP delta modification unit 138a, the QP delta modification unit 138b modifies the QP variation "mb_qp_delta" of each macroblock decoded by the macroblock layer decoding unit 136a, codes the modified QP variation, and outputs the coded QP variation.

As with the segment boundary detection unit 139a, the segment boundary detection unit 139b segments the bit stream into four segment streams. At this time, the segment boundary detection unit 139b provides each of the segment streams with the QP variation obtained from the QP delta modification unit 138b. Furthermore, when the segment boundary detection unit 139b detects the end of the current slice in the segment stream and receives the slice header processing detail notification M1 from the slice header insertion unit 133, it executes the aforementioned slice-end processing according to the details indicated by the slice header processing detail notification M1. In addition, upon completion of the slice-end processing, the segment boundary detection unit 139b transmits the end processing completion notification M2 to the slice header insertion unit 133.

Here, detailed descriptions are given of the slice header insertion unit 133 and the slice data processing units 134a and 134b. It is to be noted that, in the descriptions given of the functions and processing operations that are performed by both the slice data processing units 134a and 134b, the slice data processing units 134a and 134b are not differentiated from each other and referred to as slice data processing units 134.

First, descriptions are given of timings at which the slice header insertion unit 133 inserts slice headers, and timings at which the slice data processing unit 134 inserts slice-end information.

FIG. 8 is an illustration of operations performed by the slice header insertion unit 133 and the slice data processing unit 134.

The slice data processing unit 134 segments each of pictures including a slice A and a slice B into MB lines, and sequentially stores, via the EPB insertion unit 132b, the MB lines from the beginning side into the four areas (the first area df1 to the fourth area df4) included in the segment stream buffer 152. At this time, the slice data processing unit 134 changes the storage destinations of MB lines on a per MB line basis to the first area df1, the second area df2, the third area df3, or the fourth area df4 in this listed order, and repeats this change.

For example, as shown in FIG. 8(a), the slice data processing unit 134 stores an MB line La1 of the slice A to the first area df1 of the segment stream buffer 152, stores a next MB line La2 of the slice A to the second area df2 of the segment stream buffer 152, and stores a next MB line La3 of the slice A to the third area df3 of the segment stream buffer 152. Furthermore, the slice data processing unit 134 stores the MB line Lb1 of a next slice B of the slice A into the fourth area df4 of the segment stream buffer 152.

As a result, an MB line is stored into each of the first area df1 to the fourth area df4 that are the four areas of the segment stream buffer 152. Thus, the segment stream buffer 152 is in a state in which the first area df1 is just ready for storage of a next MB line of the slice B.

In the case where slice-end information ea is placed immediately before the MB line La3 in the bit stream when the slice data processing unit 134 tries to store the MB line La3 into the third area df3, the slice data processing unit 134 stores only the MB line La3 into the third area df3 without storing the slice-end information ea. Subsequently, the slice data processing unit 134 stores slice-end information ea' corresponding to the slice-end information ea into the third area df3 when storing an MB line belonging to a new slice into the third area df3. Here, a slice header hb of the slice B is stored in advance in the fourth area df4 by the slice header insertion unit 133 by the time when the slice data processing unit 134 tries to store the MB line Lb1 into the fourth area df4. In addition, in the picture, another MB line of the slice A exists before the MB line La1 of the slice A. Accordingly, no slice header copy of the slice A is inserted immediately before the MB lines La1, La2, and La3 of the first area df1, the second area df2, and the third area df3.

Furthermore, each time a macroblock is outputted, the segment boundary detection units 139a and 139b of the slice data processing unit 134 determines whether or not all the macroblocks in a current MB line have been outputted. As a result, when each of the segment boundary detection units 139a and 139b detects that all the macroblocks have been outputted, it detects a boundary between MB lines (the end of the MB line). Each of the segment boundary detection units 139a and 139b stops the macroblock output processing each time of detecting an MB line boundary, and notifies the slice header insertion unit 133 of the detection of the MB line boundary.

Accordingly, when the last macroblock of the MB line is stored into the segment stream buffer 152, and the segment stream buffer 152 is in the aforementioned state shown in FIG. 8(a), the slice header insertion unit 133 receives a notification of the detection of the MB line boundary from the segment boundary detection units 139a and 139b of the slice data processing unit 134.

As shown in FIG. 8(b), the slice header insertion unit 133 that received the notification of the detection of the MB line boundary transmits the slice header processing detail notification M1 to the slice data processing unit 134. The slice header processing detail notification M1 shows "Output" or "No output" as information for notifying the slice data processing unit 134 of whether or not a slice header is to be outputted to and stored in the segment stream buffer 152 immediately before a next MB line from the slice data processing unit 134 is stored in the segment stream buffer 152. In short, a slice header processing detail notification M1 showing "Output" is a notification urging the slice data processing unit 134 to perform slice-end processing.

For example, the slice header insertion unit 133 determines that a slice header copy hb' is outputted to and stored in the segment stream buffer 152 immediately before a next MB line Lb2 from the slice data processing unit 134 is stored into the segment stream buffer 152. At this time, the slice header insertion unit 133 outputs the slice header processing detail notification M1 showing "Output" to the slice data processing unit 134.

In the case where the slice data processing unit 134 receives a slice header processing detail notification M1 showing "Output", the slice data processing unit 134 generates slice-end information and stores the slice-end information into the segment stream buffer 152, and outputs a slice-end processing completion notification M2 to the slice header insertion unit 133. In the other case where the slice data processing unit 134 receives a slice header processing detail notification M1 showing "No output", the slice data processing unit 134 outputs a slice-end processing completion notification M2 to the slice header insertion unit 133 without storing slice-end information into the segment stream buffer 152.

For example, as shown in FIG. 8(c), in the case where the slice data processing unit 134 receives the slice header processing detail notification M1 showing "Output", the slice data processing unit 134 generates slice-end information ea', and stores the slice-end information ea' into the first area df1 of the segment stream buffer 152. Upon completion of the storage, the slice data processing unit 134 outputs the slice-end processing completion notification M2 to the slice header insertion unit 133.

In the case where the slice header insertion unit 133 receives the slice-end processing completion notification M2 from the slice data processing unit 134 and the slice header processing detail notification M1 outputted immediately before shows "Output", the slice header insertion unit 133 outputs the slice header to store it into the segment stream buffer 152 via the EPB insertion unit 132b, and subsequently outputs a slice header processing completion notification M3 to the slice data processing unit 134. In the case where the slice header processing detail notification M1 outputted immediately before shows "No output", the slice header insertion unit 133 outputs the slice header processing completion notification M3 to the slice data processing unit 134 without storing the slice header into the segment stream buffer 152.

For example, in the case where the slice header insertion unit 133 receives the slice-end processing completion notification M2 from the slice data processing unit 134 when the immediately-outputted slice header processing detail notification M1 shows "Output", the slice header insertion unit 133 generates a slice header copy hb' and stores it into the first area df1 of the segment stream buffer 152 as shown in FIG. 8(d). Subsequently, the slice header insertion unit 133 outputs the slice header processing detail notification M3 to the slice data processing unit 134.

When each of the segment boundary detection units 139a and 139b of the slice data processing unit 134 receives the slice header processing completion notification M3 from the slice header insertion unit 133, it re-starts macroblock output processing that has been stopped to output a next MB line and store the MB line into the segment stream buffer 152.

For example, as shown in FIG. 8(d), the slice data processing unit 134 outputs the next MB line Lb2 and stores it into the first area df1 of the segment stream buffer 152.

These processes performed by the slice header insertion unit 133 and the slice data processing unit 134 make it possible to write the data that is the slice-end information, a slice header, and a next MB line at the correct MB line boundary in this listed order, in each of the areas of the segment stream buffer 152.

FIG. 9 is a block diagram showing a structure of the slice header insertion unit 133.

It is to be noted that, the functions and processing operations that are performed by both the segment boundary detection units 139a and 139b are described with reference to FIG. 9, the segment boundary detection units 139a and 139b are not differentiated from each other and referred to as segment boundary detection units 139.

The slice header insertion unit 133 includes a NAL type identification unit 133a, a header insertion counter 133b, a header address update unit 133c, and a header buffer 133d.

The NAL type identification unit 133a obtains NAL units of the bit stream, and determines, for each obtained NAL unit, whether or not the NAL unit type shows a slice. Subsequently, in the case where the NAL type identification unit 133a determines that the NAL type shows a slice, it notifies the header buffer 133d and the header insertion counter 133b of the determination.

On receiving the notification from the NAL type identification unit 133a, the header buffer 133d checks whether or not the NAL unit indicated by the notification includes a slice header, and when the NAL unit includes a slice header, extracts the slice header from the NAL unit and stores it. In the case where a next NAL unit includes a new slice header, the header buffer 133d replaces the already-stored slice header with the new slice header. In short, the header buffer 133d always stores the latest slice header.

The header insertion counter 133b counts how many times the segment boundary detection unit 139 detects an MB line boundary (end) in the bit stream in order to determine timings for generating and inserting slice header copies. More specifically, the header insertion counter 133b counts values from 0 to 4 (the number of the decoding engines 120). On receiving the notification from the NAL type identification unit 133a, the header insertion counter 133b checks whether or not the NAL unit indicated by the notification includes a slice header, and when the NAL unit includes a slice header, resets the count value to 0. When an MB line boundary (the end of the MB line) is detected, the header insertion counter 133b counts up the count vale by 1. When the count value reaches 4, and another MB line boundary is detected, the header insertion counter 133b maintains the count value at 4 without any count.

In this way, the header insertion counter 133b updates or maintains the count value and resets the count value to 0 when the MB line boundary is detected and the NAL unit includes the slice header.

When an MB line boundary is detected, the header insertion counter 133b outputs a slice header processing detail notification M1 showing either "Output" or "No output" to the segment boundary detection unit 139 according to the count value (including the count value 0 that is reset by the slice header immediately after the MB line boundary) updated by the detection. More specifically, when the count value immediately after the detection of the MB line boundary is within 0 to 3, the header insertion counter 133b outputs a slice header processing detail notification M1 showing "Output", and when the count value is 4, outputs a slice header processing detail notification M1 showing "No output". Furthermore, the header insertion counter 133b outputs a slice header processing detail notification M1 showing "Output" not only when an MB line boundary is detected but also when the count value is reset to 0.

Furthermore, when the header insertion counter 133b outputs the slice header processing detail notification M1 to the segment boundary detection unit 139 and receives the slice-end processing completion notification M2 from the segment boundary detection unit 139, and in the case where the outputted slice header processing detail notification M1 shows "Output", the header insertion counter 133b causes the header buffer 133d to output the slice header stored in the header buffer 133d. Subsequently, the header insertion counter 133b outputs the slice header processing completion notification M3 to the segment boundary detection unit 139. When the slice header is outputted from the header buffer 133d, the slice header insertion unit 133 selects an area as a storage destination in the segment stream buffer 152 according to the value indicated by the MB address information included in the slice header. Subsequently, the slice header insertion unit 133 stores the slice header in the area as the selected storage destination. In contrast, when the outputted slice header processing detail notification M1 shows "No output", the header insertion counter 133b maintains the slice header in a storage status without causing the header buffer 133d to output the slice header stored in the header buffer 133d. Subsequently, as described earlier, the header insertion counter 133b outputs the slice header processing completion notification M3 to the segment boundary detection unit 139.

The header address update unit 133c updates MB address information "first_mb_in_slice" of the slice header stored in the header buffer 133d according to the count value (including the count value 0 that is reset by the slice header located immediately after the MB line boundary) immediately after the detection of the MB line boundary.

For example, the header address update unit 133c does not update MB address information when the count value n is 0, and updates MB address information to ("mbposv" + n) x ("pic_width_in_mbs_minus1" + 1) when the count value n is not 0. In the case where a current picture is composed by MBAFF, the header address update unit 133c updates the MB address information according to ("mbposv"/2 + n) x ("pic_width_in_mbs_minus1" + 1).

FIG. 10 is a diagram showing MB lines and slice headers assigned to the first area df1 to the fourth area df4 in the segment stream buffer 152.

For example, the stream segmentation unit 130 reads out the slices A, B, and C of the bit stream stored in the stream buffer 151 in this listed order.

In this case, first, the header buffer 133d of the slice header insertion unit 133 extracts the slice header ha from the beginning of the slice A, and stores the slice header ha. At this time, the header insertion counter 133b resets the count value to 0. Since the count value is 0, the header buffer 133d outputs the stored slice header ha to store the slice header ha into the first area df1 of the segment stream buffer 152.

When the slice header ha is outputted from the header buffer 133d, the slice data processing unit 134 outputs the first MB line next to the slice header ha of the slice A in the bit stream, and stores the first MB line in the first area df1 of the segment stream buffer 152. As a result, data that are the slice header ha and the first MB line belonging to the slice A are stored in the first area df1 in this listed order.

When the first MB line is outputted from the slice data processing unit 134, the aforementioned header insertion counter 133b counts up the count value to 1. Since the count value at the end of the first MB line is 1, the header buffer 133d outputs the stored slice header ha as a slice header copy ha', and stores the slice header copy ha' to the second area df2 of the segment stream buffer 152. The MB address information of the slice header copy ha' is updated by the header address update unit 133c.

When the slice header copy ha' is outputted from the header buffer 133d, the slice data processing unit 134 outputs the second MB line next to the first MB line in the bit stream, and stores the second MB line into the second area df2 of the segment stream buffer 152.

Here, the second MB line includes plural macroblocks belonging to the slice A, the slice header hb of the slice B, and plural macroblocks belonging to the slice B. First, the segment boundary detection unit 139 of the slice data processing unit 134 stores all the macroblocks belonging to the slice A included in the second MB line into the second area df2. Upon completion of the storage, the segment boundary detection unit 139 temporally stops the macroblock output processing, and waits for reception of the slice header processing detail notification M1 from the slice header insertion unit 133. At this time, the slice header insertion unit 133 resets the count value to 0 to detect the slice header hb of the slice B, and transmits the slice header processing detail notification unit M1 showing "Output" to the segment boundary detection unit 139. On receiving this slice header processing detail notification M1, the segment boundary detection unit 139 performs slice-end processing on the end of the slice A in the second area df2, and transmits the slice-end processing completion notification M2 to the slice header insertion unit 133. On receiving this slice-end processing completion notification M2, the slice header insertion unit 133 stores the slice header hb of the slice B into the second area df2, and transmits the slice header completion notification M3 to the segment boundary detection unit 139. On receiving this slice header processing completion notification M3, the segment boundary detection unit 139 re-starts the output processing that has been stopped, and stores the plural macroblocks belonging to the next slice B included in the second MB line into the second area df2.

As a result, in the second area df2, data that are the macroblocks each corresponding to a potion of the second MB line belonging to the slice A, the slice header hb, and the macroblocks each corresponding to a portion of the second MB line belonging to the slice B are stored next to the slice header copy ha' in this listed sequence.

When the second MB line is outputted from the slice data processing unit 134, the header buffer 133d of the slice header insertion unit 133 extracts the slice header hc from the beginning of the slice C next to the second MB line in the bit stream, and stores the slice header hc. At this time, the header insertion counter 133b resets the count value to 0. Since the count value at the end of the second MB line is 0, the header buffer 133d outputs the stored slice header hc, and stores the slice header hc into the third area df3 of the segment stream buffer 152.

When the slice header hc is outputted from the header buffer 133d, the slice data processing unit 134 outputs the third MB line next to the slice header hc of the slice C in the bit stream, and stores the third MB line in the third area df3 of the segment stream buffer 152. As a result, the slice header hc and the third MB line belonging to the slice C are stored in the third area df3 in this listed order.

When the third MB line is outputted from the slice data processing unit 134, the aforementioned header insertion counter 133b counts up the count value to 1. Since the count value at the end of the third MB line is 1, the header buffer 133d outputs the stored slice header hc as a slice header copy hc', and stores the slice header copy hc' to the fourth area df4 of the segment stream buffer 152. The MB address information of the slice header copy hc' is updated by the header address update unit 133c.

This processing is repeated to sequentially store data into the first area df1 to the fourth area df4 in the segment stream buffer 152. As a result, each of the first segment stream to the fourth segment stream is stored in a corresponding one of the first area df1 to the fourth area df4.

Each of FIG. 11A and FIG. 11B is a diagram showing positions at which the slice-end information is provided.

For example, as shown in FIG.11A, the picture includes a slice A and a slice B, and the starting macroblock in the slice B next to the slice A is at the left end of an MB line. In this case, the segment boundary detection unit 139 of the slice data processing unit 134 provides slice-end information ea' of the slice A at the end of the MB line that is in the slice A and located four MB lines before the starting MB line in the slice B, before the slice header hb of the slice B is outputted from the slice header insertion unit 133. Furthermore, the segment boundary detection unit 139 of the slice data processing unit 134 provides slice-end information ea' of the slice A at the end of the MB line that is in the slice A and located three MB lines before the starting MB line in the slice B, before the slice header copy hb' of the slice B is outputted from the slice header insertion unit 133.

In this way, in the case where the starting macroblock in the slice is located at the left end of an MB line, the slice-end information ea' is provided at the end of each of the four MB lines located immediately before the MB line.

For example, as shown in FIG. 11B, the picture includes a slice A and a slice B, and the starting macroblock in the slice B next to the slice A is located at a position other than the left end of an MB line. In this case, the segment boundary detection unit 139 of the slice data processing unit 134 provides slice-end information ea' of the slice A at the end of the MB line that is in the slice A and located three MB lines before the MB line including the slice header hb in the slice B, immediately before the slice header copy hb' of the slice B is outputted from the slice header insertion unit 133.

In this way, when the starting macroblock in a slice is located at a position other than the left end of an MB line, slice-end information ea' is provided at the boundary between the slices in the MB line and the end of each of the three MB lines located immediately before the MB line.

Here, a detailed description is given of operations performed by the segment boundary detection unit 139.

FIG. 12 is a flowchart indicating operations performed by the segment boundary detection unit 139.

First, the segment boundary detection unit 139 determines data (such as macroblocks) to be processed from the beginning side of the bit stream, outputs the data to store it into the segment stream buffer 152 (Step S100).

Here, the segment boundary detection unit 139 manages the addresses of macroblocks (MB address values) to be outputted. More specifically, when a current macroblock to be outputted is the starting macroblock in a slice in the bit stream, the segment boundary detection unit 139 updates the MB address value of the macroblock to be outputted to a value indicated by the MB address information included in the slice header of the slice. Subsequently, the segment boundary detection unit 139 increments the MB address value each time a macroblock succeeding the starting macroblock is outputted. Here, MB address values are integer equal to or greater than 0.

Subsequently, when outputting the macroblock in Step S100, the segment boundary detection unit 139 selects a storage-destination area in the segment stream buffer 152 according to the MB address value of the macroblock, and stores the macroblock into the storage-destination area. More specifically, in the case where the numbers 1 to 4 are assigned to the respective four areas included in the bit stream buffer 152, the segment boundary detection unit 139 selects m-th (= (MB address value/W) % N + 1) area, and stores the macroblock into the m-th area.

Here, W is shown by, for example, W = "pic_width_in_mbs_minus1", and denotes the number of macroblocks in the horizontal direction of the picture. N denotes the total number (N = 4) of the decoding engines 120, and % denotes a remainder when (MB address value/W) is divided by N.

Next, the segment boundary detection unit 139 determines whether or not the macroblock outputted in Step S100 is located at the end (boundary) of the MB line, that is, whether or not the last macroblock in the MB line has already been subjected to the macroblock output processing (Step S102). More specifically, the segment boundary detection unit 139 determines whether or not the MB address value of the macroblock outputted in Step S100 is a value obtained by (a multiple of W minus1). When the MB address value is a value obtained by (a multiple of W minus1), the last macroblock in the MB line has already been subjected to the macroblock output processing, and when the MB address value is not a value obtained by (a multiple of W minus1), the last macroblock in the MB line has not yet been subjected to the macroblock output processing.

When the segment boundary detection unit 139 determines that the last macroblock in the MB line has not yet been subjected to the macroblock output processing (No in Step S102), the segment boundary detection unit 139 determines whether or not data to be processed next remains in the bit stream, that is, whether or not to finish the output processing (Step S114). In contrast, when the segment boundary detection unit 139 determines that the last macroblock in the MB line has already been subjected to the macroblock output processing (Yes in Step S102), the segment boundary detection unit 139 notifies the slice header insertion unit 133 of the detection of the MB line boundary and stops the output processing, and then determines whether or not a slice header processing detail notification M1 is received from the slice header insertion unit 133 (Step S104).

When the segment boundary detection unit 139 determines that no slice header processing detail notification M1 has been received (No in Step S104), the segment boundary detection unit 139 waits until a slice header processing detail notification M1 is received. In contrast, when the segment boundary detection unit 139 determines that a slice header processing detail notification M1 has been received (Yes in Step S104), the segment boundary detection unit 139 determines whether or not the slice header processing detail notification M1 shows "Output" (Step S106).

Here, when the segment boundary detection unit 139 determines that the slice header processing detail notification M1 shows "Output" (Yes in Step S106), the segment boundary detection unit 139 executes the slice-end processing (Step S108). In other words, when the bit stream is decoded by CABAD, the segment boundary detection unit 139 sets "1" to "end_of_siice flag" as the slice-end information. In contrast, when the bit stream is decoded by CAVLD, the segment boundary detection unit 139 provides "rbsp_siice_trailing_bits" as the slice-end information.

After the segment boundary detection unit 139 determines that the slice header processing detail notification M1 does not show "Output" (No in Step S106) or after the slice-end processing is executed in Step S108, the segment boundary detection unit 139 transmits the end processing completion notification M2 to the slice header insertion unit 133 (Step S110). Subsequently, the segment boundary detection unit 139 determines whether or not a slice header processing completion notification M3 has been received from the slice header insertion unit 133 (Step S112). Here, when the segment boundary detection unit 139 determines that no slice header processing detail notification M3 has been received (No in Step S112), the segment boundary detection unit 139 waits until a slice header processing completion notification M3 is received. In contrast, when the segment boundary detection unit 139 determines that a slice header processing detail notification M3 has been received (Yes in Step S112), the segment boundary detection unit 139 determines whether or not data to be processed next remains in the bit stream, that is, whether or not to finish the output processing (Step S114).

Here, the segment boundary detection unit 139 finishes the output processing when it determines to do so (Yes in Step S114). When the segment boundary detection nit 139 determines that the output processing should not be finished (No in Step S114), the segment boundary detection unit 139 outputs data to be processed next to store the data into the segment stream buffer 152 (Step S100).

Next, a description is given of operations performed by the skip run modification unit 137a.

As described earlier, the skip run modification unit 137a modifies "mb_skip_run" that is MB skip run information. Such MB skip run information is a code word included in a bit stream coded according to CAVLC, and indicates the number of consecutive skipped macroblocks (this number is also referred to as "length"). In addition, in the following descriptions, the length of MB skip run information means the number of consecutive skipped macroblocks indicated by the MB skip run information.

Each of FIGS. 13A and 13B is an illustration of modification processing of MB skip run information.

The picture shown in FIG. 13A includes five consecutive skipped macroblocks at the end of the MB line L2, three consecutive macroblocks at the beginning of the MB line L3, two macroblocks at the end of the MB line L5, and four consecutive macroblocks at the beginning of the MB line L6. Accordingly, the bit stream including such picture includes coded MB skip run information having a length of 8 (obtained by adding 5 and 3) indicating the number of consecutive skipped macroblocks which cross the boundary between the MB lines L2 and L3, and includes coded MB skip run information having a length of 6 (obtained by adding 2 and 4) indicating the number of consecutive skipped macroblocks which cross the boundary between the MB lines L5 and L6.

In such case, segmenting a picture into MB lines and assigning the MB lines to separate segment streams changes the number of macroblocks to be skipped in sequence in the respective segment streams. In short, this breaks a dependency between the plural MB lines on the MB skip run information indicating the number of consecutive skipped macroblocks which cross the boundary between the plural MB lines.

The MB lines included in the first segment stream is L1 and L5, and two consecutive skipped macroblocks are at the end of the MB line L5. The MB lines included in the second segment stream is L2 and L6, and nine consecutive skipped macroblocks cross the boundary between L2 to L6. The MB lines included in the third segment stream is L3 and L7, and three consecutive skipped macroblocks are at the beginning of the MB line L3. The MB lines included in the fourth segment stream is L4 and L8, and no skipped macroblocks exists.

As described above, although the two pieces of MB skip run information originally included in the bit stream have lengths of 8 and 6, respectively, there is a need to output MB skip run information having a length of 2 for the first segment stream, MB skip run information having a length of 9 for the second segment stream, and MB skip run information having a length of 3 for the third segment stream. Stated differently, in the case where plural MB lines have dependencies mutually, there is a need to modify the MB skip run information such that MB skip run information indicating the number of consecutive skipped macroblocks which cross the boundary between new plural MB lines create a new dependency according to the context of the MB lines in each segment stream.

For this, in the case where a set of skipped macroblocks corresponding to the MB skip run information decoded by the slice data layer decoding unit 135a crosses the boundary between the plural MB lines, the skip run modification unit 137a first segments the MB skip run information at the boundary of the MB lines. Here, segmenting the MB skip run information at the boundary of the MB lines means segmenting the plural consecutive skipped macroblocks having the number and which cross the boundary between the plural MB lines, and generating plural pieces of MB skip run information indicating the numbers of skipped macroblocks for the respective MB lines.

In the case of the picture shown in FIG. 13A, the skip run modification unit 137a segments the MB skip run information corresponding to a set of eight skipped macroblocks which cross the boundary between the MB lines L2 and L3 into MB skip run information corresponding to a set of five skipped macroblocks in the MB line L2 and MB skip run information corresponding to a set of three skipped macroblocks in the MB line L3. Likewise, the skip run modification unit 137a segments the MB skip run information corresponding to a set of six skipped macroblocks which cross the boundary between the MB lines L5 and L6 into MB skip run information corresponding to a set of two skipped macroblocks in the MB line L5 and MB skip run information corresponding to a set of four skipped macroblocks in the MB line L6.

Next, the skip run modification unit 137a re-combines the plural pieces of MB skip run information corresponding to the sets of consecutive skipped macroblocks in the respective segment streams among the MB skip run information segments. Here, re-combining the plural pieces of MB skip run information means converting the plural pieces of MB skip run information into a single piece of MB skip run information indicating the total sum of the numbers indicated by the plural pieces of MB skip run information.

In the case of the picture shown in FIG. 13A, from among the sets of skipped macroblocks corresponding to the segments of MB skip run information, the set of skipped macroblocks having a length of 5 and in the MB line L2 and the set of skipped macroblocks having a length of 4 and in the MB line L6 are consecutive in the second segment stream. For this, the skip run modification unit 137a combines the two pieces of MB skip run information corresponding to the two respective sets of skipped macroblocks, and converts the combined one into MB skip run information having a length of 9.

Lastly, the skip run modification unit 137a codes the thus obtained MB skip run information, and outputs the coded MB skip run information.

As described above, the skip run modification unit 137a can output the MB skip run information having an appropriate length for each segment stream by segmenting input MB skip run information at an MB line boundary, and re-combining it as necessary.

Here, the skip run modification unit 137a re-combines the consecutive pieces of MB skip run information in each segment stream as necessary without leaving them as segments. This is because the H. 264/AVC standards do not allow presence of consecutive pieces of MB skip run information. Stated differently, the H. 264/AVC standards do not allow representing the number of consecutive skipped macroblocks using plural pieces of MB skip run information, and thus the skip run modification information 137a combines the plural pieces of MB skip run information. In this way, MB skip run information is modified by the skip run modification unit 137a in conformance to the H. 264/AVC standards so that each segment stream is generated in conformance to the H. 264/AVC standards. As a result, the decoding engine 120 at a later-stage can decode the segment stream without performing any special processing.

In addition, the picture shown in FIG. 13B includes consecutive five skipped macroblocks at the end of the MB line L2, and consecutive three macroblocks at the beginning of the MB line L6. Accordingly, the bit stream including such picture includes MB skip run information having a length of 5 coded for the MB line L2, and includes MB skip run information having a length of 3 coded for the MB line L6.

This picture does not include any MB skip run information indicating the number of consecutive skipped macroblocks which cross the boundary between plural MB lines. Therefore, the skip run modification unit 137a does not need to segment the MB skip run information at an MB line boundary. However, in the case where this picture is segmented into MB lines, and the respective MB lines are assigned to separate segment streams, the MB skip run information having a length of 5 and the MB skip run information having a length of 3 are consecutively generated in the second segment stream.

Accordingly, as in this example, even when there is no MB skip run information indicating the number of consecutive skipped macroblocks which cross the boundary between plural MB lines, the skip run modification unit 137a re-combines the plural pieces of MB skip run information each indicating the number of consecutive skipped macroblocks in a corresponding one of the segment streams. Stated differently, the skip run modification unit 137a combines the MB skip run information having a length of 5 and the MB skip run information having a length of 3 in the second segment stream to convert them into a single piece of MB skip run information having a length of 8.

The skip run modification unit 137a codes the thus obtained MB skip run information, and outputs the coded MB skip run information.

FIG. 14 is a block diagram showing a structure of the skip run modification unit 137a.

The skip run modification unit 137a includes a skip run extraction unit 160, a skip run segmentation unit 161, a skip run accumulation and holing unit 162, an addition unit 163, and a skip run coding unit 164.

The skip run extraction unit 160 detects and extracts MB skip run information from a stream to be outputted by the slice data layer decoding unit. The extracted MB skip run information is outputted to the skip run segmentation unit 161, and the other information is outputted directly to the segment boundary detection unit 139a.

The skip run segmentation unit 161 determines whether or not the input MB skip run information indicates the number of consecutive skipped macroblocks which cross the boundary between plural MB lines, based on the length of the MB skip run information and position information of macroblocks having the MB skip run information. Here, in the case where the input MB skip run information indicates the number of consecutive skipped macroblocks which cross the boundary between plural MB lines, the skip run segmentation unit 161 segments the MB skip run information at the boundary of the MB lines regarding it as a segment boundary. Among the MB skip run information segments, the MB skip run information indicating the number of skipped macroblocks that exceed an MB line boundary is outputted to the addition unit 163, and the MB skip run information indicating the number of skipped macroblocks that do not exceed an MB line boundary is outputted to the skip run accumulation and holding unit 162.

It is to be noted that, MB skip run information may indicate the number of consecutive macroblocks which cross the boundary between three or more MB lines. In this case, two or more MB line boundaries are present in the consecutive skipped macroblocks. Thus, the skip run segmentation unit 161 performs such segmentation regarding the respective MB line boundaries as segment boundarys. At this time, among the MB skip run information segments, the MB skip run information indicating the number of skipped macroblocks that exceed the last MB line boundary is outputted to the addition unit 163, and the other MB skip run information is outputted to the skip run accumulation and holding unit 162.

The skip run accumulation and holding unit 162 receives the MB skip run information segment outputted by the skip run segmentation unit 161, and holds the value for each segment stream as preceding MB skip run information. In other words, in the case where the skip run accumulation and holding unit 162 receives the MB skip run information in the first segment stream, it holds MB skip run information as the preceding MB skip run information of the first segment stream. In other words, in the case where the skip run accumulation and holding unit 162 receives the MB skip run information in the second segment stream, it holds the second segment stream as preceding MB skip run information. In other words, in the case where the skip run accumulation and holding unit 162 receives the MB skip run information in the third segment stream, it holds the third segment stream as preceding MB skip run information. In other words, in the case where the skip run accumulation and holding unit 162 receives the MB skip run information in the fourth segment stream, it holds the fourth segment stream as preceding MB skip run information.

At this time, in the case where the skip run accumulation and holding unit 162 already holds the preceding MB skip run information, the skip run accumulation and holding unit 162 receives the MB skip run information from the skip run segmentation unit 161, accumulates the received MB skip run information, and holds, as per segment stream, the value of the accumulated MB skip run information as new MB skip run information. Stated differently, the skip run accumulation and holding unit 162 adds, to the held preceding MB skip run information, the MB skip run information received from the skip run segmentation unit 161 for each segment stream.

The addition unit 163 receives MB skip run information from the skip run segmentation unit 161, and reads out the preceding MB skip run information that corresponds to the segment stream including the MB skip run information and that is held in the skip run accumulation and holding unit 162. Next, the addition unit 163 adds the value of the MB skip run information received from the skip run segmentation unit 161 and the value of the preceding MB skip run information read out from the skip run accumulation and holding unit 162. The addition unit 163 then outputs the result as the modified MB skip run information to the skip run coding unit 164. This processing re-combines the pieces of MB skip run information.

The skip run coding unit 164 re-codes the modified MB skip run information that is outputted by the addition unit 163 and outputs the coded MB skip run information to the segment boundary detection unit 139a to re-embed the modified MB skip run information into the stream.

FIG. 15 is a flowchart indicating how the skip run modification unit 137a performs a modification operation on the MB skip run information.

First, the skip run modification unit 137a determines whether or not a current stream reaches the end of a slice (Step S200). MB skip run information does not indicate the number of consecutive skipped macroblocks which cross the boundary between slices. Thus, when the stream reaches the end of the slice, there is a need to output all the preceding pieces of MB skip run information held in the skip run modification unit 137a. When it is determined that the stream reaches the end of the slice (Yes in Step S200), a transition to Step 5224 is made. This processing will be described in detail later.

On the other hand, when it is determined that the stream does not reach the end of the slice (No in Step S200), the skip run modification unit 137a checks whether or not MB skip run information "mb_skip_run" has been obtained (Step S202). Here, in the case where MB skip run information "mb_skip_run" has not yet been obtained (No in Step S202), the skip run modification unit 137a returns to the beginning of this processing and reads the stream again.

On the other hand, in the case where MB skip run information "mb_skip_run" has already been obtained (Yes in Step S202), the skip run modification unit 137a calculates the position of the macroblock including the MB skip run information in the picture, based on the address information of the macroblock (Step S204). Here, the skip run modification unit 137a identifies the position of the starting skipped macroblock from among the consecutive skipped macroblocks indicated by the obtained MB skip run information.

After the calculation of the position of the macroblock in Step S204, the skip run modification unit 137a checks whether or not the consecutive skipped macroblocks reach an MB line boundary, based on the position information of the macroblock and the length of the MB skip run information, and determines whether or not there is a need to segment the obtained MB skip run information (Step S206).

More specifically, in the case where "mb_skip_run $\geq$ PicWidthInMbs - mbposh" is satisfied when the horizontal position and vertical position of the starting skipped macroblock are represented as "mbposh" and mbposv", respectively, and the total number of macroblocks in the horizontal direction of the picture is represented as "PicWidthInMbs", the skip run modification unit 137a determines that the consecutive skipped macroblocks reach an MB line boundary.

Here is given a description of the configuration according to which a stream is segmented in units of an MB line. Even in the case of segmenting a stream in units of another segment, the skip run modification unit 137a may determine whether or not the consecutive skipped macroblocks reach a segment boundary, based on the position information of the macroblock and the length of the MB skip run information.

When it is determined that the consecutive skipped macroblocks reach an MB line boundary (Yes in Step S206), the skip run modification unit 137a advances to Step 5216 for segmenting the MB skip run information. This processing will be described in detail later.

When it is determined that the consecutive skipped macroblocks do not reach an MB line boundary (Yes in Step S206), the skip run modification unit 137a determines whether or not the MB skip run information is positioned at the beginning of the MB line (Step S208). Stated differently, the skip run modification unit 137a determines whether or not there is a need to combine the MB skip run information with the preceding MB skip run information.

When it is determined that the MB skip run information is positioned at the beginning of the MB line (Yes in Step S208), the skip run modification unit 137a adds the MB skip run information "mb_skip_run" and the preceding MB skip run information "prev_mb_skip_run" to re-combine these pieces of MB skip run information (Step S210). It is to be noted that this re-combination of pieces of MB skip run information must be performed independently on a per-segment stream basis. More specifically, the preceding MB skip run information is held, for each segment stream, in the skip run modification unit 137a, and the preceding MB skip run information added here corresponds to the MB line including the MB skip run information.

Either when it is determined in Step 5208 that MB skip run information is not located at the beginning of the MB line (No in Step S208), or after pieces of MB skip run information are re-combined in Step S210, the skip run modification unit 137a re-codes the MB skip run information (Step S212). This is performed to convert the segment streams into segment streams having a format conforming to the H. 264/AVC standards.

Next, the skip run modification unit 137a outputs the re-coded MB skip run information to the segment boundary detection unit 139a to complete this processing (Step S214).

In addition, when it is determined that consecutive skipped macroblocks reach the MB line boundary (Yes in Step S206), the skip run modification unit 137a segments the MB skip run information into a first half portion and a second half portion at the MB line boundary as a segment boundary (Step S216). It is to be noted that a second half portion may be 0 when consecutive skipped macroblocks reach the MB line boundary without exceeding the MB line boundary.

Furthermore, the skip run modification unit 137a internally holds the first half portion as preceding MB skip run information "prev_mb_skip_run", from among the MB skip run information segments. At this time, when there is preceding MB skip run information held by the skip run modification unit 137a, the skip run modification unit 137a adds the length of the held preceding MB skip run information and the length of the first half portion of the newly generated MB skip run information, and holds the addition result (Step S218). As described earlier, the preceding MB skip run information is held independently for each segment stream, as preceding MB skip run information of the segment stream corresponding to the MB line including the preceding MB skip run information.

After the skip run modification unit 137a sets the second half portion as new MB skip run information from among the MB skip run information segments (Step S220), the skip run modification unit 137a determines whether or not the length is 0 (Step S222).

When it is determined that the length of the new MB skip run information is 0 (Yes in Step S222), the skip run modification unit 137a completes the processing determining that there remains no MB skip run information to be processed.

When it is determined that the length of the new MB skip run information is not 0 (Yes in Step S222), the skip run modification unit 137a returns to Step 5204 determining that there remains MB skip run information to be processed, and repeats segmentation and re-combination processing and output processing on MB skip run information. In the case of MB skip run information of MBs which cross the boundaries of three or more MB lines, the skip run modification unit 137a repeats segmentation and re-combination processing on the MB skip run information so as to accurately perform the segmentation and re-combination processing.

On the other hand, when it is determined that a slice end is reached (Yes in Step S200), the preceding MB skip run information "prev_mb_skip_run" is replaced by MB skip run information "mb_skip_run" (Step S224) so as to output the preceding MB skip run information held by the skip run modification unit 137a. Next, a transition to Step 5212 is made. The skip run modification unit 137a re-codes the replacement MB skip run information, and outputs the re-coded MB skip run information to the segment boundary detection unit 139a to complete the processing (Steps S212 to S214). It is to be noted that such output of preceding MB skip run information is performed for all segment streams.

The skip run modification unit 137a repeats this processing described above until a stream end is reached. In this way, the skip run modification unit 137a appropriately performs segmentation and re-combination of MB skip run information.

Next, a detailed description is given of operations performed by the QP delta modification units 138a and 138b. It is to be noted that, in the descriptions given of the functions and processing operations that are performed by both the QP delta modification units 138a and 138b, the QP delta modification units 138a and 138b are not differentiated from each other and referred to as QP delta modification units 138.

The QP delta modification unit 138 modifies QP variation "mb_qp_delta" that is present basically on a per-macroblock basis. QP variation is a code word included in a bit stream in order to decode the QP values that are quantization parameters for macroblocks, and indicates the difference in the QP values of a current macroblock and the macroblock immediately before the current macroblock.

The QP values are decoded according to the following Expression (1).

$$QP_Y = ((QP_{Y,\ PREV} + mb\_qp\_delta + 52 + 2 * QpBdOffset_Y)\ \% \\ (52 + QpBdOffset_Y)) - QpBdOffset_Y\ ...\ (1)$$

Here, $QP_\gamma$ denotes a QP value of luminance of a current macroblock, and $QP_{\gamma,}$ PREV denotes a QP value of luminance of a macroblock immediately before the current macroblock. $QpBdOffset_\gamma$ denotes a value determined depending on a bit depth of a pixel that constitutes a picture. In the case of a pixel having an 8-bit depth that is used generally, $QpBdOffset_\gamma = 0$ is satisfied. In this case, the above Expression (1) is rewritten into the following Expression (2).

$$QP_Y = ((QP_{Y,\ PREV} + mb\_qp\_delta + 52)\ \% \ 52\ ...\ (2)$$

As shown from the Expression (2), in the case of a pixel having an 8-bit depth, the pixel is decoded using the QP variation "mb_qp_delta" such that the QP value falls within the range of 0 to 51. Here, "mb_qp_defta" is a value within a range from -26 to +25.

The QP values that are quantization parameters have a dependency between macroblocks consecutive in processing order. However, when there is a slice boundary in the middle of the consecutive macroblock, the dependency is broken when the QP values are decoded. Stated differently, the QP values that are quantization parameters are initialized by the QP values of slices at the beginning of the slices. The starting macroblock in a slice includes, as a QP variation, a coded differential value between a QP value of the macroblock and the QP value of the slice.

Each of FIGS. 16A and 16B is an illustration of modification processing of QP variation.

Focusing on a macroblock C in the picture shown in FIG. 16A, a macroblock B is the macroblock that is naturally processed immediately before the macroblock C. Accordingly, the macroblock C includes, as a QP variation, a difference value between the QP value of the macroblock B and the QP value of the macroblock C.

However, segmenting such picture into MB lines and assigning the respective MB lines to separate segment streams changes the contexts of the macroblocks at the MB line boundaries in the respective segment streams.

In this case, after the stream segmentation, the macroblock located immediately before the macroblock C in the second segment stream is changed to a macroblock A. Accordingly, in the case where the decoding engine 120 decodes the second segment stream without modification, it is impossible to accurately decode the QP value of the macroblock C. This is because the QP value of the macroblock C is decoded as the value that is obtained by reflecting the QP variation that is the difference value between the QP value of the macroblock B and the QP value of the macroblock C on the QP value of the macroblock A. In short, this breaks the dependency between the two MB lines on the QP variation indicating the variation between macroblocks which cross the boundary between the two MB lines.

For this, the QP delta modification unit 138 modifies the QP variation by correcting the change in the contexts of the macroblocks made in the stream segmentation. More specifically, in the case where the QP variation that is the variation between macroblocks which cross the boundary between two MB lines indicates that the two MB lines have dependencies mutually, the QP delta modification unit 138 modifies the QP variation such that the dependencies are changed to new dependencies according to the new contexts of MB lines in the respective segment streams.

A conceivable method of modifying a QP variation includes a method of decoding (reconstructing) QP values of all macroblocks first, and then re-calculating the QP variations, based on the new contexts of the macroblocks after the stream segmentation. However, this method requires two processes of QP value decoding and QP variation calculation, increasing the amount of processing by the QP delta modification unit 138.

For this, in this Embodiment, the QP delta modification unit 138 accumulates, for each of segment streams, the QP variations of macroblocks that are not assigned to a current one of the segment streams, thereby directly deriving the modified QP variation without decoding the QP variation.

Here, how to derive the modified QP variation by QP variation accumulation is described with reference to a diagram. FIG. 17 is an illustration of accumulation of QP variations.

In the diagram, the horizontal axis represents QP values, and QPI to QP4 indicate the QP values of consecutive macroblocks. The diagram also shows "mb_qp_delta" indicating the difference value of each QP value. The significant numeral in two-digit numerals that are subscripts added to the "mb_qp_delta" represents the QP value number corresponding to a preceding macroblock, and the least significant numeral in the two-digit numerals represents the QP value corresponding to the subsequent macroblock. For example, "mb_qp_deltal2" represents the difference value of QP 1 and QP 2. As shown in the diagram, "mb_qp_delta" represents the difference value in QP values on an axis on which the minimum QP value 0 and the maximum QP value 51 are connected in sequence.

In the normal QP value decoding processing, QP 2 is calculated based on QP 1 and "mb_qp_delta12" according to Expression (2). Likewise, QP 3 is calculated based on QP 2 and "mb_qp_delta23". Likewise, QP 4 is calculated based on QP 3 and "mb_qp_delta34".

Here, as shown in the diagram, the total QP variation indicated by the "mb_qp_delta12", "mb_qp_delta23", and "mb_qp_delta34" equal to the "mb_qp_delta 14" indicating the difference value between QP 1 and QP 4. As clear from this, accumulating all QP variations "mb_qp_delta" between the macroblocks makes it possible to calculate the QP variation between non-adjacent macroblocks.

The accumulation is performed according to the following Expression (3).

$$\text{acc\_mb\_qp\_delta} = (\text{acc\_mb\_qp\_delta} + \text{mb\_qp\_delta} + 52) \% 52 \ ... \ (3)$$

Here, "acc_mb_qp_delta" indicates accumulated "mb_qp_delta". In this way, accumulating "mb_qp_delta" in a format according to Expression (2) makes it possible to calculate the total of QP variations in the axis on which the minimum QP value 0 and the maximum QP value 51 are connected in sequence as shown in FIG. 17.

As a specific example, a description is given of modification processing of QP variations of macroblocks in a picture shown in FIG. 16A. As described earlier, in the second segment stream after the stream segmentation, the macroblock A is the macroblock located immediately before the macroblock C. Thus, the macroblock C must include, as the QP variation, the difference value between the QP value of the macroblock A and the QP value of the macroblock C.

For this, the QP delta modification unit 138 accumulates the QP variations of all the macroblocks in the MB lines L3 to L5 and the QP variation of the macroblock C. Accumulating the QP variation of all the macroblocks from the macroblock A to macroblock C in this way makes it possible to calculate the modified QP variation that is the difference value between the QP value of the macroblock A and the QP value of the macroblock C.

Here, the QP variation calculated here is derived according to Expression (3), and thus is a value indicating a range between 0 to 51 inclusive. The original QP variation "mb_qp_defta" is a value ranging from -26 to +25 inclusive. Thus, the QP delta modification unit 138 modifies the QP variation "mb_qp_delta" according to the following Expression (4) such that the range covers -26 to +25.

When acc_mb_qp_delta > 25: mb_qp_delta = acc_mb_qp_delta - 52

When acc_mb_qp_delta ≤ 25: mb_qp_delta = acc_mb_qp_delta ... (4)

As indicated above, the processing shown in Expression (4) may be performed only once after the accumulation of the QP variations "mb_qp_delta" of all the target macroblocks. Otherwise, the processing may be performed one by one on all the target macroblocks.

The description here is given focusing on the macroblock C. The same processing is performed on all the starting macroblocks in MB lines. For example, as for a macroblock downwardly adjacent to the macroblock C, a modified QP variation is derived by accumulating the QP variations of all the macroblocks in MB lines L4 to L6, and reflecting the accumulation result on the QP variation of the downwardly adjacent macroblock. This processing is performed independently of the processing of other segment streams.

Lastly, the QP delta modification unit 138 re-codes the modified QP variation obtained in this way, and outputs the re-coded modified QP variation to the segment boundary detection unit 139. It is to be noted that the QP delta modification unit 138a performs coding according to CAVLC method, and the QP delta modification unit 138b performs coding according to CABAC method.

As described above, the QP delta modification unit 138 is capable of setting an appropriate QP variation for each segment stream by modifying an input QP variation to match the context of macroblocks in the segment stream. As a result, the decoding engine 120 at a later-stage can decode the segment stream without performing any special processing.

FIG. 16B shows an exemplary case where a slice is segmented at the boundary between an MB line L4 and an MB line L5. In this case, MB lines L1 to L4 are included in the slice A, and MB lines L5 to L8 are included in the slice B.

At this time, in the second segment stream, the macroblock A and the macroblock C are consecutive as in FIG. 16A. However, the constituent slices of each of the macroblocks are different, and thus there is no dependency between the macroblock A and macroblock C. In the second segment stream, the macroblock C is the starting macroblock of a slice B. Thus, the QP variation of the macroblock C must indicate the difference value between the QP value of the macroblock C and the QP value of the macroblock B.

More specifically, the QP delta modification unit 138 is capable of calculating the difference value based on the slice QP value of the slice B by accumulating the QP variations of the macroblocks included in the slice B from among the macroblocks included in the macroblocks A to C. However, it is impossible to determine whether or not a slice is actually segmented until the beginning of the slice B is reached.

For this, the QP delta modification unit 138 accumulates the QP variations of all the macroblocks included in the macroblocks A to C, and resets the accumulated QP variation "acc_mb_qp_delta" to 0 at the time of starting processing of the starting macroblock of the slice B. In this way, the QP delta modification unit 138 can accumulate the QP variations of only the macroblocks in the slice B, and accurately calculate the modified QP variation of the macroblock C.

Lastly, the QP delta modification unit 138 re-codes the modified QP variation obtained in this way, and outputs the re-coded modified QP variation to the segment boundary detection unit 139.

FIG. 18 is a flowchart indicating modification processing of QP variations by the QP delta modification unit 138.

When macroblock processing is started, the QP delta modification unit 138 firstly calculates the position of a current macroblock in the picture, based on the address information of the current macroblock (Step S300).

Next, the QP delta modification unit 138 determines whether or not the current macroblock is the starting macroblock of a slice (Step 5302).

When it is determined that the current macroblock is the starting macroblock of the slice (Yes in Step S302), the QP delta modification unit 138 resets, to 0, the accumulated QP variation "acc_mb_qp_delta" corresponding to all the segment streams (Step S304). In the case where a slice is segmented in the middle, this processing makes it possible to accurately derive the QP variation, based on the slice QP value. Here, whether to reset an accumulated QP variation is determined depending on whether a current macroblock is the starting macroblock of a slice. However, it is only necessary to reset an accumulated QP variation at the beginning of a slice, and thus it is also good to reset an accumulated QP variation when a slice header appears.

When it is determined that a current macroblock is not the starting macroblock of a slice in Step 5302 (No in Step S302), or after reset of an accumulated QP variation in Step S304, the QP delta modification unit 138 determines an output destination of segment streams of the current macroblock, based on the position information of the current macroblock calculated in Step 5300 (Step S306).

When it is determined that the output destination of the current macroblock is a first segment stream in Step S306, the QP delta modification unit 138 accumulates the QP variation of the current macroblock on the accumulated QP variations of the second, third, and fourth segment streams, according to Expression (3) (Step S308).

When it is determined that the output destination of the current macroblock is a second segment stream in Step S306, the QP delta modification unit 138 accumulates the QP variation of the current macroblock on the accumulated QP variations of the first, third, and fourth segment streams, according to Expression (3) (Step S310).

When it is determined that the output destination of the current macroblock is a third segment stream in Step S306, the QP delta modification unit 138 accumulates the QP variation of the current macroblock on the accumulated QP variations of the first, second, and fourth segment streams, according to Expression (3)

(Step S312).

When it is determined that the output destination of the current macroblock is a fourth segment stream in Step S306, the QP delta modification unit 138 accumulates the QP variation of the current macroblock on the accumulated QP variations of the first, second, and third segment streams, according to Expression (3)

(Step S314).

In this way, the QP variations of the segment streams other than the segment stream that is the output destination of the current macroblock are accumulated in Steps 5308 to 5314. This means that the QP variations of the macroblocks included in the three MB lines that are not assigned to the current segment stream are accumulated. With this processing, the QP delta modification unit 138 can accurately correct the difference value between the QP values of the macroblocks located before and after each of the three MB lines that are not assigned to the current segment stream.

After the QP variation accumulation in Steps S308, S310, S312, and S314, the QP delta modification unit 138 determines whether or not a current macroblock is positioned at the beginning of an MB line, based on the position information of the macroblock calculated in Step 5300 (Step S316). Here, a stream is segmented in units of an MB line. Likewise, even in the case of segmenting a stream in units of another segment, the QP delta modification unit 138 may determine whether or not a current macroblock is the starting macroblock in the segmentation unit, based on the position information of the macroblock.

When it is determined that a current macroblock is positioned at the beginning of an MB line (Yes in Step S316), the QP delta modification unit 138 accumulates the QP variation of the current macroblock on the accumulated QP variations corresponding to the segment streams in the current macroblock, according to Expression (3). Next, the QP delta modification unit 138 modifies the obtained accumulated QP variation into a range between -26 and +25 inclusive according to Expression (4), and replaces the obtained accumulated QP variation with the modified accumulated QP variation of the current macroblock. Furthermore, the QP delta modification unit 138 resets, to 0, the accumulated QP variation in relation to the segment stream including the current macroblock (Step S318). In this way, in Step S318, the accumulated QP variation is modified by reflection on the QP variation of the starting macroblock in the MB line.

When it is determined that a current macroblock is not positioned at the beginning of an MB line (No in Step S316), or after modification of the QP variation of the current macroblock in Step S318, the QP delta modification unit 138 re-codes the QP variation of the current macroblock (Step S320). This is performed to convert the segment streams into segment streams having a format conforming to the H. 264/AVC standards.

Next, the QP delta modification unit 138 outputs the re-coded QP variation to the segment boundary detection unit 139 to complete the processing (Step S322).

As described above, the QP delta modification unit 138 re-codes and outputs QP variations of macroblocks other than the starting macroblock in each MB line without modifying the QP variations, and re-codes and outputs a QP variation of the starting macroblock in each MB line after modifying the QP variation of the starting macroblock.

In this way, in the image decoding apparatus 100 in this Embodiment, each of the coded pictures is segmented into plural MB lines (structural units), and each of the plural MB lines is assigned as a portion of a segment stream to a corresponding one of the N decoding engines 120. This allows the N decoding engines 120 to equally share decoding processing loads, and appropriately execute parallel decoding processing. For example, even in the case of a coded picture conforming to H. 264/AVC which is composed of a slice, the coded picture is segmented into plural MB lines, and thus the load to decode the slice is equally shared by the N decoding engines 120 without being placed on one of the decoding engines 120.

Here, when a coded picture is segmented into plural MB lines, a slice which cross the boundary between plural MB lines may be segmented into plural slice portions (for example, each of the MB lines L1 to L6 or a set of top six macroblocks in the MB line L7 shown in FIG. 3), and the respective slice portions may be assigned to mutually different segment streams. In other words, the segment stream includes slice portion groups each of which is composed of at least one slice portion that is a chip of a slice (examples of the groups includes MB lines L2 and L6 included in the second segment stream shown in FIG. 3), instead of including the whole slice in the coded picture. In addition, the slice portion group (such as MB lines L2 and L6) may not include a slice header indicating the beginning of the group and slice-end information indicating the end.

Furthermore, plural MB lines may have a dependency indicated by a predetermined code word included in the bit stream. For example, in H. 264/AVC, plural MB lines may have a dependency indicated by MB skip run information "mb_skip_run" and QP variation "mb_qp_delta". In the case where such bit stream is segmented into plural MB lines and the segments are assigned to mutually different segment streams, the dependency between the MB lines cannot be maintained accurately.

For this, in this Embodiment, the stream segmentation unit 130 reconstructs the slice portion group as a new slice. As a result, the decoding engine 120 that decodes the segment stream including the slice portion group can easily recognize the slice portion group as a new slice and decode it appropriately without performing any special processing for appropriately recognizing and decoding the slice portion group. In short, this Embodiment eliminates the need to provide each of the N decoding engines 120 with a function or a structure for such special processing, thereby simplifying the structure of the whole image decoding apparatus 100.

Furthermore, the image decoding apparatus in this Embodiment is capable of accelerating decoding processing compared to the image decoding apparatus in Patent Literature 3. More specifically, the image decoding apparatus in Patent Literature 3 does not perform, in parallel, variable length decoding and deblocking filtering on a bit stream. In other words, the image decoding apparatus in Patent Literature 3 does not appropriately segment the bit stream. More specifically, data to be generated by segmenting the bit stream is not constructed as a stream that can be decoded by a conventional decoding engine. In contrast, the image decoding apparatus 100 in this Embodiment appropriately segments a bit stream into plural segment streams, thereby allowing the respective decoding engines 120 to execute, in parallel, variable length decoding and deblocking filtering in the same manner as the decoding engine 421 shown in FIG. 33. As a result, the image decoding apparatus in this Embodiment can accelerate decoding processing.

Furthermore, this Embodiment provides an advantage of being able to use conventional decoding engines, compared to the image decoding apparatus in Patent Literature 4. More specifically, the image decoding apparatus in Patent Literature 4 inserts a line header to each of the boundaries between MB lines in a bit stream without segmenting the bit stream. Accordingly, each of the plural decoding engines of the image decoding apparatus in Patent Literature 4 must extract the MB line to be processed by the decoding engine itself from the bit stream, based on the line header. At this time, the decoding engine needs to discontinuously access the bit stream to extract the MB line to be processed when the storage location of the MB line to be processed has already been determined, and when the storage position has not yet been determined, needs to access the beginning of the bit stream and skip MB lines that are not the targets to be processed. In contrast, the image decoding apparatus 100 in this Embodiment appropriately segments a bit stream into segment streams, thereby allowing each of the decoding engines 120 to decode the bit stream as if it were a normal bit stream in the same manner as the decoding engine 421 shown in FIG. 33. In this way, the image decoding apparatus 100 in this Embodiment can use conventional decoding engines, thereby being able to provide an advantageous effect that cannot be achieved by the image decoding apparatus in Patent Literature 4.

Furthermore, the image decoding apparatus 100 in this Embodiment executes one of high-resolution decoding, a high-speed decoding, and multi-channel decoding, according to the aforementioned mode information to be inputted to the stream segmentation unit 130.

FIG. 19A is an illustration of high-resolution decoding. FIG. 19B is an illustration of high-speed decoding. FIG. 19C is an illustration of multi-channel decoding.

As shown in FIG. 19A, when the stream segmentation unit 130 of the image decoding apparatus 100 obtains the mode information directing execution of high-resolution decoding, it segments a 4k2k bit stream into four segment streams as described above, and causes each of the decoding engines 120 to decode a corresponding one of the four segment streams.

For example, each of the four decoding engines 120 has a processing performance sufficient to decode two channels of HD images (1920 x 1088 pixels, 60i), and thus the image decoding apparatus 100 can process the 4k2k image (3840 x 2160 pixels, 60p) in real time.

As shown in FIG. 19B, when the stream segmentation unit 130 of the image decoding apparatus 100 obtains the mode information directing execution of high-speed decoding, it segments an HD bit stream into four segment streams as described above, and causes each of the decoding engines 120 to decode a corresponding one of the four segment streams.

For example, each of the four decoding engines 120 has a processing performance sufficient to decode two channels of HD images (1920 x 1088 pixels, 60i), and thus the image decoding apparatus 100 can process the HD image at a speed 8 (4 x 2) times faster.

In addition, as shown in FIG. 19C, when the stream segmentation unit 130 of the image decoding apparatus 100 obtains mode information directing execution of multi-channel decoding, it causes each of the decoding engines 120 to decode the corresponding one of the bit streams without segmenting each of the plural HD bit streams. In the case of multi-channel decoding, the stream segmentation unit 130 does not copy and insert various NAL units such as SPSs, PPSs, and slices, and only allocates each of the bit streams (channels) to a corresponding one of the areas in the segment stream buffer 152.

For example, each of the four decoding engines 120 has a processing performance sufficient to decode two channels of HD images (1920 x 1088 pixels, 60i), and thus the image decoding apparatus 100 can simultaneously decode eight channels at maximum, that is, eight HD bit streams. Furthermore, in the case of decoding channels (bit streams) equal to or less than the maximum number of channels, the image decoding apparatus 100 can lower the clock frequency of each decoding engine 120, thereby being able to reduce its power consumption. For example, in the case of decoding four channels, the image decoding apparatus 100 causes the first and second decoding engines to decode the two channels, respectively, and causes the remaining third and fourth decoding engines 120 to stop decoding. Otherwise, the image decoding apparatus 100 causes the first decoding engine 120 to the fourth decoding engine 120 to operate at a clock frequency reduced to 1/2.

In this way, the image decoding apparatus 100 in this Embodiment switches decoding processing between high-resolution decoding, high-speed decoding, and multi-channel decoding, according to mode information, thereby being able to increase user friendliness. The high-resolution decoding and high-speed decoding performed in the image decoding apparatus 100 are the same in terms of involving segmenting a bit stream into four segment streams, and decoding these in parallel. In short, the high-resolution decoding and high-speed decoding are different only in the resolutions and frame rates (4k2k or HD) of the bit streams to be decoded. Accordingly, the image decoding apparatus 100 switches decoding processing between (i) high-resolution decoding and high-speed decoding or (ii) multi-channel decoding according to mode information, and further switches decoding processing between high-resolution decoding and high-speed decoding according to the resolutions and frame rates of the bit streams.

(Embodiment 2)

Next, Embodiment 2 according to the present invention is described in details.

The image decoding apparatus 100 in Embodiment 1 modifies the dependencies between consecutive MB lines in a bit stream before stream segmentation by modifying MB skip run information and QP variations such that the dependencies are modified into dependencies according to the context of the MB lines in each segment stream.

Here, there is a case where a bit stream includes a macroblock whose QP variation is not included. The macroblock whose QP variation is not included corresponds to a non-quantized macroblock. More specifically, an exemplary macroblock whose QP variation is not included in the H. 264/AVC standards is: (1) a skipped macroblock, (2) a non-compressed macroblock (I_PCM), or (3) a macroblock for which an intra-prediction mode other than "Intra 16 x 16" is selected, and whose "coded_block_pattern" is 0 (that is, no non-zero coefficient is included).

In the case where such macroblock whose QP variation is not included is present at the beginning of an MB line, the image decoding apparatus 100 in Embodiment 1 cannot modify the QP variation due to absence of the QP variation to be modified.

For this, the image decoding apparatus 200 in Embodiment 2 is characterized by inserting a QP variation into the segment stream including a current macroblock whose QP variation is not included when generating plural segment streams from a bit stream including the current macroblock at the beginning of an MB line. With this, the image decoding apparatus 200 can appropriately set the QP variation based on the new context in each segment stream.

Here, when such QP variation is inserted in a segment stream, it is impossible to use MB skip run information to show the number of consecutive skipped macroblocks which cross the boundary between MB lines because the QP variation is present between the MB lines. For this, the image decoding apparatus 200 in Embodiment 2 is further characterized by not re-combining MB skip run information.

The image decoding apparatus 200 in this Embodiment is described below with reference to the drawings.

FIG. 20 is a block diagram showing a structure of an image decoding apparatus according to Embodiment 2 of the present invention. In FIG. 20, the same structural elements as in FIG. 1 are assigned with the same reference signs, and the descriptions therefor are not repeated here.

As shown in FIG. 20, the image decoding apparatus 200 includes a decoder 210, and a memory 150.

As with the decoder 110, the decoder 210 generates decoded image data by reading out the bit stream stored in the stream buffer 151 in the memory 150 and decodes the bit stream, and stores the decoded image data into the frame memory 153 in the memory 150. In addition, this decoder 210 includes a stream segmentation unit 230, and N decoding engines (first decoding engine to N-th decoding engine) 220.

The stream segmentation unit 230 executes the same processing as performed by the stream segmentation unit 130 except for the modification processing of MB skip run information and the modification processing of QP variations. The stream segmentation unit 230 will be described in detail later with reference to FIG. 21.

The N decoding engines 220 correspond to the N-th decoding units which decode the respective N number of segment streams in parallel. Each of the N decoding engines 220 executes the same processing as performed by each of the N decoding engines 120 except for calculating a QP value using an accumulated QP variation inserted into the segment stream by the stream segmentation unit 230.

Next, a detailed description is given of a structure and operations of the stream segmentation unit 230.

FIG. 21 is a block diagram showing the structure of the stream segmentation unit 230.

The stream segmentation unit 230 is different from the stream segmentation unit 130 shown in FIG. 7 in the point of including a skip run modification unit 237a and QP delta insertion units 238a and 238b instead of the skip run modification unit 137a and QP delta modification units 138a and 138b.

In the case where MB skip run information indicates the number of consecutive macroblocks which cross the boundary between at least two MB lines to be assigned to mutually different segment streams, the skip run modification unit 237a segments MB skip run information such that the MB skip run information indicates the numbers of blocks for each of the Mb lines, as with the skip run modification unit 137a.

However, as not with the skip run modification unit 137a, the skip run modification unit 237a does not combine the plural pieces of MB skip run information into a single piece of MB skip run information in each segment stream.

In the case where a QP variation indicates the variation between macroblocks which cross the boundary between two MB lines, the QP delta insertion units 238a and 238b calculates the QP variation based on the new context of the macroblocks in each of the segment streams, as with the QP delta modification units 138a and 138b.

Here, the QP delta insertion units 238a and 238b outputs the calculated QP variation as a new QP variation to the segment boundary detection unit 139. With this, new QP variation is inserted into (set in) each segment stream. Stated differently, the QP delta insertion units 238a and 238b do not modify the QP variation included in each macroblock.

Furthermore, the segment boundary detection unit 139a provides each of the segment streams with MB skip run information obtained from the skip run modification unit 237a and the accumulated QP variation obtained from the QP delta insertion unit 238a.

The segment boundary detection unit 139b provides each of the segment streams with the accumulated QP variation obtained from the QP delta insertion unit 238b.

Next, operations by the skip run modification unit 237a and the QP delta insertion units 238a and 238b are described in detail with a focus on differences from the operations by the skip run modification unit 137a and the QP delta modification units 138a and 138b.

It is to be noted that, in the descriptions given of the functions and processing operations that are performed by both the QP delta insertion units 238a and 238b, the QP delta insertion units 238a and 238b are not differentiated from each other and referred to as QP delta insertion units 238.

FIG. 22 is an illustration of modification processing on MB skip run information and insertion processing on QP variations.

The picture shown in FIG. 22 includes five skipped macroblocks at the end of an MB line L2, three macroblocks at the beginning of an MB line L3, two macroblocks at the end of an MB line L5, and four macroblocks at the beginning of an MB line L6.

As described earlier, a skipped macroblock does not include any QP variation. Accordingly, the macroblock C includes, as a QP variation, a difference value between the QP value of the macroblock B and the QP value of the macroblock C.

However, segmenting such picture into MB lines and assigning the respective MB lines to separate segment streams changes the contexts of the macroblocks at the MB line boundaries in the respective segment streams.

In this case, after the stream segmentation, the macroblock located immediately before the macroblock C in the second segment stream is changed to a macroblock A including the QP variation. Accordingly, in the case where the decoding engine 220 decodes the second segment stream without modification, it is impossible to accurately decode the QP value of the macroblock C. This is because the QP value of the macroblock C is decoded as the value that is obtained by reflecting the QP variation that is the difference value between the QP value of the macroblock B and the QP value of the macroblock C on the QP value of the macroblock A.

For this, the QP delta insertion unit 238 corrects the change in the contexts between the macroblocks which is made by stream segmentation, and outputs the new QP variations to be inserted into the MB lines to the segment boundary detection unit 139. Here is a case where a QP value shows the difference value in the QP values of blocks which cross the boundary between two MB lines, and thereby showing presence of a dependency between the two MB lines. In this case, the QP delta insertion unit 238 breaks the dependency, and outputs the new QP variation to be inserted to the beginning of the MB line to the segment boundary detection unit 139.

In this Embodiment, QP variations are inserted to the beginning of MB lines. However, such QP variations are not always inserted to the beginning of MB lines. For example, it is also good to insert QP variations to other places within starting macroblocks or the like in MB lines.

As in Embodiment 1, examples of conceivable methods of calculating QP variations to be inserted to the beginning of MB lines include: a method of calculating QP variations by reconstructing the QP values of all the macroblocks; and a method of calculating QP variations by accumulating the QP variations of the macroblocks other than a current segment stream. This Embodiment describes the latter calculation method.

The QP delta insertion unit 238 calculates accumulated QP variations obtained by accumulating the QP variations of all the macroblocks including the QP variations included in the MB lines L3 to L5. Furthermore, the QP delta insertion unit 238 re-codes the calculated accumulated QP variations, and outputs the re-coded accumulated QP variations as new QP variations to the segment boundary detection unit 139. As a result, as shown in FIG. 22, the accumulated QP variation is inserted to the beginning of the MB line L6. In other words, the accumulated QP variation and the originally included QP variation are set in the second segment stream. It is to be noted that the detailed description of the calculation method of accumulated QP variations is the same as in Embodiment 1, and thus is not repeated here.

The description given here focuses on the MB line L6. The QP delta insertion unit 238 outputs, to the segment boundary detection unit 139, coded accumulated QP variations to be inserted to the beginning of the other MB lines. For example, the QP delta insertion unit 238 calculates accumulated QP variations obtained by accumulating the QP variations of all the macroblocks including the QP variations included in the MB lines L4 to L6, as an accumulated QP variation to be inserted to the beginning of the MB line L7. Next, the QP delta insertion unit 238 codes the calculated accumulated QP variation, and outputs the coded accumulated QP variation to the segment boundary detection unit 139. This processing is performed independently of the processing of other segment streams.

In this way, in this Embodiment, accumulated QP variations are inserted to the beginning of MB lines, and thus there are no consecutive skipped macroblocks which cross the boundary between the MB lines. Stated differently, the skip run modification unit 237a does not combine plural pieces of MB skip run information, as not with the skip run modification unit 137a in Embodiment 1.

For example, in the case of a picture shown in FIG. 22, the skip run modification unit 237a segments MB skip run information corresponding to eight skipped macroblocks which cross the boundary between the MB lines L2 and L3 into MB skip run information corresponding to five skipped macroblocks included in the MB line L2 and MB skip run information corresponding to three skipped macroblocks included in the MB line L3, as with the skip run modification unit 137a. Likewise, the skip run modification unit 237a segments MB skip run information corresponding to six skipped macroblocks which cross the boundary between the MB lines L5 and L6 into MB skip run information corresponding to two skipped macroblocks included in the MB line L5 and MB skip run information corresponding to four skipped macroblocks included in the MB line L6.

Here, as described earlier, an accumulated QP variation as a new QP variation is inserted between the consecutive five skipped macroblocks in the MB line L2 and the consecutive four skipped macroblocks in the MB line L6. For this, the skip run modification unit 237a does not combine the MB skip run information corresponding to the consecutive five skipped macroblocks in the MB line L2 and the MB skip run information corresponding to the consecutive four skipped macroblocks in the MB line L6.

It is to be noted that the skip run modification unit 237a re-codes the thus obtained MB skip run information, and outputs the re-coded MB skip run information, as with the skip run modification unit 137a.

FIG. 23 is a block diagram showing a structure of the skip run modification unit 237a. In FIG. 23, the same structural elements as in FIG. 14 are assigned with the same reference signs, and descriptions therefor are not repeated here.

The skip run modification unit 237a includes a skip run extraction unit 160, a skip run segmentation unit 161, and a skip run coding unit 164. In other words, the skip run modification unit 237a is the same in structure as the skip run modification unit 137a in Embodiment 1 except for not including the skip run accumulation and holding unit 162 and the addition unit 163. The skip run segmentation unit 161 outputs the segmented MB skip run information to the skip run coding unit 164.

FIG. 24 is a flowchart indicating how the skip run modification unit 237a performs a modification operation on the MB skip run information. In FIG. 24, the same structural elements as in FIG. 15 are assigned with the same reference signs, and descriptions therefor are not repeated here.

First, the skip run modification unit 237a checks whether or not MB skip run information "mb_skip_run" has been obtained (Step S202). Stated differently, the skip run modification unit 237a does not determine whether or not a currently-being processed stream reaches the end of a slice. This is because the skip run modification unit 237a does not hold preceding MB skip run information, and does not need to output preceding MB skip run information when the currently-being processed stream reaches the end of a slice. This is described in detail later.

Here, in the case where MB skip run information "mb_skip_run" has not yet been obtained (No in Step S202), the skip run modification unit 237a returns to the beginning of this processing and reads the stream again.

On the other hand, in the case where MB skip run information "mb_skip_run" has already been obtained (Yes in Step S202), the skip run modification unit 237a calculates the position of the macroblock including the MB skip run information in the picture, based on the address information of the macroblock (Step S204).

Next, as in Embodiment 1, the skip run modification unit 237a determines whether or not the obtained MB skip run information must be segmented (Step S206).

When it is determined that consecutive skipped macroblocks reach an MB line boundary (Yes in Step S206), the skip run modification unit 237a advances to Step S216 for segmenting the MB skip run information. This processing will be described in detail later.

On the other hand, when it is determined that consecutive skipped macroblocks does not reach an MB line boundary (No in Step S206), the skip run modification unit 237a re-codes the MB skip run information (Step S212). Here, Steps 5208 and S210 shown in FIG. 15 are not executed. This is because the skip run modification unit 237a in this Embodiment does not combine plural pieces of MB skip run information.

Next, the skip run modification unit 237a outputs the re-coded MB skip run information to the segment boundary detection unit 139a to complete this processing (Step S214).

In addition, when it is determined that consecutive skipped macroblocks reach the MB line boundary (Yes in Step S206), the skip run modification unit 237a segments the MB skip run information into a first half portion and a second half portion at the MB line boundary as a segment boundary (Step S216), as in Embodiment 1.

Furthermore, the skip run modification unit 237a re-codes the first half portion as the MB skip run information among the MB skip run information segments (Step S250). Next, the skip run modification unit 237a outputs the re-coded MB skip run information to the segment boundary detection unit 139a (Step S252). This Embodiment does not require re-combination of pieces of MB skip run information, and thus does not hold preceding MB skip run information, as not with Embodiment 1.

After the skip run modification unit 237a sets the second half portion as new MB skip run information from among the MB skip run information segments (Step S220), the skip run modification unit 237a determines whether or not the length is 0 (Step S222).

When it is determined that the length of the new MB skip run information is 0 (Yes in Step S222), the skip run modification unit 237a completes the processing determining that there remains no MB skip run information to be processed.

When it is determined that the length of the new MB skip run information is not 0 (Yes in Step S222), the skip run modification unit 137a returns to Step 5204 determining that there remains MB skip run information to be processed, and repeats segmentation and output of MB skip run information.

The skip run modification unit 237a repeats this processing described above until a stream end is reached. In this way, the skip run modification unit 237a appropriately performs segmentation of MB skip run information.

FIG. 25 is a flowchart indicating how the QP delta insertion unit 238 performs insertion processing on the accumulated QP variations. In FIG. 25, the same structural elements as in FIG. 18 are assigned with the same reference signs, and descriptions therefor are not repeated here.

When macroblock processing is started, the QP delta insertion unit 238 executes the processing of Steps S300 to S316 as in Embodiment 1.

When it is determined that a current macroblock is located at the beginning of an MB line (Yes in Step S316), the QP delta insertion unit 238 codes an accumulated QP variation corresponding to the segment stream to which the current macroblock is assigned, and outputs the coded accumulated QP variation to the segment boundary detection unit 139 (Step S352). Stated differently, the QP delta insertion unit 238 outputs the accumulated QP variation before outputting the MB information.

Next, the QP delta insertion unit 238 resets, to 0, the accumulated QP variation in relation to the segment stream including the current macroblock (Step S354). Next, the QP delta insertion unit 238 outputs the MB information to the segment boundary detection unit 139 to complete the processing (Step S356). In the case where the MB information includes the QP variation, the QP delta insertion unit 238 outputs the QP variation without modification.

On the other hand, when it is determined that a current macroblock is not located at the beginning of an MB line (No in Step S316), the QP delta insertion unit 238 outputs the MB information to the segment boundary detection unit 139 to complete the processing (Step S350). In the case where the MB information includes the QP variation, the QP delta insertion unit 238 outputs the MB information without modifying the QP variation.

As described above, the QP delta insertion unit 238 outputs, to the segment boundary detection unit 139, the new QP variation accumulated to be inserted to the beginning of the MB line and the QP variations included in the bit stream.

In this way, the image decoding apparatus 200 in this Embodiment is capable of equalizing the decoding processing loads on the N decoding engines 220 and thereby allowing the N decoding engines 220 to appropriately execute parallel decoding processing, as in the image decoding apparatus 100 in Embodiment 1.

In particular, even in the case where the macroblock located at the beginning of an MB line does not include any QP variation, the image decoding apparatus 200 in this Embodiment is capable of inserting new QP variations to the MB line, and thereby obtaining accurate QP values when parallel decoding processing is performed.

The image decoding apparatus 200 in this Embodiment selectively executes one of the high-resolution decoding, high-speed decoding, and multi-channel decoding shown in FIGS. 19A to 19C, according to mode information inputted to the stream segmentation unit 230, as with the image decoding device 100 in Embodiment 1.

In this way, the image decoding apparatus 200 in this Embodiment switches decoding processing between the high-resolution decoding, high-speed decoding, and multi-channel decoding, according to the mode information, thereby being able to increase user friendliness.

The following describes an application example of the image decoding apparatuses according to Embodiments 1 and 2.

FIG. 26 is a diagram showing an exemplary application of the image decoding apparatuses according to Embodiments 1 and 2.

For example, as shown in FIG. 26, the image decoding apparatus according to Embodiment 1 or 2 is provided to reproduction apparatus 101 that receives a broadcast wave and reproduces a bit stream included in the broadcast wave. The reproduction device 101 includes an antenna 101a that receives the broadcast wave of BS digital broadcasting, and the main body 101b including the aforementioned image decoding apparatus.

The image decoding apparatus embedded in the main body 101b extracts, for example, a 4k2k bit stream from the broadcast wave received by the antenna 101a. Subsequently, the image decoding apparatus segments the extracted bit stream to generate N segment streams, and decodes the N segment streams in parallel as described above.

The image decoding apparatuses and image decoding methods according to the present invention have been described above using the above Embodiments. However, the present invention is not limited to these. Those skilled in the art will readily appreciate that many variations are possible in the exemplary Embodiments without materially departing from the scope of the present invention. Accordingly, all such variations and modifications obtained by arbitrarily combining some structural elements of the Embodiments are intended to be included within the scope of this invention.

For example, the image decoding apparatuses 100 and 200 include a segment stream buffer 152 and the like in the Embodiments, but the image decoding apparatuses 100 and 200 may not include these.

FIG. 27 is a block diagram showing a minimum structure of an image decoding apparatus according to an embodiment of the present invention.

The image decoding apparatus 10 has the minimum structure for implementing the present invention, and includes an obtainment unit 11, a stream segmentation unit 12, and N decoding units 13.

The obtainment unit 11 corresponding to a stream buffer 151 or an obtainment device (or a mere obtainment port) used for receiving the bit stream from the stream buffer 151 and providing the bit stream to the image decoding apparatus 10. The stream segmentation unit 12 corresponds to stream segmentation units 130 and 230. More specifically, the stream segmentation 12 generates N segment steams by segmenting each of pictures included in the bit stream obtained by the obtainment unit 11 into plural structural units, and assigning each of the structural units to a corresponding one of N segment streams to be generated (N is an integer equal to or greater than 2). The N decoding units 13 correspond to the decoding engines 120 and 220, and decode the respective N segment streams generated by the stream segmentation unit 12 in parallel. Furthermore, when the stream segmentation unit 12 segments a slice in one of the coded pictures into slice portions and assigns the respective slice portions to plural segment streams in the generation of the N segment streams, the stream segmentation unit 12 reconstructs the slice portion groups as new slices so that each of the slice portion groups that includes at least one slice portion and is assigned to a corresponding one of the segment streams can be recognized as a slice by an associated one of the N decoding units 13.

In this way, the bit stream is segmented into structural units such as plural macroblock lines, and each of the macroblock lines is assigned as a portion of the corresponding one of the segment streams to the associated one of the N decoding units. This allows the respective N decoding units to equally share the decoding processing, and execute appropriate parallel decoding processing. For example, even in the case of a coded picture conforming to H. 264/AVC which is composed of a slice, the coded picture is segmented into plural macroblock lines, and thus the load to decode the slice is equally shared by the N decoding engines 120 without being placed on one of the decoding engines 120.

Here, when a coded picture is segmented into plural macroblock lines, a slice which cross the boundary between plural MB lines may be segmented into plural slice portions, and the respective slice portions may be assigned to mutually different segment streams. In other words, each of the segment streams includes slice portion groups each of which is composed of at least one slice portion that is a chip of a slice, instead of including the whole slice in the coded picture. The slice portion groups may not include a header indicating the beginning of the group and end information indicating the end. In addition, at least two consecutive slice portions in the bit stream among the plural slice portions may have a dependency indicated by a predetermined code word included in the bit stream.

For this, in this embodiment, the stream segmentation unit 130 reconstructs the slice portion group as a new slice. Thus, the decoding engine 13 that decodes the segment stream including the slice portion group can easily recognize the slice portion group as the new slice, and decode it appropriately without performing any special processing for appropriately recognizing and decoding the slice portion group as the new slice. In other words, this embodiment eliminates the need to provide each of the N decoding units 13 with a function or a structure for such special processing. For this reason, it is possible to use conventional decoding circuits as the decoding units for decoding the segment streams, and therefore to simplify the structure of the whole image decoding apparatus.

Accordingly, the image decoding apparatus 10 can provide the aforementioned unique advantageous effects and thus can achieve the aforementioned object, without requiring the segment stream buffer 152 and the like in these Embodiments.

In these Embodiments, each of the pictures is segmented into plural structural units regarded as an MB line as a structural unit. However, the structural unit is not limited to an MB line. For example, two or three MB lines are possible, and plural macroblocks arranged in a row in the vertical direction of a picture are also possible. For example, in the case of a picture that is composed by MBAFF, two MB lines may be regarded as a structural unit. In the case of a picture that is not composed by MBAFF, an MB line may be regarded as a structural unit.

In the Embodiments, the stream segmentation unit inserts slice header copies into segment streams, and the decoding engines read out and decode the segment streams having the slice header copies. However, the stream segmentation unit may directly output the slice header copies to the decoding engines without inserting the slice header copies into the segment streams. For example, the stream segmentation unit determines whether or not a slice header copy should be placed immediately before a current MB line in a segment stream to be read by one of the decoding engines. When the stream segmentation unit determines that a slice header copy should be placed accordingly, it outputs the slice header copy to the decoding engine immediately before the MB line is read by the decoding engine. Here, the stream segmentation unit may output only a portion of information included in the slice header copy instead of outputting the slice header copy itself to the decoding engine.

In addition, in the Embodiments, the stream segmentation unit executes one of modification of QP variations or insertion of QP variations, but the stream segmentation unit may execute the both. In this case, it is only necessary for the stream segmentation unit to determine whether or not the starting macroblock in each MB line includes a QP variation. Here, when the starting macroblock of an MB line includes a QP variation, it is only necessary for the stream segmentation unit to, for example, replace the QP variation of the macroblock (Steps 5318 to 5322 in FIG. 18). On the other hand, when the starting macroblock of an MB line does not include a QP variation, it is only necessary for the stream segmentation unit to, for example, output the accumulated QP variation of the macroblock (Steps 5352 to 5356 in FIG. 25).

Furthermore, when the stream segmentation unit executes one of the modification of QP variations and insertion of QP variations, it is desirable that the skip run modification unit determines whether or not a QP variation is inserted to the beginning of the MB line, for example, when the MB skip run information is located at the beginning of the Mb line. Here, when no QP variation is inserted to the beginning of the MB line, it is only necessary for the skip run modification unit to add the preceding MB skip run information to the MB skip run information (S210 in FIG. 15). On the other hand, when a QP variation is inserted to the beginning of the MB line, it is only necessary for the skip run modification unit to output the preceding MB skip run information and the MB skip run information as pieces of MB skip run information.

The Embodiments describe a case where a first code word is MB skip run information. However, the first code word does not always need to be MB skip run information. For example, the first code word is a code word indicating presence of consecutive macroblocks of a kind different from skipped macroblocks.

In addition, the Embodiments describe a case where a second code word is a QP variation. However, the second code word does not always need to be a QP variation. For example, the second code word is a code word indicating another variation in parameters for coding of macroblocks that is different from the QP variation.

It is to be noted that each of the functional blocks in the block diagrams (FIGS. 1, 7, 9, 14, 20, 21, and 23) is typically implemented as an LSI (Large Scale Integration) that is an integrated circuit. The respective functional blocks may be separately formed as plural single-function chips. Otherwise, some or all of these may be integrated into a single chip. For example, the parts of the decoder 110 (including the stream segmentation unit 130, and the first to N-th decoding engines 120) in FIG. 1 may be integrated into a single chip.

The name used here is LSI, but it may also be called IC (Integrated Circuit), system LSI, super LSI, or ultra LSI depending on the degree of integration.

Moreover, ways to achieve integration are not limited to the LSI, and special circuit or general purpose processor and so forth can also achieve the integration. Field Programmable Gate Array (FPGA) that can be programmed after manufacturing an LSI or a reconfigurable processor that allows re-structure of the connection or structure of circuit cells in the LSI can be used.

Furthermore, in the future, with advancement in technology of manufacturing semiconductors or other derivative techniques, a new integration technology resulting in replacement of LSI may emerge. The integration may be carried out using this technology.

Application of biotechnology is one such possibility.

[Industrial Applicability]

Simply-structured image decoding apparatuses according to the present invention provide an advantageous effect of being able to properly execute parallel decoding processing. For example, the image decoding apparatuses are applicable as reproduction devices which decode a bit stream of 4k2k.

[Reference Signs List]

| | |
|---|---|
| 10, 100, 200 | Image decoding apparatus |
| 11 | Obtainment unit |
| 12, 130, 230 | Stream segmentation unit |
| 13 | decoding unit |
| 110, 210 | Decoder |
| 120, 220 | First to N-th decoding engine (decoding engine) |
| 131 | Start code detection unit |
| 132a EPB | removal unit |
| 132b EPB | insertion unit |
| 133 | Slice header insertion unit |
| 133a | NAL type identification unit |
| 133b | Header insertion counter |
| 133c | Header address update unit |
| 133d | Header buffer |
| 134, 134a, 134b | Slice data processing unit |
| 135a, 135b | Slice data layer decoding unit |
| 136a, | 136b Macroblock layer decoding unit |
| 137a, | Skip run modification unit |
| 237a 138, 138a, 138b | QP delta modification unit |
| 139, 139a, 139b | Segment boundary detection unit |
| 150 | Memory |
| 151 | Stream buffer |
| 152 | Segment stream buffer |
| 153 | Frame memory |
| 160 | Skip run extraction unit |
| 161 | Skip run segmentation unit |

| | |
|---|---|
| 162 | Skip run accumulation and holding unit |
| 163 | Addition unit |
| 164 | Skip run coding unit |
| 238, 238a, 238b | QP delta insertion unit |

**Claims**

1.  An image decoding apparatus which decodes a bit stream including coded image data, said apparatus comprising:

    an obtainment unit configured to obtain the bit stream;
    a stream segmentation unit configured to generate N segment streams by segmenting each of coded pictures included in the bit stream obtained by said obtainment unit into structural units, and assigning, as a portion, each of the structural units to a corresponding one of the N segment streams to be generated, N being an integer equal to or greater than 2; and
    N decoding units configured to decode, in parallel, the respective N segment streams generated by said stream segmentation unit,
    wherein, when said stream segmentation unit segments a slice in one of the coded pictures into slice portions and assigns each of the slice portions to the corresponding one of the N segment streams in generating the N segment streams, said stream segmentation unit is configured to reconstruct a slice portion group as a new slice so that the slice portion group is recognized as the new slice by an associated one of said N decoding units, the slice portion group including at least one slice portion to be assigned to the corresponding one of the N segment streams, and
    when at least two consecutive slice portions among the slice portions in the bit stream have a dependency indicated by a predetermined code word included in the bit stream, said stream segmentation unit is configured to reconstruct the slice portion group as the new slice by setting a code word to at least one of the segment streams so that each of the at least two consecutive slice portions has a new dependency according to a context of slice portions including the slice portion in the corresponding one of the N segment streams.

2.  The image decoding apparatus according to Claim 1,
    wherein the coded picture is coded in units of a block including a predetermined number of pixels,
    the predetermined code word is a first code word indicating the number of consecutive blocks of a particular kind in a slice in the coded picture, and
    when the at least two consecutive slice portions have a dependency indicated by the first code word that is included in the bit stream and that indicates the number of consecutive blocks which cross a boundary between the at least two consecutive slice portions in the bit stream, said stream segmentation unit is configured to reconstruct the slice portion group as the new slice by setting, for each slice portion, a first code word modified to indicate the number of blocks in each slice portion to the at least two segment streams to which the at least two consecutive slice portions are assigned, respectively.

3.  The image decoding apparatus according to Claim 2, wherein, when plural blocks to which plural first code words are set respectively are consecutive in at least one of the segment streams, said stream segmentation unit is further configured to reconstruct the slice portion group as the new slice by converting the plural first code words respectively indicating the numbers of blocks into a code word indicating a total sum of the numbers of blocks.

4.  The image decoding apparatus according to Claim 1, wherein the coded picture is coded in units of a block including a predetermined number of pixels,
    the predetermined code word is a second code word indicating a variation in parameters for coding of blocks in a slice in the coded picture, and
    when the two slice portions have a dependency indicated by the second code word that is included in the bit stream and that indicates a variation in parameters for coding of blocks which cross a boundary between the two slice portions that are consecutive in the bit stream, said stream segmentation unit is configured to reconstruct the slice portion group as the new slice by calculating a variation in the parameters for coding based on a new context of blocks in the segment stream, and setting a code word based on the calculated variation to one of the two segment streams to which the two slice portions are assigned, respectively.

5. The image decoding apparatus according to Claim 4, wherein said stream segmentation unit is configured to set, for the segment stream, a second code word modified based on the calculated variation.

6. The image decoding apparatus according to Claim 4, wherein said stream segmentation unit is configured to set, for the segment stream, a new code word indicating the calculated variation and the second code word.

7. The image decoding apparatus according to Claim 4, wherein said stream segmentation unit is configured to restore the parameters for coding for each block, using the second code word included in the bit stream, and calculate a variation in the parameters for coding based on a new context of blocks in each segment stream, using the restored parameters for coding.

8. The image decoding apparatus according to Claim 4, wherein said stream segmentation unit is configured to accumulate variations indicated by the second code words included in the respective segment streams other than a current one of the segment streams, and calculate, using the accumulated variations, a variation in parameters for coding based on a new context of blocks in the current segment stream.

9. The image decoding apparatus according to Claim 8, wherein said stream segmentation unit is configured to reset, to 0, an accumulated variation at a slice boundary when accumulating the variation indicated by the second code word.

10. An image decoding method for decoding a bit stream including coded image data, said method comprising:

   obtaining the bit stream;
   generating N segment streams by segmenting each of coded pictures included in the obtained bit stream into structural units, and assigning, as a portion, each of the structural units to a corresponding one of the N segment streams to be generated, N being an integer equal to or greater than 2; and
   decoding, in parallel, the generated respective N segment streams,
   wherein, when a slice in one of the coded pictures is segmented into slice portions and each of the slice portions is assigned to the corresponding one of the N segment streams in generating the N segment streams, reconstructing a slice portion group as a new slice so that the slice portion group is recognized as the new slice by an associated one of the N decoding units, the slice portion group including at least one slice portion to be assigned to the corresponding one of the N segment streams, and
   when at least two consecutive slice portions among the slice portions in the bit stream have a dependency indicated by a predetermined code word included in the bit stream, reconstructing the slice portion group as the new slice by setting a code word to at least one of the segment streams so that each of the at least two consecutive slice portions has a new dependency according to a context of slice portions including the slice portion in the corresponding one of the N segment streams.

11. A program for decoding a bit stream including coded image data, said program causing a computer to execute:

   obtaining the bit stream;
   generating N segment streams by segmenting each of coded pictures included in the obtained bit stream into structural units, and assigning, as a portion, each of the structural units to a corresponding one of the N segment streams to be generated, N being an integer equal to or greater than 2; and
   decoding, in parallel, the generated respective N segment streams,
   wherein, when a slice in one of the coded pictures is segmented into slice portions and each of the slice portions is assigned to the corresponding one of the N segment streams in generating the N segment streams, reconstructing a slice portion group as a new slice so that the slice portion group is recognized as the new slice by an associated one of the N decoding units, the slice portion group including at least one slice portion to be assigned to the corresponding one of the N segment streams, and
   when at least two consecutive slice portions among the slice portions in the bit stream have a dependency indicated by a predetermined code word included in the bit stream, reconstructing the slice portion group as the new slice by setting a code word to at least one of the segment streams so that each of the at least two consecutive slice portions has a new dependency according to a context of slice portions including the slice portion in the corresponding one of the N segment streams.

12. An integrated circuit which decodes a bit stream including coded image data, said circuit comprising:

   an obtainment unit configured to obtain the bit stream;

a stream segmentation unit configured to generate N segment streams by segmenting each of coded pictures included in the bit stream obtained by said obtainment unit into structural units, and assigning, as a portion, each of the structural units to a corresponding one of the N segment streams to be generated, N being an integer equal to or greater than 2; and

N decoding units configured to decode, in parallel, the respective N segment streams generated by said stream segmentation unit,

wherein, when said stream segmentation unit segments a slice in one of the coded pictures into slice portions and assigns each of the slice portions to the corresponding one of the N segment streams in generating the N segment streams, said stream segmentation unit is configured to reconstruct a slice portion group as a new slice so that the slice portion group is recognized as the new slice by an associated one of said N decoding units, the slice portion group including at least one slice portion to be assigned to the corresponding one of the N segment streams, and

when at least two consecutive slice portions among the slice portions in the bit stream have a dependency indicated by a predetermined code word included in the bit stream, said stream segmentation unit is configured to reconstruct the slice portion group as the new slice by setting a code word to at least one of the segment streams so that each of the at least two consecutive slice portions has a new dependency according to a context of slice portions including the slice portion in the corresponding one of the N segment streams.

**Amended claims under Art. 19.1 PCT**

**1.** An image decoding apparatus which decodes a bit stream including coded image data, said apparatus comprising:

an obtainment unit configured to obtain the bit stream;

a stream segmentation unit configured to generate N segment streams by segmenting each of coded pictures included in the bit stream obtained by said obtainment unit into structural units, and assigning, as a portion, each of the structural units to a corresponding one of the N segment streams to be generated, N being an integer equal to or greater than 2; and

N decoding units configured to decode, in parallel, the respective N segment streams generated by said stream segmentation unit,

wherein, when said stream segmentation unit segments a slice in one of the coded pictures into slice portions and assigns each of the slice portions to the corresponding one of the N segment streams in generating the N segment streams, said stream segmentation unit is configured to reconstruct a slice portion group as a new slice so that the slice portion group is recognized as the new slice by an associated one of said N decoding units, the slice portion group including at least one slice portion to be assigned to the corresponding one of the N segment streams, and

when at least two consecutive slice portions among the slice portions in the bit stream have a dependency indicated by a predetermined code word included in the bit stream, said stream segmentation unit is configured to reconstruct the slice portion group as the new slice by setting a code word to at least one of the segment streams so that each of the at least two consecutive slice portions has a new dependency according to a context of slice portions including the slice portion in the corresponding one of the N segment streams.

**2.** The image decoding apparatus according to Claim 1,
wherein the coded picture is coded in units of a block including a predetermined number of pixels,
the predetermined code word is a first code word indicating the number of consecutive blocks of a particular kind in a slice in the coded picture, and
when the at least two consecutive slice portions have a dependency indicated by the first code word that is included in the bit stream and that indicates the number of consecutive blocks which cross a boundary between the at least two consecutive slice portions in the bit stream, said stream segmentation unit is configured to reconstruct the slice portion group as the new slice by setting, for each slice portion, a first code word modified to indicate the number of blocks in each slice portion to the at least two segment streams to which the at least two consecutive slice portions are assigned, respectively.

**3.** The image decoding apparatus according to Claim 2, wherein, when plural blocks to which plural first code words are set respectively are consecutive in at least one of the segment streams, said stream segmentation unit is further configured to reconstruct the slice portion group as the new slice by converting the plural first code words respectively indicating the numbers of blocks into a code word indicating a total sum of the numbers of blocks.

4. The image decoding apparatus according to Claim 1, wherein the coded picture is coded in units of a block including a predetermined number of pixels,

the predetermined code word is a second code word indicating a variation in parameters for coding of blocks in a slice in the coded picture, and

when the two slice portions have a dependency indicated by the second code word that is included in the bit stream and that indicates a variation in parameters for coding of blocks which cross a boundary between the two slice portions that are consecutive in the bit stream, said stream segmentation unit is configured to reconstruct the slice portion group as the new slice by calculating a variation in the parameters for coding based on a new context of blocks in the segment stream, and setting a code word based on the calculated variation to one of the two segment streams to which the two slice portions are assigned, respectively.

5. The image decoding apparatus according to Claim 4, wherein said stream segmentation unit is configured to set, for the segment stream, a second code word modified based on the calculated variation.

6. The image decoding apparatus according to Claim 4, wherein said stream segmentation unit is configured to set, for the segment stream, a new code word indicating the calculated variation and the second code word.

7. The image decoding apparatus according to Claim 4, wherein said stream segmentation unit is configured to restore the parameters for coding for each block, using the second code word included in the bit stream, and calculate a variation in the parameters for coding based on a new context of blocks in each segment stream, using the restored parameters for coding.

8. The image decoding apparatus according to Claim 4, wherein said stream segmentation unit is configured to accumulate variations indicated by the second code words included in the respective segment streams other than a current one of the segment streams, and calculate, using the accumulated variations, a variation in parameters for coding based on a new context of blocks in the current segment stream.

9. The image decoding apparatus according to Claim 8, wherein said stream segmentation unit is configured to reset, to 0, an accumulated variation at a slice boundary when accumulating the variation indicated by the second code word.

10. (Amended) The image decoding apparatus according to Claim 1, wherein said N decoding units includes a first decoding unit and a second decoding unit and when said first decoding unit decodes a first slice portion included in a segment stream assigned to said first decoding unit among the N segment streams and said second decoding unit decodes a second slice portion included in the segment stream assigned to said second decoding unit among the N segment streams, and when the first slice portion and the second slice portion are adjacent to each other in the coded picture:

said first decoding unit starts decoding the first slice portion before said second decoding unit starts decoding the second slice portion; and
said second decoding unit obtains from said first decoding unit, adjacent information that is generated by said first decoding unit in the decoding of the first slice portion and decodes the second slice potion using or without using the adjacent information.

11. (Amended) An image decoding method for decoding a bit stream including coded image data, said method comprising:
obtaining the bit stream;
generating N segment streams by segmenting each of coded pictures included in the obtained bit stream into structural units and assigning, as a portion, each of the structural units to a corresponding one of the N segment streams to be generated, N being an integer equal to or greater than 2; and
decoding in parallel, the generated respective N segment streams,
wherein, when a slice in one of the coded pictures is segmented into slice portions and each of the slice portions is assigned to the corresponding one of the N segment streams in generating the N segment streams, reconstructing a slice portion group as a new slice so that the slice portion group is recognized as the new slice by an associated one of the N decoding units, the slice portion group including at least one slice portion to be assigned to the corresponding one of the N segment streams and
when at least two consecutive slice portions among the slice portions in the bit stream have a dependency indicated by a predetermined code word included in the bit stream, reconstructing the slice portion group as the new slice by setting a code word to at least one of the segment streams so that each of the at least two consecutive slice portions has a new dependency according to a context of slice portions including the slice portion in the corresponding one of the N segment streams.

12. (Amended) A program for decoding a bit stream including coded image data said program causing a computer to execute:
obtaining the bit stream
generating N segment streams by segmenting each of coded pictures included in the obtained bit stream into structural units and assigning, as a portion, each of the structural units to a corresponding one of the N segment streams to be generated, N being an integer equal to or greater than 2; and
decoding, in parallel, the generated respective N segment streams,
wherein when a slice in one of the coded pictures is segmented into slice portions and each of the slice portions is assigned to the corresponding one of the N segment streams in generating the N segment streams, reconstructing a slice portion group as a new slice so that the slice portion group is recognized as the new slice by an associated one of the N decoding units, the slice portion group including at least one slice portion to be assigned to the corresponding one of the N segment streams, and
when at least two consecutive slice portions among the slice portions in the bit stream have a dependency indicated by a predetermined code word included in the bit stream, reconstructing the slice portion group as the new slice by setting a code word to at least one of the segment streams so that each of the at least two consecutive slice portions has a new dependency according to a context of slice portions including the slice portion in the corresponding one of the N segment streams.

13. (new) An integrated circuit which decodes a bit stream including coded image data, said circuit comprising:
an obtainment unit configured to obtain the bit stream;
a stream segmentation unit configured to generate N segment streams by segmenting each of coded pictures included in the bit stream obtained by said obtainment unit into structural units, and assigning, as a portion each of the structural units to a corresponding one of the N segment streams to be generated, N being an integer equal to or greater than 2; and
N decoding units configured to decode, in parallel, the respective N segment streams generated by said stream segmentation unit,
wherein, when said stream segmentation unit segments a slice in one of the coded pictures into slice portions and assigns each of the slice portions to the corresponding one of the N segment streams in generating the N segment streams said stream segmentation unit is configured to reconstruct a slice portion group as a new slice so that the slice portion groups is recognized as the new slice by an associated one of said N decoding units, the slice portion group including at least one slice portion to be assigned to the corresponding one of the N segment streams, and
when at least two consecutive slice portions among the slice portions in the bit stream have a dependency indicated by a predetermined code word included in the bit stream, said stream segmentation unit is configured to reconstruct the slice portion group as the new slice buy setting a code word to at least one of the segment streams so that each of the at least two consecutive slice portions has a new dependency according to a context of slice portions including the slice portion in the corresponding one of the N segment streams.

FIG. 1

# FIG. 2A

MB line

| | | | | | | | | | | | |
|---|---|---|---|---|---|---|---|---|---|---|---|
First decoding engine
Second decoding engine
Third decoding engine
Fourth decoding engine
First decoding engine
Second decoding engine
Third decoding engine
Fourth decoding engine
First decoding engine
Second decoding engine

▨ Decoded macroblock

▨ Currently-being-decoded macroblock

FIG. 2B

MB line
MB line
} MB line pair

First decoding engine
Second decoding engine
Third decoding engine
Fourth decoding engine
First decoding engine

Decoded macroblock

Currently-being-decoded macroblock

# FIG. 3

**(a)**

p1

Slice header ha — L1, L2, L3, L4, L5
Slice header hb — L6, L7, L8
Slice header hc — L9, L10, L11, L12

mba — Slice A — mbb — Slice B — Slice C — mbc

⇓

**(b)**

Slice header ha — L1 → First segment stream
Slice header copy ha' — L2 → Second segment stream
L3 → Third segment stream
L4 → Fourth segment stream
L5 → First segment stream
Slice header hb — L6 → Second segment stream
Slice header copy hb' — L7 → Third segment stream
L8 → Fourth segment stream
Slice header hc — L9 → First segment stream
L10 → Second segment stream
Slice header copy hc' — L11 → Third segment stream
L12 → Fourth segment stream

## FIG. 4

Slice header (first_mb_in_slice)

n = 1
n = 2
n = 3

Slice header copy (first_mb_in_slice[n] = (mbposv + n) × (pic_width_in_mbs_minus1 + 1))

## FIG. 5

(a) Bit stream

| Slice header | MB line | MB line | MB line | MB line | Slice-end information |
| hc | L9 | L10 | L11 | L12 | ec |

(b) First segment stream

| Slice header | MB line | Slice-end information |
| hc | L9 | ec' |

(c) Second segment stream

| Slice header | MB line | Slice-end information |
| hc' | L10 | ec' |

(d) Third segment stream

| Slice header | MB line | Slice-end information |
| hc' | L11 | ec' |

(e) Fourth segment stream

| Slice header | MB line | Slice-end information |
| hc' | L12 | ec' |

EP 2 357 825 A1

# FIG. 6

```
                    ( Start )
                        |
                        v
    +-----------------------------------------------+   S10
    |             Obtain bit stream                 |
    +-----------------------------------------------+
                        |
                        v
    +-----------------------------------------------+   S12
    |        Determine picture to be processed      |
    +-----------------------------------------------+
                        |
                        v
    +-----------------------------------------------+   S14
    |      Extract MB lines by segmenting picture   |
    +-----------------------------------------------+
                        |
                        v
                      / S16
      No         /   Slice       \
    <-----------< reconstruction processing >
                  \   needed?   /
                        |
                        | Yes
                        v
    +-----------------------------------------------+   S18
    | Slice reconstruction processing               |
    |   - Slice header insertion processing         |
    |   - MB address information update processing   |
    |   - Slice-end processing                      |
    |   - Skip run modification processing          |
    |   - QP delta setting processing               |
    +-----------------------------------------------+
                        |
                        v
    +-----------------------------------------------+   S20
    | Assign each MB line to one of first to N-th   |
    | segment streams                               |
    +-----------------------------------------------+
                        |
                        v
    +-----------------------------------------------+   S22
    |              Parallel decoding                |
    +-----------------------------------------------+
                        |
                        v
                      / S24
      No       /                  \
    <---------<  All MB lines assigned? >
                  \                /
                        |
                        | Yes
                        v
                      / S26
      No       /                  \
    <---------<  All pictures segmented? >
                  \                /
                        |
                        | Yes
                        v
                    ( End )
```

FIG. 7

EP 2 357 825 A1

Stream segmentation unit — 130

SPS, PPS

133

Slice header insertion unit

Slice header

134a(134)

Slice data processing unit

M1  M3

139a  M2

135a

Slice data layer decoding unit

137a

Skip run modification unit

Segment boundary detection unit

Macroblock layer decoding unit

QP delta modification unit

CAVLD    136a    138a(138)    M3

134b(134)    M1

Slice data processing unit

135b  139b  M2

Slice data layer decoding unit

136b

Macroblock layer decoding unit

QP delta modification unit

Segment boundary detection unit

CABAD    138b(138)

Stream buffer

Start code detection unit

EPB removal unit

EPB insertion unit

Segment stream buffer 152

151    131    132a    132b

FIG. 8

(a)

Slice A
Slice header
hb
Slice B

La1
La2
ea
La3
Lb1
Lb2

Slice header insertion unit — 133

Slice data processing unit — 134

152
df1
La1
df2
La2
df3
La3
df4
hb
Lb1

(b)

A
hb
B

ea
Lb2

Slice header insertion unit — 133
M1
Slice data processing unit — 134

152
La1
La2
La3
hb
Lb1

(c)

A
hb
B

ea

Slice header insertion unit — 133
M2
Slice data processing unit — 134

152
ea'
La1
La2
La3
hb
Lb1

(d)

A
hb
B

ea

Slice header insertion unit — 133
134
M3
Slice data processing unit

hb'
La1
152
ea'
Lb2
La2
La3
hb
Lb1

FIG. 9

# FIG. 10

EP 2 357 825 A1

## FIG. 11A

Slice A

Slice-end information
ea'

Slice B

Slice header hb

## FIG. 11B

Slice A

Slice-end information
ea'

Slice B

Slice-end information ea'   Slice header hb

# FIG. 12

Start

Output data to be processed to store it in segment stream buffer ⎯ S100

End of MB line reached? ⎯ S102

No

Yes

Slice header processing detail notification received? ⎯ S104

No

Yes

Slice header processing detail notification = "Output"? ⎯ S106

No

Yes

Execute slice-end processing
Assign
CABAD:"end_of_slice_flag"=1
CAVLD:"rbsp_slice_trailing_bits" ⎯ S108

Transmit end processing completion notification ⎯ S110

Slice header processing completion notification received? ⎯ S112

No

Yes

End? ⎯ S114

No

Yes

End

## FIG. 13A

Normal macroblock      Skipped macroblock

| | |
|---|---|
| L1 | → First segment stream |
| L2 | → Second segment stream |
| L3 | → Third segment stream |
| L4 | → Fourth segment stream |
| L5 | → First segment stream |
| L6 | → Second segment stream |
| L7 | → Third segment stream |
| L8 | → Fourth segment stream |

EP 2 357 825 A1

## FIG. 13B

Normal macroblock     Skipped macroblock

| | |
|---|---|
| L1 | First segment stream |
| L2 | Second segment stream |
| L3 | Third segment stream |
| L4 | Fourth segment stream |
| L5 | First segment stream |
| L6 | Second segment stream |
| L7 | Third segment stream |
| L8 | Fourth segment stream |

EP 2 357 825 A1

FIG. 14

137a

Skip run modification unit

Slice data layer decoding unit

162

Skip run
accumulation
and holding unit

160

161

163

164

Skip run
extraction
unit

Skip run
segmentation
unit

Addition
unit

Skip run
coding unit

Segment boundary detection unit

135a

139a

EP 2 357 825 A1

FIG. 15

Start

S200 Slice end? — Yes → End

S202 Obtain mb_skip_run? — No

Yes

S204 Calculate macroblock position

S206 mb_skip_run reaches MB line boundary? — Yes

No

S208 First mb_skip_run in MB line? — No

Yes

S210 Add prev_mb_skip_run to mb_skip_run

S212 Re-code mb_skip_run

S214 Output mb_skip_run

End

S216 Segment mb_skip_run into first half portion and second half portion at MB line boundary

S218 Accumulate and hold first half portion as prev_mb_skip_run for each segment stream

S220 Set second half portion as new mb_skip_run

S222 mb_skip_run = 0? — No / Yes

S224 mb_skip_run = prev_mb_skip_run

# FIG. 16A

| | |
|---|---|
| L1 → | First segment stream |
| L2 → | Second segment stream |
| L3 → | Third segment stream |
| L4 → | Fourth segment stream |
| L5 → | First segment stream |
| L6 → | Second segment stream |
| L7 → | Third segment stream |
| L8 → | Fourth segment stream |

EP 2 357 825 A1

## FIG. 16B

| | | |
|---|---|---|
| L1 | → First segment stream | |
| L2 | A → Second segment stream | Slice A |
| L3 | → Third segment stream | |
| L4 | → Fourth segment stream | |
| L5 | B → First segment stream | |
| L6 | C → Second segment stream | Slice B |
| L7 | → Third segment stream | |
| L8 | → Fourth segment stream | |

EP 2 357 825 A1

# FIG. 17

## FIG. 18

```
         ( Start MB processing )
                   │
                   ▼
        ┌──────────────────────────┐   ┌─ S300
        │ Calculate macroblock position │
        └──────────────────────────┘
                   │
                   ▼  ┌─ S302       Yes           ┌─ S304
              ◇──────────────◇───────────▶┌──────────────────────────────────┐
              ◇ Beginning of slice? ◇      │ Reset all accumulated QP variations │
              ◇──────────────◇            └──────────────────────────────────┘
                   │ No ◀────────────────────────────────────┘
                   ▼  ┌─ S306
              ◇──────────────────◇
              ◇   Stream output    ◇
              ◇   destination?     ◇
              ◇──────────────────◇
```

First segment stream          Second segment stream          Third segment stream          Fourth segment stream

| ┌─ S308 | ┌─ S310 | ┌─ S312 | ┌─ S314 |
|---|---|---|---|
| Accumulate QP variations of second, third, and fourth segment streams | Accumulate QP variations of first, third, and fourth segment streams | Accumulate QP variations of first, second, and fourth segment streams | Accumulate QP variations of first, second, and third segment streams |

```
                   ▼  ┌─ S316       Yes
              ◇──────────────────◇──────────────┐
              ◇ Beginning of MB line? ◇           ▼   ┌─ S318
              ◇──────────────────◇     ┌──────────────────────────────────────┐
                   │ No                 │ Accumulate QP variations of segment streams │
                   │                    │ Replace QP variations                  │
                   │                    │ Reset the accumulated QP variations     │
                   │                    └──────────────────────────────────────┘
                   ▼ ◀─────────────────────────────┘
        ┌──────────────────────┐   ┌─ S320
        │   Re-code QP variations   │
        └──────────────────────┘
                   │
                   ▼
        ┌──────────────────────┐   ┌─ S322
        │   Output QP variations    │
        └──────────────────────┘
                   │
                   ▼
               ( End )
```

EP 2 357 825 A1

FIG. 19A

First
decoding engine — 120

Second
decoding engine — 120

Third
decoding engine — 120

Fourth
decoding engine — 120

4k2k

FIG. 19B

First
decoding engine — 120

Second
decoding engine — 120

Third
decoding engine — 120

Fourth
decoding engine — 120

HD

FIG. 19C

HD

First
decoding engine — 120

HD

Second
decoding engine — 120

HD

Third
decoding engine — 120

HD

Fourth
decoding engine — 120

**FIG. 20**

Mode information

210

Decoder

230

Stream segmentation unit

Bit stream

220 — First decoding engine

220 — Second decoding engine

...

220 — N-th decoding engine

Display device

Stream buffer

151

Segment stream buffer 152

Frame memory

153

Memory

150

200

EP 2 357 825 A1

FIG. 21

## FIG. 22

Normal macroblock   Skipped macroblock

| | | |
|---|---|---|
| L1 | → | First segment stream |
| L2 | → | Second segment stream |
| L3 | → | Third segment stream |
| L4 | → | Fourth segment stream |
| L5 | → | First segment stream |
| L6 | → | Second segment stream |
| L7 | → | Third segment stream |
| L8 | → | Fourth segment stream |

Accumulated QP variation

EP 2 357 825 A1

## FIG. 23

237a

**Skip run modification unit**

Slice data layer decoding unit

160

Skip run extraction unit

161

Skip run segmentation unit

164

Skip run coding unit

Segment boundary detection unit

135a

139a

## FIG. 24

```
        ( Start )
            |
            v          ┌─S202    No
      <Obtain mb_skip_run?>──────┐
            |  Yes               │
            v                    │
  ┌──────────────────────────┐─S204
  │ Calculate macroblock position │
  └──────────────────────────┘
            |
            v          ┌─S206
        < mb_skip_run        Yes
          reaches MB line  >────────┐
          boundary? >               │
            |  No                   v
            |          ┌────────────────────────────┐─S216
            |          │ Segment mb_skip_run into first │
            |          │ half portion and second half   │
            |          │ portion at MB line boundary     │
            |          └────────────────────────────┘
            |                       │
            |                       v
            |          ┌────────────────────────────┐─S250
            |          │ Code first half portion as mb_skip_run │
            |          └────────────────────────────┘
            |                       │
            |                       v
            |          ┌────────────────────────────┐─S252
            |          │ Output first half portion as mb_skip_run │
            |          └────────────────────────────┘
            |                       │
            |                       v
            |          ┌────────────────────┐─S220
            |          │ Set second half portion as │
            |          │ new mb_skip_run           │
            |          └────────────────────┘
            |                       │
            v          ┌─S212       v          ┌─S222    No
  ┌──────────────────┐         < mb_skip_run = 0? >──────┐
  │ Re-code mb_skip_run │          |  Yes
  └──────────────────┘          |
            |          ┌─S214
            v
  ┌──────────────────┐
  │ Output mb_skip_run │
  └──────────────────┘
            |
            v
        ( End )
```

EP 2 357 825 A1

## FIG. 25

```
        ( Start MB processing )
                 │
                 ▼
   ┌─────────────────────────────┐   ┌─ S300
   │ Calculate macroblock position │
   └─────────────────────────────┘
                 │
                 ▼  ┌─ S302              ┌─ S304
          ◇─────────────◇  Yes  ┌──────────────────────────────┐
          ◇ Beginning of slice? ◇─────▶│ Reset all accumulated QP variations │
          ◇─────────────◇      └──────────────────────────────┘
                 │ No                            │
                 ▼◀──────────────────────────────┘
          ┌─ S306
     ◇────────────────◇
     ◇  Stream output  ◇
     ◇  destination?   ◇
     ◇────────────────◇
```

Second segment stream   Third segment stream   Fourth segment stream

First segment stream

| Accumulate QP variations of second, third, and fourth segment streams (S308) | Accumulate QP variations of first, third, and fourth segment streams (S310) | Accumulate QP variations of first, second, and fourth segment streams (S312) | Accumulate QP variations of first, second, and third segment streams (S314) |

```
     ◇───────────────────◇  Yes
     ◇ Beginning of MB line? ◇──────────┐
     ◇───────────────────◇   ┌─ S316    │
              │ No                       ▼
              │            ┌──────────────────────────────┐ ┌─ S352
              │            │ Code and output accumulated QP │
              │            │ variations of segment streams  │
              │            └──────────────────────────────┘
              │                          │
              │            ┌──────────────────────────────┐ ┌─ S354
              │            │ Reset accumulated QP variations │
              │            │ of segment streams             │
              │            └──────────────────────────────┘
              ▼  ┌─ S350                 ▼
   ┌──────────────────────┐   ┌──────────────────────┐ ┌─ S356
   │ Output MB information │   │ Output MB information │
   └──────────────────────┘   └──────────────────────┘
              │                          │
              ▼◀─────────────────────────┘
           ( End )
```

EP 2 357 825 A1

FIG. 26

EP 2 357 825 A1

## FIG. 27

FIG. 28

Macroblock

Slice

Picture

## FIG. 29

(a)

| Header | Picture | Picture | Picture | Picture |

(b)

| Header | Slice | Slice | Slice |

(c)

| Header | MB | MB | MB | MB |

EP 2 357 825 A1

FIG. 30

EP 2 357 825 A1

FIG. 31

Decoding engine 320

- Entropy decoding unit 321
- Inverse transform unit 322
- 323 (+)
- 328
- 327 Intra-picture prediction unit
- 324 Deblocking filter
- 326 Weighted prediction unit
- 325 Motion compensation unit
- 312 Frame memory

# FIG. 32

30 frames/second

1080

1920

HD

⇒

60 frames/second

2160

3840

4k2k

EP 2 357 825 A1

## FIG. 33

FIG. 34A    FIG. 34B

FIG. 35

0 → First decoding engine

1 → Second decoding engine

2 → Third decoding engine

3 → Fourth decoding engine

EP 2 357 825 A1

## INTERNATIONAL SEARCH REPORT

| International application No. |
|---|
| PCT/JP2009/005648 |

A. CLASSIFICATION OF SUBJECT MATTER
*H04N7/26*(2006.01)i

According to International Patent Classification (IPC) or to both national classification and IPC

B. FIELDS SEARCHED

Minimum documentation searched (classification system followed by classification symbols)
H04N7/26

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Zhao, J. and Segall, A., New Results using Entropy Slices for Parallel Decoding, ITU - Telecommunications Standardization SectorSTUDY GROUP 16 Question 6 Video Coding Experts Group VCEG-AI32, 2008.07.16 | 1-12 |
| A | Jung, B. and Jeon, B., Adaptive slice-level parallelism for H.264/AVC encoding using pre macroblockmode selection, Journal of Visual Communication and Image Representation, Vol.19, No.8, 2008.10.02, P.558-572 | 1-12 |
| A | Roitzsch, M., Slice-Balancing H.264 Video Encoding for Improved Scalability of Multicore Decoding, Proc. of the 7th ACM and IEEE Int. Conf. on Embedded Software, 2007, P.269-278 | 1-12 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 January, 2010 (04.01.10) | 12 January, 2010 (12.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/005648

C (Continuation).   DOCUMENTS CONSIDERED TO BE RELEVANT

| Category* | Citation of document, with indication, where appropriate, of the relevant passages | Relevant to claim No. |
|---|---|---|
| P,A | WO 2009/119888 A1  (SHARP KABUSHIKI KAISHA), 01 October 2009 (01.10.2009), page 17, line 7 to page 24, line 12; fig. 5 & US 2009/245349 A1 | 1-12 |

Form PCT/ISA/210 (continuation of second sheet) (April 2007)

**REFERENCES CITED IN THE DESCRIPTION**

**Patent documents cited in the description**

- JP 6225278 A
- JP 8130745 A
- JP 2006129284 A
- US 7305036 B